(19) Europäisches Patentamt
European Patent Office
Office européen des brevets

(11) EP 4 627 920 A1

(12) EUROPEAN PATENT APPLICATION
published in accordance with Art. 153(4) EPC

(43) Date of publication:
**08.10.2025 Bulletin 2025/41**

(21) Application number: **23896414.2**

(22) Date of filing: **31.10.2023**

(51) International Patent Classification (IPC):
***A01N 43/30*** *(2006.01)* ***A01P 7/02*** *(2006.01)*
***A01P 7/04*** *(2006.01)*

(52) Cooperative Patent Classification (CPC):
**A01N 43/30; A01P 7/02; A01P 7/04**

(86) International application number:
**PCT/CN2023/128516**

(87) International publication number:
**WO 2024/114260 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 CN 202211511834**
**29.11.2022 CN 202211543728**
**29.11.2022 CN 202211511683**
**29.11.2022 CN 202211511780**
**29.11.2022 CN 202211511782**
**29.11.2022 CN 202211511798**
**29.11.2022 CN 202211511830**
**29.11.2022 CN 202211511887**
**29.11.2022 CN 202211511893**
**29.11.2022 CN 202211511894**
**29.11.2022 CN 202211511960**
**29.11.2022 CN 202211512077**
**29.11.2022 CN 202211520751**
**29.11.2022 CN 202211520771**
**29.11.2022 CN 202211520879**
**29.11.2022 CN 202211520882**

(71) Applicants:
- **Shenyang Sinochem Agrochemicals R & D Co., Ltd.**
  **Shenyang, Liaoning 110021 (CN)**
- **Jiangsu Yangnong Chemical Co., Ltd.**
  **Yangzhou, Jiangsu 225009 (CN)**

(72) Inventors:
- **LIU, Shaowu**
  **Shenyang, Liaoning 110021 (CN)**
- **CHANG, Xiuhui**
  **Shenyang, Liaoning 110021 (CN)**
- **FAN, Xiaoxi**
  **Shenyang, Liaoning 110021 (CN)**
- **SUN, Jun**
  **Shenyang, Liaoning 110021 (CN)**
- **ZHANG, Junlong**
  **Shenyang, Liaoning 110021 (CN)**
- **HU, Jianyang**
  **Shenyang, Liaoning 110021 (CN)**
- **LIU, Yan**
  **Shenyang, Liaoning 110021 (CN)**
- **YAN, Kecheng**
  **Shenyang, Liaoning 110021 (CN)**
- **SONG, Yuquan**
  **Shenyang, Liaoning 110021 (CN)**
- **XU, Jingbo**
  **Shenyang, Liaoning 110021 (CN)**
- **WU, Hongfei**
  **Shenyang, Liaoning 110021 (CN)**

(74) Representative: **ZHAOffice SPRL**
**Rue de Bedauwe 13**
**5030 Gembloux (BE)**

# (54) BINARY INSECTICIDE COMPOSITION AND USE THEREOF

(57) The present invention discloses an insecticide synergistic composition containing a piperic acid derivative compound and use thereof. The composition consists of two active ingredients, i.e. a compound A and a compound B, where the active ingredient A is a compound I-72; the active ingredient B is selected from one or more of a nereistoxin insecticide, a macrolide insecticide, an organophosphorus insecticide, a carbamate insecticide, a tetronic acid insecticide, a nematicide, a biogenic insecticide, a pyrethroid insecticide, a plant growth regulator, an insect attractant, a repellent, an insect growth regulator insecticide, an amide insecticide, a nicotinoid insecticide, an insect feeding-blocking insecticide, a fungicide, an acaricide, or other insecticides and inorganic substances; and the compound I-72 has a structure of:

EP 4 627 920 A1

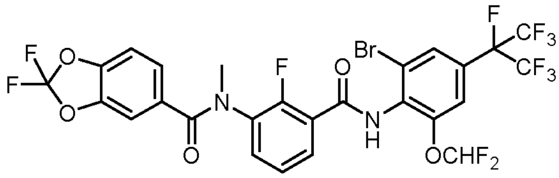

The composition of the present invention has the advantages of obvious synergy, resistance delay, etc., and can be used for controlling a variety of pests on agricultural, forestry and ornamental plants.

## Description

### TECHNICAL FIELD

The present invention belongs to the technical field of pesticide application, and specifically relates to a binary insecticide composition containing a piperic acid derivative compound and use thereof.

### BACKGROUND

At present, chemical agents remain the primary means for pest and disease control. However, the long-term use of chemical pesticides has given rise to serious issues such as pesticide residues, environmental pollution, pest resistance and pest resurgence. Therefore, reducing the use and gradually phasing out chemical insecticides with toxic side effects, developing highly effective insecticides that are non-toxic, harmless, and leave no harmful residues or are of low toxicity, and exploring new pest control methods have become urgent tasks.

Chinese Invention Patent CN112457288 discloses a piperic acid derivative and use thereof, where a compound I-72 has contact and stomach toxicity activity, as well as good conduction activity, and can be used to control various pests from orders such as *Lepidoptera, Hemiptera, Thysanoptera,* and *Coleoptera.* This compound has a novel structure, a broad pesticidal spectrum, high activity, and no cross-resistance with other insecticides, and is expected to serve as an environmentally friendly agent for the management of resistant pests.

To overcome the limitations of single-ingredient insecticide varieties in pest control, such as a narrow pesticidal spectrum, high cost, poor quick-acting effect, and the ease with which pests develop resistance when used continuously, two insecticides with different mechanisms of action are mixed in a certain proportion to form a mixed component. This helps to overcome the drawbacks of single-pesticide use, improve the efficacy, reduce the dosage, and extend the service life of the product.

The compounding of different insecticide ingredients may yield some unexpected technical effects and is also one of the effective methods for controlling resistant pests and mites. However, to date, there have been no reports on compound compositions containing Compound I-72.

### SUMMARY

The objective of the present invention is to provide a binary insecticide composition containing a piperic acid derivative compound and use thereof.

In order to achieve the above objective, the technical solutions adopted by the present invention are as follows:

a binary insecticide composition consisting of two active ingredients A and B, wherein the active ingredient A is selected from a compound I-72, and the active ingredient B is selected from one or more of a nereistoxin insecticide, a macrolide insecticide, an organophosphorus insecticide, a carbamate insecticide, a tetronic acid insecticide, a nematicide, a biogenic insecticide, a pyrethroid insecticide, a plant growth regulator, an insect attractant, a repellent, an insect growth regulator insecticide, an amide insecticide, a nicotinoid insecticide, an insect feeding-blocking insecticide, a fungicide, an acaricide, or other insecticides and inorganic substances; a ratio of parts by weight of the two active ingredients in the composition is 100:1-1:100;
the active ingredient A has a structure of:

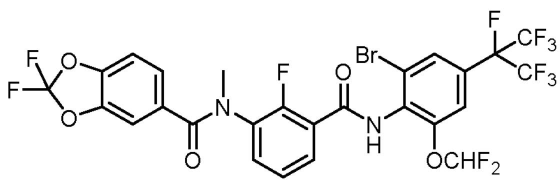

compound I-72.

The nereistoxin insecticide is selected from cartap, bisultap, monosultap, thiocyclam, bensultap, trithialan or polythialan;

the macrolide insecticide is selected from abamectin, spinetoram, spinosad, emamectin benzoate, liuyangmycin, ivermectin, emamectin, milbemectin, milbemycin, doramectin, eprinomectin, moxidectin, selamectin, alkenyl emamectin benzoate, nikkomycin or milbemycin oxime;

the organophosphorus insecticide is selected from: acephate, chlorpyrifos, chlorpyrifos-methyl, omethoate, diazinon, methamidophos, monocrotophos, parathion-methyl, parathion, terbufos, phoxim, methidathion, triazophos, azinphos-methyl, azinphos-ethyl, chlorethoxyfos, chlorfenvinphos, chlormephos, coumaphos, cyanophos, phosmet, dichlorvos, dicrotophos, dimethylvinphos, disulfoton, O-ethyl O-p-nitrophenyl phenylphosphonothioate (ENP), ethion, fenthion, heptenophos, mecarbam, mevinphos, naled, oxydemeton-methyl, phenthoate, isofenphos, pirimiphos-methyl, pirimiphos-ethyl, propaphos, propetamphos, prothiofos, pyraclofos, pyridaphenthion, quinalphos, sulfotep, temephos, tetrachlorvinphos, thiometon, trichlorfon, acethion, malathion, phosalone, vamidothion, naftalofos, isoxathion, pyrazophos, fenitrothion, sulprofos, xiaochongthion, azamethiphos, diazinon, fonofos, bromophos-ethyl, bromfenvinphos, trithion, cyanofenphos, demeton-methyl, dioxabenzofos, flupyrazofos, formothion, fosmethilan, iodofenphos, iprobenfos, methacrifos, pyridathion, prothoate, tebupirimfos; and
the carbamate insecticide is selected from: carbosulfan, o-chlorophenyl N-methylcarbamate (CPMC), dimetan, pyrolan, pyramat, isolan, methomyl, butocarboxim, carbaryl, fenothiocarb, methiocarb, mexacarbate, metolcarb, propoxur, thiofanox, triazamate, fenobucarb, pirimicarb, benfuracarb, bendiocarb, furathiocarb, butoxycarboxim, ethiofencarb, isoprocarb, trimethacarb, 3,5-xylyl methylcarbamate (XMC), xylylcarb, fenoxycarb or nitrilacarb.

The tetronic acid insecticide and acaricide is selected from: spirodiclofen, spirotetramat, spiromesifen, spiropidion, spirobudifen or spidoxamat;

The nematicide is 1,3-dichloropropene, dibromochloropropane (DBCP), ethylene dibromide (EDB), tetrachlorothiophene, 1,2-dichloropropane, chloropicrin, dichloroisopropyl ether (DCIP), bromomethane, methyliodide; carbon disulfide, sulfuryl fluoride, carbonyl sulfide (COS), methyl isothiocyanate, dimethyl disulfide, diallyl disulfide, methylene dithiocyanate, sodium tetrathiocarbonate, dazomet, metham-sodium; xylenols, calcium cyanamide, cyanogen, sodium azide, furfural, acrolein, formaldehyde, propylene oxide; phosphamidon, heterophos, profenofos, phosphocarb, fensulfothion, thionazin, isazofos, dichlofenthion, famphur, dimethoate, terbufos, phorate, cadusafos, ethoprophos, diamidafos, fenamiphos, isofenphos methyl, isofenphos, isamidofos, fosthietan, fosthiazate, imicyafos, mecarphon; alanycarb, aldicarb, aldoxycarb, oxamyl, tirpate, thiodicarb, carbofuran, cloethocarb, benomyl, tirpate; fluopyram, fluopimomide, pydiflumetofen, cyclobutrifluram; trifluenfuronate (LH517), fluensulfone, trifluenfuronate; tioxazafen, oxathiapiprolin; fluazaindolizine, acibenzolar-S-methyl, benclothiaz; iprodione, carvacrol, iprodione, an oligosaccharin, calcium cyanamide, allyl isothiocyanate, fluensulfone; and*Aspergullusniger, Paecilomyces lilacinus* (Thom.) Samson, *Verticillium chlamydosporium, Rhodovulum sulfidophilum* HNI-*1, Pasteuriapennetrans, Bacillus cereus, Bacillusfirmus, Bacillus nematocida, Pseudomonasfluorescens, Trichodermaharzianum, Trichodermaviride,* HAN055.

The biogenic insecticide and acaricide is selected from a preparation containing a microorganism, matrine, eucalyptol, mineral oil, star anise oil, allicin, bilobol, d-limonene, diatomaceous earth, rotenone, azadirachtin, an extract of *Celastrus angulatus, Cordyceps javanica,* an extract of *Veratrum nigrum rhizome, Paecilomyces, Aschersonia, Verticillium,* osthole, chamaejasmine, tea saponin, oxymatrine, a preparation containing a nuclear polyhedrosis virus, a preparation containing a cytoplasmic polyhedrosis virus, a preparation containing a granulosis virus, a grain-boosting agent or coronatine.

The microorganism in the preparation containing the microorganism is *Bacillus thuringiensis, Bacillus thuringiensis* subsp. *israelensis, Bacillus methylotrophicus* 9912, *Bacillus methylotrophicus* LW-*6, Bacillus marinus, Bacillus sphaericus, Bacillus subtilis, Bacillus popilliae, Paenibacillus polymyxa, Brevibacillus laterosporus* A60, *Empedobacter brevis, Bacillus licheniformis, Bacillus amyloliquefaciens* B1619, *Bacillus amyloliquefaciens* B7900, *Bacillus amyloliquefaciens* PQ21, *Bacillus amyloliquefaciens* LX-11, *Bacillus amyloliquefaciens* AT-332, *Rhodopseudomonas palustris* PSR-S, *Bacillus thuringiensis* G033A, *Metarhizium, Beauveria, Metarhizium anisopliae, Conidiobolus, Beauveria bassiana* or *Bacillus thuringiensis* var. *galleriae;*

the nuclear polyhedrosis virus in the preparation containing the nuclear polyhedrosis virus is *Autographa californica* nucleopolyhedrovirus, *Mamestra brassicae* nucleopolyhedrovirus, *Spodoptera exigua* Hübner nucleopolyhedrovirus, *Spodoptera litura* nucleopolyhedrovirus, *Helicoverpa armigera* nucleopolyhedrovirus, *Ectropis obliqua* nucleopolyhedrovirus or *Setora postornata* nucleopolyhedrovirus;
the cytoplasmic polyhedrosis virus in the preparation containing the cytoplasmic polyhedrosis virus is *Dendrolimus* cytoplasmic polyhedrosis virus; and
the granulosis virus in the preparation containing the granulosis virus is *Pieris brassicae* granulovirus, *Pieris rapae* granulovirus, *Cydia pomonella* granulovirus, *Pieris rapae* granulovirus, *Plutella xylostella* granulovirus, *Adoxophyes honmai* granulovirus, *Mythimna separate* granulovirus or *Cnaphalocrocis medinalis* granulovirus.

The pyrethroid insecticide is selected from bifenthrin; furethrin; gamma-cyhalothrin; barthrin; metofluthrin; fenpropathrin; methothrin; terallethrin; cyclethrin; beta-cypermethrin; lambda-cyhalothrin; cypermethrin; beta-cyfluthrin; cyfluthrin; tetramethrin; permethrin; etofenprox; deltamethrin; pyresmethrin; phenothrin; cyphenothrin; fenpirithrin; resmethrin; dimethrin; butethrin; transpermethrin; theta-cypermethrin; rich-d-t-tetramethrin; flucythrinate; tan-fluvalinate;

proparthin; acrinathrin; silafluofen; flumethrin; pyrethrin; empenthrin; heptafluthrin; meperfluthrin; zeta-cypermethrin; chlorempenthrin; japothrin; tefluthrin; fenvalerate; esfenvalerate; prallethrin; furamethrin; imiprothrin; kadethrin; cyhalothrin; flufenprox; bioresmethrin; biopermethrin; bioallethrin; S-bioallethrin; cismethrin; alpha-cypermethrin; transfluthrin; dimefluthrin; tetramethylfluthrin; tralomethrin; fenfluthrin; valerate; pentmethrin; allethrin; bromethrin; brofluthrinate; tralocythrin; brofenvalerate; cycloprothrin; d-tetramethrin; d-trans-tetramethrin; chloroprallethrin; heptafluthrin; bioallethrin; chlorempenthrin; d-allethrin; rich-d-trans-allethrin; d-phenothrin; d-cyphenothrin; profluthrin; momfluorothrin; kappa-tefluthrin; kappa-bifenthrin; epsilon-momfluorothrin; epsilon-metofluthrin; cis-fenvalerate; cyhalothrin; rich-d-trans-allethrin; Es-bioallethrin or d-cyphenothrin,

The plant growth regulator is selected from paclobutrazol; brassinolide; 24-epibrassinolide mixture; 22-epibrassinolide; 23-epibrassinolide; 24-epibrassinolide; 28-epihomobrassinolide; 14-hydroxybrassinosteroid; brassin; a brassinosteroid; brassinolide; 920; gibberellic acid; gibberellin; auxin; cytokinin; ethephon; abscisic acid; S-abscisic acid (S-ABA); humic acid; alginic acid; an amino acid; chitosan; chitin; hydroxymethyl chitosan; mepiquat chloride; prohexadione-calcium; thidiazuron;

the insect attractant and the repellent are selected from: disparlure; gossyplure; a sex attractant of *Chilo suppressalis* (Walker); a sex attractant of *Cossidae;* a sex pheromone of *Athetis lepigone;* a sex attractant of *Spodoptera litura;* an attractant of *Ceratitis capitata;* a sex pheromone of *Lygus lucorum; a* mating disruption pheromone of *Grapholita molesta;* muscalure; grandlure; trimedlure; cuelure; α-multistriatin; orfralure; oryctalure; ostramone; dibutyl adipate; tabatrex; MGK 11; ethyl hexanediol; dibutyl phthalate; dimethyl carbate; dimethyl phthalate; MGK 326; camphor; benzimine; an *Aedes* repellent (TMPD); 2-octylthio ethanol; diethyltoluamide; butopyronoxyl; metepa; apholate; tepa; an antifeedant amine (PTA); methyl eugenol; octachlorodipropyl ether; bisazir; engine oil; synergistic amine (ENT8184); sulfoxide; piperonyl cyclonene; dietholate; piperonyl butoxide; sesamin; sesamex; bucarpolate; propylisome; methylneodecanamide; sulcofuron-sodium; and

the other insecticides and inorganic substances are selected from indoxacarb, enantiomerically pure indoxacarb, metaflumizone, fluxametamide, isocycloseram; sulfluramid; nifluridide; plifenate; vaniliprole; pyriprole; pyrafluprole; nicofluprole; chlorfenapyr; chlorfenapyr; pyridalyl; pyridalyl; dicloromezotiaz; fipronil; flufiprole; dicyclanil; ethiprole; acetoprole; thiapronil; bromoxynil; dicresyl; dilor; flupyroxystrobin; rafoxanide; nithiazine; flufenerim; sulfoxime; thiofluoximate; bromfenvinfos; mirex; miechongzole; chloromethiuron; Fenpyroximate; oxazosulfyl; kelevan; closantel; mercurous chloride; potassium thiocyanate; borax; boric acid; calcium arsenate; lead arsenate; potassium arsenite; barium hexafluorosilicate; chlordecone; isobenzan; methyl α-eleostearate (bollex); isodrin; endrin, indazapyroxamet, fenmezoditiaz, anisiflupurin, tigolaner, sarolaner, fluralaner, afoxolaner, flupentiofenox.

The insect growth regulator insecticide is a chitin synthesis inhibitor insecticide, an ecdysteroid insecticide or a juvenile hormone insecticide;

the chitin synthesis inhibitor insecticide is: buprofezin, diflubenzuron, hexaflumuron, lufenuron, flufenoxuron, triflumuron, chlorfluazuron, teflubenzuron, dichlorbenzuron, fluazuron, noviflumuron, dichlorofenuron; flucofuron; flucycloxuron, bistrifluron, chlorbenzuron, penfluron, novaluron, PH6042, L-1215, L-7063, diafenthiuron, chloromethiuron, diflovidazin, cyromazine;

the ecdysteroid insecticide is: methoxyfenozide, fufenozide, furantebufenozide, halofenozide, chromafenozide, tebufenozide, RH-5849, flometoquin, protrifenbute; and

the juvenile hormone insecticide is: pyriproxyfen, hydroprene, kinoprene, methoprene, triprene, R-20458, epofenonane, JH-286, diofenolan, anthraquinone, precocene I, precocene II, precocene III, juvenile hormone I, juvenile hormone II, juvenile hormone III.

The amide insecticide is selected from chlorantraniliprole, flubendiamide, cyantraniliprole, tetraniliprole, tetrachlorantraniliprole, cyhalodiamide, thiotraniliprole, flursulamid, fenoxacrim, tolfenpyrad, cyclaniliprole, ryania, broflanilide, cyproflanilide, fluazaindolizine, fluchlordiniliprole, tetrachlorantraniliprole, flubendiamide, cyanide benzamide, dimpropyridaz.

The nicotinoid insecticide is selected from acetamiprid, thiamethoxam, clothianidin, thiacloprid, imidacloprid, nitenpyram, dinotefuran, cycloxaprid, guadipyr, flupyradifurone, sulfoxaflor, imidaclothiz, paichongding, nicotine, anabasine, nornicotine, flupyrimin; and

the insect feeding-blocking insecticide is selected from: pymetrozine, flonicamid, afidopyropen, pyrifluquinazon, triflumezopyrim, fluhexafon, benzpyrimoxan, tyclopyrazoflor.

The fungicide is selected from one or two of a methoxyacrylate fungicide, a triazole fungicide, a pyrrole fungicide, an amide fungicide, a benzimidazole fungicide, a substituted benzene fungicide, a dithiocarbamate fungicide, an organic sulfur fungicide, an oxazole fungicide.

The acaricide is selected from pyridaben, cyetpyrafen, fluacrypyrim, fenpyroximate, tebufenpyrad, cyenopyrafen, etoxazole, hexythiazox, clofentezine, propargite, bifenazate, cyflumetofen, azocyclotin, cyhexatin, fenbutatin oxide, phenproxide, benzoximate, triarathene, dofenapyn, halfenprox, chloropropylate, dienochlor, flubenzimine, tazimcarb, phostin, dicofol, tetradifon, chlorfenethol, tetrasul, tetranactin, medimeform, aramite, chlorfenson, chlorfensulphide, genite, micro/nano-fiber aerogel (MNFA), cycloprate, amidoflumet, fenazaflor, clenpirin, thioquinox, fenazaquin, binapacryl, fluenetil, dinocton, chlorbenside, cymiazole, morphothion, pyriminostrobin, pyrimidifen, acequinocyl, chinomethionat, chloromebuform, malonoben, bromocyclen, azobenzene, tetraethyl pyrophosphate (TEPP), dinosulfon, bromopropylate, dinopenton, dinoterbon, prothidathion, dinex, dinobuton, chlorobenzilate, benoxafos, endosulfan, sulfur, dinitro-o-cresol (DNOC), semiamitraz, amitraz, chlordimeform, formetanate, Flipper (a biological acaricide containing C7-C20 fatty acids), pyflubumide, acynonapyr or trifluenfuronate.

In the binary insecticide composition, the active ingredient A is selected from a compound I-72, and the active ingredient B is selected from indoxacarb, enantiomerically pure indoxacarb or metaflumizone; and the ratio of the parts by weight of the two active ingredients is 20:1-1:20.

In the binary insecticide composition, the active ingredient A is selected from a compound I-72, and the active ingredient B is selected from indoxacarb or enantiomerically pure indoxacarb; and the ratio of the parts by weight of the two active ingredients is 10:1-1:10.

In the binary insecticide composition, the active ingredient A is selected from a compound I-72, and the active ingredient B is selected from metaflumizone, and a weight ratio of the two active ingredients in the composition is 10:1-1:10.

In the binary insecticide composition, the active ingredient A is selected from a compound I-72, and the active ingredient B is selected from monosultap, bisultap or cartap; and the ratio of the parts by weight of the two active ingredients is 50:1-1:100.

In the binary insecticide composition, the active ingredient A is selected from a compound I-72, and the active ingredient B is selected from cartap; and the ratio of the parts by weight of the two active ingredients is 20:1-1:100.

In the binary insecticide composition, the active ingredient A is selected from a compound I-72, and the active ingredient B is selected from monosultap; and the ratio of the parts by weight of the two active ingredients is 50:1-1:100, and preferably 20:1-1:50.

In the binary insecticide composition, the active ingredient A is selected from a compound I-72, and the active ingredient B is selected from bisultap; and the ratio of the parts by weight of the two active ingredients is 50:1-1:50.

In the binary insecticide composition, the active ingredient A is selected from a compound I-72, and the active ingredient B is selected from abamectin, spinetoram, spinosad or emamectin benzoate; and the ratio of the parts by weight of the two active ingredients is 50:1-1:50.

In the binary insecticide composition, the active ingredient A is selected from a compound I-72, and the active ingredient B is selected from abamectin, spinetoram, spinosad or emamectin benzoate; and the ratio of the parts by weight of the two active ingredients is 50:1-1:20.

In the binary insecticide composition, the active ingredient A is selected from a compound I-72, and the active ingredient B is selected from abamectin, spinetoram, spinosad or emamectin benzoate; and the ratio of the parts by weight of the two active ingredients is 20:1-1:20.

Alternatively, in the binary insecticide composition, the active ingredient A is selected from a compound I-72, and the active ingredient B is selected from abamectin, spinetoram, spinosad or emamectin benzoate; and the ratio of the parts by weight of the two active ingredients is 10:1-1:10.

In the binary insecticide composition, the active ingredient A is selected from a compound I-72, and the active ingredient B is selected from chlorpyrifos, triazophos, acephate, phoxim, diazinon, malathion; and the ratio of the parts by weight of the two active ingredients is 50:1-1:50.

In the binary insecticide composition, the active ingredient A is selected from a compound I-72, and the active ingredient B is selected from chlorpyrifos, triazophos, acephate, phoxim, diazinon, malathion; and the ratio of the parts by weight of the two active ingredients is 20:1-1:20.

In the binary insecticide composition, the active ingredient A is selected from a compound I-72, and the active ingredient B is selected from chlorpyrifos, triazophos, acephate, phoxim, diazinon, malathion; and the ratio of the parts by weight of the two active ingredients is 10:1-1:10.

In the binary insecticide composition, the ingredient A is selected from a compound I-72; the ingredient B is selected from carbosulfan, carbaryl, isoprocarb or fenobucarb; and the ratio of the parts by weight of the two active ingredients A and B is 1:60-60:1.

In the binary insecticide composition, the ingredient A is selected from a compound I-72; the ingredient B is selected from carbosulfan; and the ratio of the parts by weight of the two active ingredients A and B is 1:20-10:1.

In the binary insecticide composition, the ingredient A is selected from a compound I-72; the ingredient B is selected from carbaryl; and the ratio of the parts by weight of the two active ingredients A and B is 1:60-1:1.

In the binary insecticide composition, the ingredient A is selected from a compound I-72; the ingredient B is selected from fenobucarb or isoprocarb; and the ratio of the parts by weight of the two active ingredients A and B is

1:40-10:1.

In the binary insecticide composition, for the active ingredients, the ingredient A is selected from a compound I-72, and the ingredient B is selected from spirodiclofen, spirotetramat, spiromesifen, spiropidion, spirobudifen or spidoxamat; and the ratio of the parts by weight of the two active ingredients A and B is 1:50-50:1.

In the binary insecticide composition, the ingredient A is selected from a compound I-72; the ingredient B is selected from spirodiclofen, spirotetramat, spiromesifen, spiropidion, spirobudifen or spidoxamat; and the ratio of the parts by weight of the two active ingredients A and B is 1:20-20:1.

In the binary insecticide composition, the ingredient A is selected from a compound I-72; the ingredient B is selected from spirodiclofen, spirotetramat, spiromesifen, spiropidion or spirobudifen; and the ratio of the parts by weight of the two active ingredients A and B is 1:10-10:1.

In the binary insecticide composition, the ingredient A is selected from a compound I-72; the ingredient B is selected from fosthiazate, fluopyram, chloropicrin, dazomet, an oligosaccharin or *Paecilomyces lilacinus* (Thom.) Samson; and the ratio of the parts by weight of the two active ingredients A and B is 1:20-20:1.

In the binary insecticide composition, the ingredient A is selected from a compound I-72; the ingredient B is selected from fosthiazate, fluopyram, chloropicrin, dazomet, an oligosaccharin or *Paecilomyces lilacinus* (Thom.) Samson; and the ratio of the parts by weight of the two active ingredients A and B is 1:10-10:1.

In the binary insecticide composition, the ingredient A is selected from a compound I-72; the ingredient B is selected from *Bacillus thuringiensis,* matrine, d-limonene, rotenone, mineral oil, azadirachtin, *Metarhizium anisopliae, Beauveria bassiana,* an extract of *Veratrum nigrum rhizome,* osthole, a preparation containing *Autographa californica* nucleopolyhedrovirus, a preparation containing *Spodoptera exigua* Hübner nucleopolyhedrovirus; and the ratio of the parts by weight of the two active ingredients A and B is 1:60-60:1.

In the binary insecticide composition, the ingredient A is selected from a compound I-72; the ingredient B is selected from matrine, d-limonene, rotenone, mineral oil, azadirachtin; and the ratio of the parts by weight of the two active ingredients A and B is 1:20-60:1.

In the binary insecticide composition, the ingredient A is selected from a compound I-72; the ingredient B is selected from matrine, d-limonene, rotenone; and the ratio of the parts by weight of the two active ingredients A and B is 1:10-10:1.

In the binary insecticide composition, the ingredient A is selected from a compound I-72; the ingredient B is selected from azadirachtin; and the ratio of the parts by weight of the two active ingredients A and B is 1:20-20:1.

In the binary insecticide composition, the ingredient A is selected from a compound I-72, and the ingredient B is selected from a pyrethroid insecticide; and the ratio of the parts by weight of the two active ingredients A and B is 1:50-50:1.

In the binary insecticide composition, the ingredient A is selected from a compound I-72; the ingredient B is selected from bifenthrin, gamma-cyhalothrin, metofluthrin, fenpropathrin, methothrin, beta-cypermethrin, lambda-cyhalothrin, cypermethrin, beta-cyfluthrin, cyfluthrin, tetramethrin, permethrin, etofenprox, deltamethrin, phenothrin, cyphenothrin, resmethrin, theta-cypermethrin, rich-d-t-tetramethrin, acrinathrin, silafluofen, flumethrin, pyrethrin, empenthrin, meperfluthrin, zeta-cypermethrin, chlorempenthrin, fenvalerate, esfenvalerate, prallethrin, imiprothrin, bioallethrin, S-bioallethrin, cismethrin, alpha-cypermethrin, transfluthrin, dimefluthrin, tetramethylfluthrin, allethrin, d-tetramethrin, d-trans-tetramethrin, chloroprallethrin, cis-fenvalerate or B88 cyhalothrin; and the ratio of the parts by weight of the two active ingredients A and B is 1:20-20:1.

In the binary insecticide composition, the ingredient A is selected from a compound I-72; the ingredient B is selected from bifenthrin, lambda-cyhalothrin, fenpropathrin, beta-cypermethrin, beta-cyfluthrin, etofenprox, fenvalerate, deltamethrin or pyrethrin; and the ratio of the parts by weight of the two active ingredients A and B is 1:10-10:1.

In the binary insecticide composition, the ingredient A is selected from a compound I-72; the ingredient B is selected from a plant growth regulator, an insect attractant, a repellent or other insecticides and inorganic substances; and the ratio of the parts by weight of the two active ingredients A and B is 1:50-50:1.

In the binary insecticide composition, the ingredient A is selected from a compound I-72; the ingredient B is selected from paclobutrazol, brassinolide, 14-hydroxybrassinosteroid, gibberellic acid, ethephon, S-abscisic acid, chitosan, disparlure, gossyplure, muscalure, camphor, engine oil, fluxametamide, isocycloseram, chlorfenapyr, pyridalyl, fipronil; and the ratio of the parts by weight of the two active ingredients A and B is 1:20-20:1.

In the binary insecticide composition, the ingredient A is selected from a compound I-72; the ingredient B is selected from an insect growth regulator insecticide and acaricide; and the ratio of the parts by weight of the two active ingredients A and B is 1:50-50:1.

In the binary insecticide composition, the ingredient A is selected from a compound I-72; the ingredient B is selected from buprofezin, diflubenzuron, hexaflumuron, lufenuron, flufenoxuron, triflumuron, chlorfluazuron, chlorbenzuron, diafenthiuron, diflovidazin, cyromazine, methoxyfenozide, fufenozide, chromafenozide, tebufenozide, RH-5849, pyriproxyfen, methoprene; and the ratio of the parts by weight of the two active ingredients A and B is 1:20-20:1.

In the binary insecticide composition, the ingredient A is selected from a compound I-72; the ingredient B is selected from buprofezin; hexaflumuron; lufenuron; methoxyfenozide; cyromazine; and the ratio of the parts by weight of

the two active ingredients A and B is 1:10-10:1.

In the binary insecticide composition, the ingredient A is selected from a compound I-72; the ingredient B is selected from an amide insecticide; and the ratio of the parts by weight of the two active ingredients A and B is 1:50-50:1.

In the binary insecticide composition, the ingredient A is selected from a compound I-72; the ingredient B is selected from chlorantraniliprole, flubendiamide, cyantraniliprole, tetraniliprole, tetrachlorantraniliprole, cyhalodiamide, thiotraniliprole, flursulamid, fenoxacrim, tolfenpyrad, cyclaniliprole, ryania, broflanilide, cyproflanilide, triflumuronamide, fluchlordiniliprole, tetrachlorantraniliprole, flubendiamide, cyanide benzamide, dimpropyridaz; and the ratio of the parts by weight of the two active ingredients A and B is 1:20-20:1.

In the binary insecticide composition, the ingredient A is selected from a compound I-72; the ingredient B is selected from chlorantraniliprole, flubendiamide, cyantraniliprole, tetraniliprole, tetrachlorantraniliprole, tolfenpyrad; and the ratio of the parts by weight of the two active ingredients A and B is 1:10-10:1.

In the binary insecticide composition, the ingredient A is selected from a compound I-72, and the ingredient B is selected from a nicotinoid insecticide; and the ratio of the parts by weight of the two active ingredients A and B is 1:50-50:1.

In the binary insecticide composition, the ingredient A is selected from a compound I-72; the ingredient B is selected from acetamiprid, thiamethoxam, clothianidin, thiacloprid, imidacloprid, nitenpyram, dinotefuran, cycloxaprid, guadipyr, flupyradifurone, sulfoxaflor, imidaclothiz, paichongding, nicotine, anabasine, nornicotine, flupyrimin; and the ratio of the parts by weight of the two active ingredients is 1:20-20:1.

In the binary insecticide composition, the ingredient A is selected from a compound I-72; the ingredient B is selected from acetamiprid, clothianidin, imidacloprid, thiamethoxam, nitenpyram, dinotefuran, thiacloprid, sulfoxaflor, nicotine; and the ratio of the parts by weight of the two active ingredients A and B is 1:10-10:1.

In the binary insecticide composition, the ingredient A is selected from a compound I-72, and the ingredient B is selected from an insect feeding-blocking insecticide; and the ratio of the parts by weight of the two active ingredients A and B is 1:50-50:1.

In the binary insecticide composition, the ingredient A is selected from a compound I-72; the ingredient B is selected from pymetrozine, flonicamid, afidopyropen, pyrifluquinazon, triflumezopyrim, fluhexafon, benzpyrimoxan, tyclopyrazoflor; and the ratio of the parts by weight of the two active ingredients A and B is 1:20-20:1.

In the binary insecticide composition, the ingredient A is selected from a compound I-72; the ingredient B is selected from pymetrozine, flonicamid, afidopyropen, pyrifluquinazon, triflumezopyrim; and the ratio of the parts by weight of the two active ingredients A and B is 1:10-10:1.

In the binary insecticide composition, the ingredient A is selected from a compound I-72; the active ingredient B is selected from: one or two of azoxystrobin, pyraoxystrobin, pyrametostrobin, enestroburin, SYP-1620, pyraclostrobin, coumoxystrobin, triadimefon, difenoconazole, tebuconazole, hexaconazole, ipconazole, epoxiconazole, fludioxonil, metalaxyl, metalaxyl-M, silthiofam, carboxin, fluopicolide, prochloraz, carbendazim, pyrisoxazole, hymexazol, thiram, mancozeb, a copper preparation, a lime sulfur mixture; and the ratio of the parts by weight of the active ingredients is 50:1-1:50.

In the binary insecticide composition, the ingredient A is selected from a compound I-72; and the active ingredient B is one or two of SYP-1620, azoxystrobin, pyraoxystrobin, fludioxonil, tebuconazole, difenoconazole, metalaxyl, metalaxyl-M, pyraclostrobin, coumoxystrobin, and a ratio of the parts by weight of the components is 40:1-1:20.

In the binary insecticide composition, the ingredient A is selected from a compound I-72, and the ingredient B is selected from an acaricide; and the ratio of the parts by weight of the two active ingredients A and B is 1:50-50:1.

In the binary insecticide composition, the ingredient A is selected from a compound I-72; the ingredient B is selected from pyridaben, cyetpyrafen, fluacrypyrim, fenpyroximate, tebufenpyrad, cyenopyrafen, etoxazole, hexythiazox, clofentezine, propargite, bifenazate, cyflumetofen, azocyclotin, pyriminostrobin, pyrimidifen, acequinocyl, bromopropylate, pyflubumide, acynonapyr, trifluenfuronate; and the ratio of the parts by weight of the two active ingredients A and B is 1:20-20:1.

In the binary insecticide composition, the ingredient A is selected from a compound I-72; the ingredient B is selected from pyridaben, cyetpyrafen; and the ratio of the parts by weight of the two active ingredients A and B is 1:10-10:1.

The binary insecticide composition is capable of being used for controlling pests and mites in agricultural, forestry, fruit, vegetable and tea crops.

The binary insecticide composition is applied at an effective dose to pests to be controlled or a growth medium thereof.

Indoor biological activity assays show that the binary insecticide composition of the present invention has a synergistic effect. For example, the compound I-72 and indoxacarb have a significant synergistic effect on *Spodoptera exigua* Hiibner in a range of 1:1-1:10, and have a significant synergistic effect on *Spodoptera frugiperda* in a range of 10:1-1:10; the compound I-72 and metaflumizone have a synergistic effect on *Ostrinia* spp. in a range of 10:1-1:10, and have a synergistic effect on *Plutella xylostella* in a range of 10:1-1:10.

Indoor biological activity assays show that the binary insecticide composition of the present invention has a synergistic effect. For example, the compound I-72 and cartap in a range of 50:1-1:100, the compound I-72 and

monosultap in a range of 50:1 to 1:100, and the compound I-72 and bisultap in a range of 50:1-1:100 all have a significant synergistic effect on *Ostrinia* spp.

Indoor biological activity assays show that the binary insecticide composition of the present invention has a synergistic effect. For example, the compound I-72 and abamectin, spinosad, spinetoram show a good synergistic effect on a lepidopteran target *Ostrinia* spp. in a range of 50:1-1:50; the compound I-72 and emamectin benzoate show a synergistic effect on *Ostrinia* spp. in a range of 50:1-1:10; the compound I-72 and abamectin, spinetoram have a synergistic effect on *Chilo suppressalis* (Walker) in a range of 10:1-1:10; the compound I-72 and emamectin benzoate have a synergistic effect on *Spodoptera exigua* Hübner in a range of 10:1-1:10; the compound I-72 and spinosad have a synergistic effect on *Spodoptera frugiperda* in a range of 10:1-1:10; a mixture of the compound I-72 and spinetoram has a significant synergistic effect on 2nd-instar nymphs of *Frankliniella occidentalis* Pergande in a ratio range of 10:1-1:10; a mixture of the compound I-72 and emamectin benzoate has a significant synergistic effect on adult *Bemisia tabaci* (Gennadius) in a ratio range of 10:1-1:10; and a mixture of the compound I-72 and abamectin has a significant synergistic effect on adult *Bemisia tabaci* (Gennadius) in a ratio range of 10:1-1:10.

The results of indoor biological activity assays show that mixing the compound I-72 with organophosphorus insecticides can improve the control effect, reduce the dosage of pesticides and expand the pesticidal spectrum. For example, when the compound I-72 is mixed with chlorpyrifos, triazophos, malathion, etc., in a ratio range of 1:10-10:1, the activity against *Frankliniella occidentalis* Pergande can be greatly improved; when the compound I-72 is mixed with chlorpyrifos and acephate in a ratio range of 10:1 to 1:10, it has a synergistic effect on the control of *Plutella xylostella, Ostrinia* spp., etc.; when the compound I-72 is mixed with chlorpyrifos, triazophos, phoxim in a ratio range of 10:1-1:10, it has a synergistic effect on the control *of Hyphantria cunea;* when the compound I-72 is mixed with chlorpyrifos, diazinon, acephate in an appropriate ratio, it has a synergistic effect on the control of *Chilo suppressalis* (Walker); when the compound I-72 is mixed with chlorpyrifos, diazinon, phoxim in an appropriate ratio, it has a synergistic effect on the control of *Aphis gossypii* Glover; when the compound I-72 is mixed with chlorpyrifos, acephate in a ratio range of 10:1-1:10, it has a synergistic effect on the control of *Bemisia tabaci* (Gennadius); and when the compound I-72 is mixed with chlorpyrifos, acephate, etc., in a ratio range of 1:10-10:1, it shows a good synergistic effect on *Phyllotreta vittuta* Fabr. Through a large number of experiments, it is found that after the compound I-72 is mixed with the organophosphorus insecticides, there is a significant trend of synergistic effect with an increase in the amount of the compound, which is beneficial to the field application of the compound.

Indoor biological activity assays show that the binary insecticide composition of the present invention has a synergistic effect. For example, the compound I-72 and fluopyram show a synergistic effect on *Meloidogyne incognita* in a range of 10:1-1:10.

The results of indoor biological activity assays show that mixing the compound I-72 with spirodiclofen, spirotetramat, spiromesifen, spiropidion, spirobudifen can improve the control effect, reduce the dosage of pesticides and expand the pesticidal spectrum. For example, when the ingredient A is mixed with spirodiclofen, spirotetramat, spiromesifen, spiropidion, and spirobudifen in a ratio range of 1:10-10:1, the activity against targets such as *Tetranychus cinnabarinus* (Boisduval), *Aphis gossypii* Glover, *Thrips flavus* Schrank, *Bemisia tabaci* (Gennadius) can be greatly improved.

The results of indoor biological activity assays show that mixing compound I-72 with pyrethroid insecticides can improve the control effect, reduce the dosage of pesticides and expand the pesticidal spectrum. For example, when the compound I-72 is mixed with bifenthrin, lambda-cyhalothrin, fenpropathrin, beta-cypermethrin, beta-cyfluthrin, etofenprox, fenvalerate, deltamethrin, etc., in a ratio range of 1:10-10:1, the activity against targets such as *Tetranychus cinnabarinus* (Boisduval), *Bemisia tabaci* (Gennadius), *Mythimna separata, Ostrinia* spp., *Plutella xylostella, Nilaparvata lugens, Phyllotreta vittuta* Fabr., and *Myzus persicae* (Sulzer) can be greatly improved. Mixing the compound I-72 with the pyrethroid insecticides can delay the target resistance of pyrethroid pesticides, and also reduce the high residue and non-target toxicity of pyrethroid pesticides.

The results of indoor biological activity assays show that mixing the compound I-72 with plant growth regulators, etc., can improve the control effect, reduce the dosage of pesticides and expand the pesticidal spectrum. For example, when the compound I-72 is mixed with brassinolide, abscisic acid, engine oil, pyridalyl, isocycloseram, etc., in a ratio range of 1:10-10:1, the activity against target pests such as *Sitobion avenae* and *Plutella xylostella* can be greatly improved.

The results of indoor biological activity assays show that mixing the compound I-72 with insect growth regulators and acaricides can improve the control effect, reduce the dosage of pesticides and expand the pesticidal spectrum. For example, when the compound I-72 is mixed with buprofezin, hexaflumuron, lufenuron, methoxyfenozide, etc., in a ratio range of 1:10-10:1, the activity against *Nilaparvata lugens* (Stal), *Chilo suppressalis* (Walker), *Spodoptera exigua* Hübner, *Liriomyza* spp. can be greatly improved.

The results of indoor biological activity assays show that mixing compound I-72 with amide insecticides can improve the control effect, reduce the dosage of pesticides and expand the pesticidal spectrum. For example, when the compound I-72 is mixed with chlorantraniliprole, flubendiamide, cyantraniliprole, tetraniliprole, tetrachlorantraniliprole, tolfenpyrad in a ratio range of 1:10-10:1, the activity against *Chilo suppressalis* (Walker), *Plutella xylostella, Myzus*

*persicae* (Sulzer), *Spodoptera exigua* Hübner, *Ostrinia* spp., *Thrips,* and *Phyllotreta vittuta* Fabr. can be greatly improved. Through a large number of experiments, it is found that after the compound I-72 is mixed with the amide insecticides, there is a significant trend of synergistic effect with an increase in the amount of the compound, which is beneficial to the field application of the compound.

The results of indoor biological activity assays show that mixing the compound I-72 with neonicotinoid insecticides can improve the control effect, reduce the dosage of pesticides and expand the pesticidal spectrum. For example, when the compound I-72 is mixed with imidacloprid, acetamiprid, thiamethoxam, clothianidin, nitenpyram, dinotefuran, thiacloprid, sulfoxaflor, etc., in a ratio range of 1:10-10:1, the activity against target pests such as *Myzus persicae* (Sulzer), *Aphis gossypii* Glover, *Yponomeuta evonymallus* (Linnaeus), *Nilaparvata lugens, Bemisia tabaci* (Gennadius) can be greatly improved. Through a large number of experiments, it is found that after the compound I-72 is mixed with the neonicotinoid insecticides, there is a significant trend of synergistic effect with an increase in the amount of the compound, which is beneficial to the field application of the compound.

The results of indoor biological activity assays show that mixing the compound I-72 with pymetrozine, flonicamid, afidopyropen, pyrifluquinazon, triflumezopyrim can improve the control effect, reduce the dosage of pesticides and expand the pesticidal spectrum. For example, when the compound I-72 is mixed with pymetrozine, flonicamid, afidopyropen, pyrifluquinazon, triflumezopyrim in a ratio range of 1:10-10:1, the activity against target pests such as *Aphis gossypii* Glover, *Myzus persicae* (Sulzer), *Nilaparvata lugens* (Stal), *Ostrinia* spp., *Thrips flavus* Schrank, *Bemisia tabaci* (Gennadius) can be greatly improved. Through a large number of experiments, it is found that after the compound I-72 is mixed with pymetrozine, flonicamid, afidopyropen, pyrifluquinazon, triflumezopyrim, there is a significant trend of synergistic effect with an increase in the amount of the compound, which is beneficial to the field application of the compound.

The results of indoor biological activity assays show that mixing compound I-72 with acaricides can improve the control effect, reduce the dosage of pesticides and expand the pesticidal spectrum. For example, when the compound I-72 is mixed with pyridaben in a ratio range of 1:10-10:1, the activity against *Tetranychidae* can be greatly improved.

Therefore, the binary insecticide composition of the present invention can be used for preparation of insecticidal and acaricidal drugs.

The binary insecticide composition of the present invention is effective against both sensitive and resistant species and all or individual developmental stages of pests. The pests include but are not limited to all insects of *Lepidoptera, Thysanoptera, Coleoptera, Hemiptera, Diptera, Homoptera, Orthoptera,* Isoptera, *Hymenoptera,* as well as mites or parasitic nematodes. It can especially be used to control pests, mites or urban sanitation pests on a variety of crops, such as *Panonychus citri, Phyllocoptruta oleivora, Eotetranychus kankitus, Tetranychus viennensis, Panonychus ulmi, Bryobia rubrioculus, Tetranychus urticae* Koch, *Polyphagotarsonemus latus, Acaphylla theae, Brevipalpus obovatus, Calacarus carinatus, Tetranychus cinnabarinus* (Boisduval), *Tetranychus truncatus, Tetranychus turkestani, Tetranychus dunhuangensis, Penthaleus major, Petrobia latens, Epitrimerus zizyphagus,* pest mites *of Tetranychus* spp. and *Eotetranychus* spp. that damage jujube trees, pest mites on vegetables and flowers, *Phyllocnistis citrella,* citrus scale insects, fruit tree leafminers, fruit tree fruit borers, *Leguminivora glycinivorella, Lithocolletis ringoniella, Ectropis obliqua, Euproctis pseudoconspersa, Empoasca pirisuga, Psylla pyrisuga,* rice planthoppers, *Trialeurodes vaporariorum, Bemisia tabaci* (Gennadius), *Liriomyza sativae* Blanchard, *Phyllotreta vittuta* Fabr., *Tryporyza incertulas, Etiella zinckenella, Diaphania indica, Lissorhoptrus oryzophilus, Pectinophora gossypiella,* fruit tree aphids, *Aphis glycines,* cabbage aphids, *Sitobion avenae, Aphis gossypii* Glover, *Pieris rapae, Helicoverpa assulta,* long-homed beetles, mosquitoes, flies, cockroaches, *Chilo suppressalis* (Walker), *Ostrinia* spp., *Plutella xylostella, Mythimna separata,* leafminers, *Helicoverpa armigera, Spodoptera exigua* Hubner, termites, as well as piercing-sucking mouthpart pests such as planthoppers, whiteflies, aphids, thrips, leafhoppers, stink bugs, and flea beetles.

**In** particular, the binary insecticide composition of the present invention can especially be used to control *Lepidoptera.* A non-exhaustive list of these pests includes, but is not limited to: *Archips* spp., *Adoxophyes* spp., *Synanthedon* spp., *Agrotis* spp., cotton leafworm, *Amylois* spp., *Anticarsia gemmatalis, Archips* spp., *Argyresthia* spp., *Adoxophyes* spp., *Autographa* spp., *Bucculatrix thurberiella,* Agrotis grandis, *Ephestia cautella, Carposina sasakii, Chilo* spp., *Tortrix* spp., *Chrysoteuchia topiaria, Lobesia botrana, Cnaphalocrocis* spp., *Cydia* spp., *Acleris* spp., *Coleophora* spp., *Pieridae* of *Lepidoptera, Cosmophila flava, Crambus* spp., *Crocidalomia binotalis, Cryptophlebia leucotreta, Cydalima perspectalis, Cydia* spp., *Diaphania perspectalis, Diatraea* spp., *Helicoverpa armigera, Earias* spp., *Eldana saccharina, Ephestia* spp., *Epinotia* spp., *Utetheisa ornatrix, Etiella zinckinella, Eucosma* spp., *Eupoecilia ambiguella, Euproctis* spp., *Euxoa* spp., *Feltia jaculiferia, Grapholita* spp., green caterpillar moths, *Heliothis* spp., *Hellula undalis, Herpetogramma* spp., *Hyphantria cunea, Keiferia lycopersicella, Keiferia lycopersicella, Leucoptera scitella, Lyonetia* spp., *Lobesia botrana, Loxostege bifidalis, Lymantria* spp., *Phyllocnistis* spp., *Malacosoma* spp., *Mamestra brassicae, Manduca sexta, Mythimna* spp., *Noctua* spp., *Operophtera* spp., *Orniodes indica, Ostrinia* spp., *Pammene spp., Pandemis* spp., *Panolis flammea, Papaipema* spp., *Pectinophora gossypiella, Leucoptera coffeella, Pseudaletia unipuncta, Phthorimaea operculella, Pieris rapae, Pieris* spp., *Plutella xylostella, Cymolomia* spp., *Semiothisa* spp., *Mecodina cineracea, Richia albicosta, Scirpophaga* spp., *Sesamia* spp., *Sparganothis* spp., *Spodoptera* spp., *Sylepta*

*derogata, Synanthedon* spp., *Thaumetopoea* spp., *Trichoplusia ni, Liriomyza bryoniae, Yponomeuta* spp.

In particular, the binary insecticide composition of the present invention can especially be used to control *Thysanoptera.* A non-exhaustive list of these pests includes, but is not limited to: *Frankliniella* spp., *Heliothrips* spp., *Hercinothrips* spp., *Parthenothrips* spp., *Scirtothrips aurantii, Sericothrips variabilis, Taeniothrips* spp., *Thrips* spp.; *Frankliniella fusca, Tobacco thrips, Frankliniella occidentalis* Pergande, western flower thrips, *Frankliniella shultzei, Frankliniella williamsi,* corn thrips, *Heliothrips haemorrhaidalis, Heliothrips haemorrhoidalis, Riphiphorothrips cruentatus, Scirtothrips* spp., *Scirtothrips citri,* citrus thrips, *Scirtothrips dorsalis, Taeniothrips rhopalantennalis* and *Thrips* spp.

In particular, the binary insecticide composition of the present invention can especially be used to control *Hemiptera.* A non-exhaustive list of these pests includes, but is not limited to: *Acrosternum hilare,* green stinkbugs, *Blissus leucopterus,* chinchbugs, *Calocoris norvegicus* (potato plant bugs), *Cimex hemipterus,* tropical bed bugs, *Cimex lectularius,* bed bugs, *Dagbertus fasciatus, Dichelops furcatus, Dysdercus suturellus,* cotton bugs, *Edessa meditabunda, Eurygaster maura,* cereal bugs, *Euschistus heros, Euschistus servus* (brown stink bugs), *Helopeltis antonii, Helopeltis theivora, Helopeltis theivora, Lagynotomus* spp., stink bugs, *Leptocorisa oratorius, Leptocoris varicornis, Lygus* spp., plant bugs, *Lygus hesperus,* western tarnished plant bugs, *Maconellicoccus hirsutus, Neurocolpus longirostris, Nezara viridula,* southern green stink bugs, *Phytocoris* spp., *Phytocoris californicus, Phytocoris relativus, Piezodorus guildingi, Poecilocapsus lineatus* (four-lined plant bugs), *Psallus vaccinicola, Pseudacysta perseae, Scaptocoris castanea,* and *Triatoma* spp., bloodsucking *Trypanosomes,* bloodsucking conenose bugs/kissing bugs.

In particular, the binary insecticide composition of the present invention can especially be used to control *Homoptera* (aphids, scale insects, whiteflies, leafhoppers). A non-exhaustive list of these pests includes, but is not limited to: *Acyrthosiphon pisum,* pea aphids, *Adelges* spp., adelgids, *Aleurodes proletella,* cabbage whiteflies, *Aleurodicus dispersus, Aleurothrixus floccosus,* woolly whiteflies, *Aluacaspis* spp., *Amrasca biguttella biguttella, Aphrophora* spp., leafhoppers, *Aonidiella aurantii,* red scales, *Aphis* spp., aphids, *Aphis gossypii* Glover, cotton aphids, *Aphis pomi,* apple aphids, *Aulacorthum solani,* foxglove aphids, *Bemisia* spp., whiteflies, *Bemisia argentifolii, Bemisia tabaci* (Gennadius), sweet potato whiteflies, *Brachycolus noxius,* Russian aphids, *Brachycorynella asparagi,* asparagus aphids, *Brevennia rehi, Brevicoryne brassicae,* cabbage aphids, *Ceroplastes* spp., scale insects, *Ceroplastes rubens,* red wax scale insects, *Chionaspis* spp., *Chrysomphalus* spp., *Coccus* spp., *Dysaphis plantaginea,* rosy apple aphids, *Empoasca* spp., *Eriosoma lanigerum,* woolly apple aphids, *Icerya purchasi,* cottony cushion scales, *Idioscopus nitidulus,* mango leafhoppers, *Laodelphax striatellus,* small brown planthoppers, *Lepidosaphes* spp., *Macrosiphum* spp., *Macrosiphum euphorbiae,* potato aphids, *Macrosiphum granarium,* English grain aphids, *Macrosiphum rosae,* rose aphids, *Macrosteles quadrilineatus,* aster leafhoppers, *Mahanarva frimbiolata, Metopolophium dirhodum,* rose-grain aphids, *Mictis longicornis, Myzus persicae* (Sulzer), green peach aphids, *Nephotettix* spp., *Nephotettix cinctipes,* green leafhoppers, large green leafhoppers, *Nilaparvata lugens* (Stal), brown planthoppers, *Parlatoria pergandii, Parlatoria* scales, *Parlatoria ziziphi,* ebony scales, *Peregrinus maidis,* maize planthoppers, *Philaenus* spp., froghoppers, *Phylloxera vitifoliae,* grape phylloxera, *Physokermes piceae,* spruce gall aphids, *Planococcus* spp., mealybugs, *Pseudococcus* spp., *Pseudococcus brevipes,* pineapple mealybugs, *Quadraspidiotus perniciosus,* San Jose scales, *Rhapalosiphum* spp., *Rhapalosiphum maida,* corn leaf aphids, *Rhapalosiphum padi,* bird cherry-oat aphids, *Saissetia* spp., *Saissetia oleae,* black scale insects, *Schizaphis graminum,* greenbugs, *Sitobion avenae, Sogatellafurcifera,* white-backed planthoppers, *Therioaphis* spp., *Toumeyella* spp., *Toxoptera* spp., *Trialeurodes* spp., whiteflies, *Trialeurodes vaporariorum,* greenhouse whiteflies, *Trialeurodes abutiloneus,* banded-wing whiteflies, *Unaspis* spp., *Unaspis yanonensis,* arrowhead scales, and *Zulia entreriana.*

In particular, the binary insecticide composition of the present invention can especially be used to control *Coleoptera* (beetle) pests. A non-exhaustive list of these pests includes, but is not limited to: *Acanthoscelides* spp., weevils, *Acanthoscelides obtectus,* bean weevils, *Agrilus planipennis,* emerald ash borers, *Agriotes* spp., horsehair worms, *Anoplophora glabripennis,* Asian longhomed beetles, *Anthonomus* spp., *Anthonomus grandis,* boll weevils, *Aphidius* spp., *Apion* spp., *Apogonia* spp., grubs, *Ataenius spretulus,* black turfgrass ataenius, *Atomaria linearis,* small beet beetles, *Aulacophora* spp., *Bothynoderes punctiventris,* beet root weevils, *Bruchus* spp., *Bruchus pisorum,* pea weevils, *Cacoesia* spp., *Callosobruchus maculatus,* southern cowpea weevils, *Carpophilus hemipterus,* dried fruit beetles, *Cassida vittata, Cerosterna* spp., *Cerotoma* spp., leaf beetles, *Cerotoma trifurcata,* bean leaf beetles, *Ceutorhynchus* spp., *Ceutorhynchus assimilis,* cabbage stem weevils, *Ceutorhynchus napi,* cabbage weevils, *Chaetocnema* spp., *Colaspis* spp., soil beetles, *Conoderus scalaris, Conoderus stigmosus, Conotrachelus nenuphar,* plum curculios, *Cotinus nitidis,* green flower chafers, *Crioceris asparagi,* asparagus beetles, *Cryptolestes ferrugineus,* rusty grain beetles, *Cryptolestes pusillus,* flat grain beetles, *Cryptolestes turcicus,* Turkish grain beetles, *Ctenicera* spp., *Curculio* spp., *Cyclocephala* spp., *Cylindrocpturus adspersus,* sunflower stem weevils, *Deporaus marginatus,* mango leaf-cutting weevils, *Dermestes lardarius,* larder beetles, *Dermestes maculatus,* cryptic beetles, *Diabrotica* spp., *Chrysolemid, Epilachna varivestis, Mexican bean beetles, Faustinus cubae, Hylobius pales,* aggressive weevils, *Hypera* spp., *Hypera postica,* alfalfa weevils, *Hyperdoes* spp., Argentine stem weevils, *Hypothenemus hampei,* coffee berry borers, *Ips* spp., engraver beetles, *Lasioderma serricorne,* cigarette beetles, *Leptinotarsa decemlineata,* Colorado potato beetles, *Liogenys fuscus, Liogenys suturalis, Lissorhoptrus oryzophilus,* rice water weevils, *Lyctus* spp., wood beetles, powderpost beetles, *Maecolaspis joliveti, Megascelis* spp., *Melanotus communis, Meligethes* spp., *Meligethes aeneus,* flower beetles, *Melolontha melolontha,* common European chafers, *Oberea brevis, Oberea linearis, Oryctes rhinoceros,* date palm beetles, *Oryzaephilus mercator,* merchant grain beetles, *Oryzaephilus surinamensis,* sawtoothed grain beetles, *Otiorhynchus* spp., *Oulema melanopus,* cereal leaf beetles, *Oulema oryzae, Pantomorus* spp., *Phyllophaga* spp., May/June beetles, *Phyllophaga cuyabana, Phyllotreta* spp., *Phyllotreta vittuta* Fabr., *Phyllotreta striolata (Walker), Phyllotreta rectilineata, Phyllotreta vittula, Phyllotreta humilis,* leaf beetles, *Phynchites* spp., *Popillia japonica,* Japanese beetles, *Prostephanus truncatus, Prostephanus truncatus, Rhizopertha dominica,* lesser grain borers, *Rhizotrogus* spp., European chafers, *Rhynchophorus* spp., *Scolytus* spp., *Shenophorus* spp. (billbugs), *Sitona lineatus,* pea leaf weevils, *Sitophilus* spp., grain weevils, *Sitophilus granarius,* grain pests, *Sitophilus oryzae,* rice weevils, *Stegobium paniceum,* drugstore beetles, *Tribolium* spp., flour beetles, *Tribolium castaneum,* red flour beetles, *Tribolium confusum,* confused flour beetles, *Trogoderma variabile,* warehouse beetles and *Zabrus tenebioides.*

In particular, the binary insecticide composition of the present invention can especially be used to control the eggs, larval mites, nymphal mites and adult mites of pest mites in the order Acari. A non-exhaustive list of these pest mites includes, but is not limited to: spider mites and red mites in the family *Tetranychidae,* such as *Panonychus ulmi* Koch, *Tetranychus urticae* Koch, *Tetranychus mcdanieli* McGregor; flat mites in the family *Tenuipalpidae,* such as *Brevipalpus lewisi* McGregor; rust mites and bud mites in the family *Eriophyidae,* as well as other leaf-feeding mites and mites that are important in human and animal health, i.e. dust mites in the family *Epidermoptidae,* hair follicle mites in the family *Demodicidae,* grain mites in the family *Glycyphagidae;* ticks in the family *Ixodidae,* commonly known as hard ticks, such as *Ixodes scapularis* Say, *Ixodes holocyclus Neumann, Dermacentor variabilis* Say, *Amblyomma americanum* Linnaeus, and ticks in the family *Argasidae,* commonly known as soft ticks, such as *Ornithodoros turicata, Argas radiatus;* and scab mites and itch mites in the families *Psoroptidae, Pyemotidae* and *Sarcoptidae.*

The binary insecticide composition of the present invention is applicable to, but not limited to, the following crops or plants:

cereal crops, such as wheat, barley, rye, oats, rice, corn, sorghum, millet, etc.; tuber crops, including sweet potatoes, yams, potatoes, etc.; leguminous crops, including soybeans, broad beans, peas, mung beans, etc.; fiber crops, including cotton, jute, kenaf, hemp, flax, sisal, mat grass, etc.; oil crops, including oilseeds, turnips, mustard, peanuts, flaxseed, hemp, sunflowers, etc.; sugar crops, including sugarcane, sugar beets, etc.; beverage crops, including tea, coffee, cocoa, etc.; dye crops, including indigo, saffron, etc.; spice crops, including lemongrass, mint, roses; forage crops, including alfalfa, sweetclover, Chinese milk vetch, vetch, clover, etc.; forage crops, including ryegrass, timothy grass, sudangrass, etc.; green manure crops, such as vetch, Chinese milk vetch, sickle alfalfa, sweetclover, *Crotalaria juncea, Sesbania cannabina, Amorpha fruticosa,* etc.; fruits, such as apples, pears, plums, peaches, apricots, cherries, citrus fruits, mangoes, lychees, bananas, grapes; or berries, such as strawberries, raspberries or blackberries, mustard, poppies, olives, coconuts, castor beans, etc.; and vegetables, such as cucumbers, loofahs, watermelons, muskmelons, pumpkins, snakegourds, spinach, celery, cabbage, Chinese cabbage, cauliflower, gourds, chili peppers, eggplants, tomatoes, scallions, ginger, garlic, Chinese chives, asparagus lettuce, kidney beans, cowpeas, radishes, carrots, Chinese yams, etc. The composition of the present invention can also be used for any ornamental plants, including flowers, shrubs, broad-leaved trees and evergreen trees, such as violets, begonias, dahlias, *Gerbera jamesonii,* hydrangeas, verbenas, roses, Kalanchoe, poinsettias, asters, cornflowers, coreopsis, delphiniums, monopetalous flowers, *Phlox* spp., *Rhodiola rosea, Sedum* spp., *Petunia* spp., *Viola* spp., impatiens, geraniums, chrysanthemums, *Ranunculus* spp., salvia, wild roses, rosemary, St. John's wort, mint.

Compared with the prior art, the composition of the present invention has the following advantages:

first, the binary insecticide composition of the present invention shows a significant synergistic effect in a certain ratio range, which improves the control effect of the compound on pests;
second, the active ingredient A selected for the binary insecticide composition has the characteristics of a broad pesticidal spectrum and high insecticidal activity. Its successful application in the binary insecticidal composition broadens the pesticidal spectrum, and can achieve the purpose of controlling multiple pests with a single application of the pesticide, thus reducing the control cost; and
third, the active ingredients in this binary insecticide composition have different action mechanisms, and there is no problem of cross-resistance, so it can be used for the comprehensive management of resistant pests.

## DESCRIPTION OF THE EMBODIMENTS

The following specific examples are used to further elaborate on the present invention, but the present invention is by no means limited to these examples.

In the examples, the active ingredient A is the compound I-72 prepared as described in the patent document CN112457288 A, with a content of 97%; and the active ingredient B and other raw materials are all commercially available products. The percentages or ratios of each ingredient are calculated by weight. The active ingredients in each formulation

are calculated based on their effective contents.

The structural formula of the compound I-72 is as follows:

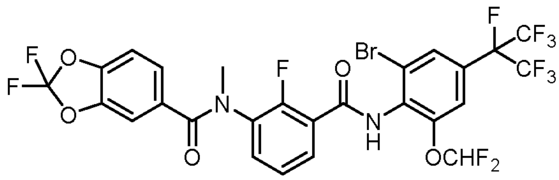

**Examples of indoor biological activity assays**

The following examples are used to illustrate the technical solutions of the present invention, but the present invention is not limited to the following examples.

Example 1 Indoor joint toxicity assay of the composition containing the compound I-72 against *Spodoptera exigua* Hübner

Test subject: 3rd-instar larvae of *Spodoptera exigua* Hiibner, a sensitive strain reared indoors.

Test conditions: temperature: 24-26°C, humidity: RH 60%, and illumination: L:D = 14: 10.

Preparation method: the test pesticides were accurately weighed respectively with an electronic analytical balance. After the two technical materials were respectively added into an appropriate amount of solvent and completely dissolved, the stock solution of the required concentration was prepared with water containing 0.1% Tween 80. The stock solutions of the two active ingredients were mixed in a certain ratio to prepare a mixed solution, which was then diluted respectively into a series of pesticide solutions with a certain concentration gradient according to the experimental design dosage.

Experimental method: the dipping method was adopted. The cabbage leaves cultivated in the greenhouse were taken, the surface wax layer was removed, and leaf disks with a diameter of 3 cm were made with a puncher. The leaf disks were dipped in the prepared pesticide solution for 10 s, and then put into a 9-cm-diameter Petri dish lined with filter paper. After natural air-drying in the shade, the standard test insects were introduced, with 10 insects placed in each dish and 3 replicates performed. The treated test insects were placed in an observation room under certain conditions. The reaction of the test insects was regularly observed, and the number of dead and live insects was investigated 72 h later.

Evaluation method: the Sun Yunpei (Sun Y-P) method was adopted to calculate the co-toxicity coefficient of each mixture ratio and evaluate the joint action type of each mixture.

The co-toxicity coefficient (CTC value) of the mixture was calculated according to the following formula:

$$ATI = \frac{S}{M} \times 100$$

in the formula: ATI-measured toxicity index of the mixture; S-$LC_{50}$ of the standard pesticide; and M-$LC_{50}$ of the mixture.

$$TTI = TIA \times PA + TIB \times PB$$

in the formula: TTI-theoretical toxicity index of the mixture; TIA-toxicity index of the pesticide A; PA-percentage content of the pesticide A in the mixture; TIB-toxicity index of the pesticide B; and PB-percentage content of the pesticide B in the mixture.

$$CTC = \frac{ATI}{TTI} \times 100$$

in the formula: CTC-co-toxicity coefficient; ATI-measured toxicity index of the mixture; and TTI-theoretical toxicity index of the mixture.

CTC-co-toxicity coefficient

ATI-measured toxicity index of the mixture

TTI-theoretical toxicity index of the mixture

Through the formula, the co-toxicity coefficient (CTC) of the mixture ≥ 120 shows a synergistic effect; CTC ≤ 80 shows an antagonistic effect; and 80 < CTC < 120 shows an additive effect.

The experimental results in Table 1 indicate that the combined use of the compound I-72 and indoxacarb has a significant synergistic effect on *Spodoptera exigua* Hiibner in a ratio range of 10:1-1:10.

Table 1 Indoor joint toxicity assay of combinations of the compound I-72 and indoxacarb in different ratios against *Spodoptera exigua* Hiibner

| Treatment | Toxicity regression equation (Y=a+bX) | $LC_{50}$ (mg/L) | Co-toxicity coefficient (CTC) |
|---|---|---|---|
| A:compound I-72 | 5.8828+1.3716X | 0.2272 | / |
| B:indoxacarb | 5.1280+1.8883X | 0.8555 | / |
| A:B=10:1 | 6.0604+1.5008X | 0.1965 | 123.86 |
| A:B=5:1 | 5.7921+1.0392X | 0.1729 | 149.73 |
| A:B=2:1 | 5.9254+1.3098X | 0.1966 | 153.05 |
| A:B=1:1 | 5.9492+1.4790X | 0.2282 | 157.35 |
| A:B=1:2 | 5.8109+1.5332X | 0.2959 | 150.43 |
| A:B=1:5 | 5.6043+1.5809X | 0.4147 | 141.20 |
| A:B=1:10 | 5.4611+1.4189X | 0.4732 | 144.47 |

Example 2 Joint toxicity assay of compositions of the compound I-72 and metaflumizone in different ratios against *Pyrausta nubilalis* Hubem

Test subject: 3rd-instar larvae *of Pyrausta nubilalis* Hubern, a sensitive strain reared indoors.

Experimental method: the artificial diet-pesticide film method was adopted. A standard clean 24-well culture plate was selected. 1 ml of artificial diet was added to each well. After the diet cooled and solidified, a quantitative amount of a pesticide solution was added to the culture plate using a continuous sampler, and then it was air-dried naturally in the shade. The standard test insects were introduced, with 1 insect in each well, a total of 48 insects. The treated test insects were placed in an observation room under certain conditions. The reaction of the test insects was regularly observed, and the number of dead and live insects was investigated 72 h later.

The test conditions, the preparation method of the pesticide solution, and the evaluation method (Sun Y-P) for the joint action type of the mixture were the same as those in Example 1.

The compound I-72 and metaflumizone have a significant synergistic effect on *Pyrausta nubilalis* Hubern in a ratio range of 10:1-1:10.

Table 2 Indoor joint toxicity assay of combinations of the compound I-72 and metaflumizone in different ratios against *Pyrausta nubilalis* Hubern

| Treatment | Toxicity regression equation (Y=a+bX) | $LC_{50}$ (mg/L) | Co-toxicity coefficient (CTC) |
|---|---|---|---|
| A:compound I-72 | 5.3398+1.9508X | 0.6696 | / |
| B:metaflumizone | 4.9387+2.0190X | 1.0724 | / |
| A:B=10:1 | 5.5353+2.0699X | 0.5513 | 125.75 |
| A:B=5:1 | 5.4604+1.5412X | 0.5026 | 142.11 |
| A:B=2:1 | 5.6199+1.8421X | 0.4608 | 166.11 |
| A:B=1:1 | 5.4571+1.5231X | 0.5010 | 164.54 |
| A:B=1:2 | 5.3974+1.6392X | 0.5722 | 156.10 |
| A:B=1:5 | 5.4232+1.8352X | 0.5880 | 165.76 |
| A:B=1:10 | 5.2477+1.8928X | 0.7398 | 137.44 |

Example 3 Indoor joint toxicity assay of compositions of the compound I-72 and indoxacarb in different ratios against *Spodoptera frugiperda*

Test subject: 3rd-instar larvae of *Spodoptera frugiperda,* a sensitive strain reared indoors.

Experimental method: the dipping method was adopted. The corn leaves cultivated in the greenhouse were taken, cut into leaf segments of 5 cm long, dipped in the prepared pesticide solution for 10 s, and then cut into small pieces of 1.5 cm × 1.5 cm after natural air-drying in the shade. These pieces were placed in a 24-well culture plate, and the

standard test insects were introduced, with 48 insects for each treatment. The treated test insects were placed in an observation room under certain conditions. The reaction of the test insects was regularly observed, and the number of dead and live insects was investigated 72 h later.

The test conditions, the preparation method of the pesticide solution, and the evaluation method (Sun Y-P) for the joint action type of the mixture were the same as those in Example 1.

As can be seen from the table (Table 3), the compound I-72 and indoxacarb show a significant synergistic effect on the 3rd-instar larvae of *Spodoptera frugiperda* in a ratio range of 10:1-1:10.

Table 3 Results of the indoor joint toxicity assay of the combined use of the compound A and indoxacarb against *Spodoptera frugiperda*

| Treatment | Toxicity regression equation (Y=a+bX) | $LC_{50}$ (mg/L) | Co-toxicity coefficient (CTC) |
|---|---|---|---|
| A:compound I-72 | 6.6122+1.4234X | 0.0737 | / |
| B:indoxacarb | 4.5654+1.2383X | 2.2438 | / |
| A:B=10:1 | 6.8494+1.4490X | 0.0529 | 152.66 |
| A:B=5:1 | 7.0965+1.7305X | 0.0615 | 142.95 |
| A:B=2:1 | 7.0529+1.8061X | 0.0730 | 148.97 |
| A:B=1:1 | 7.0105+1.8559X | 0.0825 | 172.85 |
| A:B=1:2 | 6.2429+1.3915X | 0.1279 | 162.22 |
| A:B=1:5 | 5.8598+1.4638X | 0.2586 | 146.85 |
| A:B=1:10 | 5.3335+0.9249X | 0.4359 | 139.98 |

Example 4 Joint toxicity assay of compositions of the compound I-72 and metaflumizone in different ratios against *Plutella xylostella*

Test target: 3rd-instar larvae of *Plutella xylostella,* a sensitive strain reared indoors.
Test conditions: temperature: 25-27°C, humidity: RH 60%, and illumination: L:D = 14:10

Experimental method: the airbrush spraying method was adopted. The cabbage cultivated in the greenhouse was taken and made into leaf disks with a diameter of 3 cm. After uniform spraying treatment with an airbrush manual sprayer, the leaf disks were placed in a 9-cm Petri dish lined with filter paper. After natural air-drying in the shade, the standard test insects were introduced, and the number of dead and live insects was investigated 72 h later.

The preparation of the pesticide solution and the evaluation method (Sun Y-P) for the joint action type of the mixture were the same as those in Example 1.

Table 4 Results of the indoor joint toxicity assay of the combined use of the compound I-72 and metaflumizone against *Plutella xylostella*

| Treatment | Toxicity regression equation (Y=a+bX) | $LC_{50}$ (mg/L) | Co-toxicity coefficient (CTC) |
|---|---|---|---|
| A:compound I-72 | 6.6574+1.5608X | 0.0867 | / |
| B:metaflumizone | 3.5207+1.3323X | 12.8933 | / |
| A:B=10:1 | 7.0168+1.7260X | 0.0678 | 140.50 |
| A:B=5:1 | 6.5459+1.2794X | 0.0619 | 167.86 |
| A:B=2:1 | 6.6821+1.4821X | 0.0733 | 176.88 |
| A:B=1:1 | 6.4334+1.4164X | 0.0973 | 177.10 |
| A:B=1:2 | 5.9830+1.2391X | 0.1610 | 159.47 |
| A:B=1:5 | 5.5388+1.2802X | 0.3794 | 132.65 |
| A:B=1:10 | 5.2335+1.5196X | 0.7020 | 127.31 |

Example 5 Synergism assay of the composition containing the compound I-72 against *Pyrausta nubilalis* Hubern

Test subject: 3rd-instar larvae *of Pyrausta nubilalis* Hubern, a sensitive strain reared indoors.
Test conditions: temperature: 24-26°C, humidity: RH 60%, and illumination: L:D = 14:10

Preparation method: the test pesticides were accurately weighed respectively with an electronic analytical balance. After the two technical materials were respectively added into an appropriate amount of solvent and completely dissolved, the stock solution of the required concentration was prepared with water containing 0.1% Tween 80. The stock

solutions of the two active ingredients were mixed in a certain ratio to prepare a mixed solution, which was then diluted respectively into a series of pesticide solutions with a certain concentration gradient according to the experimental design dosage.

Experimental method: the artificial diet-pesticide film method was adopted. A standard clean 24-well culture plate was selected. 1 ml of artificial diet was added to each well. After the diet cooled and solidified, a quantitative amount of a pesticide solution was added to the culture plate using a continuous sampler, and then it was air-dried naturally in the shade. The standard test insects were introduced, with 1 insect in each well, a total of 48 insects. The treated test insects were placed in an observation room under certain conditions. The reaction of the test insects was regularly observed, and the number of dead and live insects was investigated 72 h later.

The evaluation method adopted was the Bliss method. This method is applicable to the qualitative screening of insecticidal compositions. According to the concept of independent joint action he proposed, Bliss believes that the theoretical mortality rate P when insecticides are used in combination can be calculated by the following formula:

$$P = P_m + P_n (1 - P_m)$$

$P_m$ is the mortality rate (%) of the target when the first active ingredient is at a concentration of m; and $P_n$ is the mortality rate (%) of the target when the second active ingredient is at a concentration of n.

If the actual mortality rate of the target after the two active ingredients are mixed at a certain concentration is greater than theoretical mortality rate P, it is determined that the two active ingredients have a synergistic effect when used in combination at the set concentration, and otherwise, they have an antagonistic effect.

The test results are shown in Table 5. As can be seen from the table, the mixtures of the compound I-72 with cartap, monosultap and bisultap all show a synergistic effect on *Pyrausta nubilalis* Hubern in a ratio range of 50:1-1:100.

Table 5 Results of the synergism assay of the composition containing the compound I-72 against the 3rd-instar larvae of *Pyrausta nubilalis* Hubern

| Treatment number | Compound or composition | Concentration (mg/L) | Mortality rate (%) | Theoretical mortality rate (%) | Synergism |
|---|---|---|---|---|---|
| 1 | Compound I-72 | 5 | 87.50 | / | / |
| 2 | | 2 | 70.83 | / | / |
| 3 | | 1 | 60.42 | / | / |
| 4 | | 0.5 | 41.67 | / | / |
| 5 | | 0.1 | 22.92 | / | / |
| 6 | Cartap | 10 | 43.75 | / | / |
| 7 | | 5 | 20.83 | / | / |
| 8 | | 1 | 10.42 | / | / |
| 9 | | 0.1 | 2.08 | / | / |
| 10 | Compound I-72:cartap = 50:1 | 5+0.1 | 100 | 87.76 | Synergistic effect |
| 11 | Compound I-72:cartap = 20:1 | 2+0.1 | 91.67 | 71.44 | Synergistic effect |
| 12 | Compound I-72:cartap = 10:1 | 1+0.1 | 85.42 | 61.24 | Synergistic effect |
| 13 | Compound I-72:cartap = 5:1 | 0.5+0.1 | 66.67 | 42.88 | Synergistic effect |
| 14 | Compound I-72:cartap = 1:1 | 1+1 | 85.42 | 64.54 | Synergistic effect |
| 15 | Compound I-72:cartap = 1:5 | 1+5 | 91.67 | 68.66 | Synergistic effect |
| 16 | Compound I-72:cartap = 1:10 | 0.5+5 | 75.00 | 53.82 | Synergistic effect |

(continued)

| Treatment number | Compound or composition | Concentration (mg/L) | Mortality rate (%) | Theoretical mortality rate (%) | Synergism |
|---|---|---|---|---|---|
| 17 | Compound I-72:cartap = 1:20 | 0.5+10 | 97.92 | 67.19 | Synergistic effect |
| 18 | Compound I-72:cartap = 1:50 | 0.1+5 | 64.58 | 38.98 | Synergistic effect |
| 19 | Compound I-72:cartap = 1:100 | 0.1+10 | 79.17 | 56.64 | Synergistic effect |
| 20 | Monosultap | 10 | 29.17 | / | / |
| 21 | | 5 | 18.75 | / | / |
| 22 | | 1 | 6.25 | / | / |
| 23 | | 0.1 | 0 | / | / |
| 24 | Compound I-72:monosultap = 50:1 | 5+0.1 | 100 | 87.50 | Synergistic effect |
| 25 | Compound I-72:monosultap = 20:1 | 2+0.1 | 91.67 | 70.83 | Synergistic effect |
| 26 | Compound I-72:monosultap = 10:1 | 1+0.1 | 83.33 | 60.42 | Synergistic effect |
| 27 | Compound I-72:monosultap = 5:1 | 0.5+0.1 | 62.50 | 41.67 | Synergistic effect |
| 28 | Compound I-72:monosultap = 1:1 | 1+1 | 85.42 | 62.89 | Synergistic effect |
| 29 | Compound I-72:monosultap = 1:5 | 1+5 | 89.58 | 67.84 | Synergistic effect |
| 30 | Compound I-72:monosultap = 1:10 | 0.5+5 | 72.92 | 52.60 | Synergistic effect |
| 31 | Compound I-72:monosultap = 1:20 | 0.5+10 | 81.25 | 58.68 | Synergistic effect |
| 32 | Compound I-72:monosultap = 1:50 | 0.1+5 | 62.50 | 37.37 | Synergistic effect |
| 33 | Compound I-72:monosultap = 1:100 | 0.1+10 | 66.67 | 45.40 | Synergistic effect |
| 34 | Bisultap | 10 | 22.92 | / | / |
| 35 | | 5 | 10.42 | / | / |
| 36 | | 1 | 4.17 | / | / |
| 37 | | 0.1 | 0 | / | / |
| 38 | Compound I-72:bisultap = 50:1 | 5+0.1 | 100 | 87.50 | Synergistic effect |
| 39 | Compound I-72:bisultap = 20:1 | 2+0.1 | 91.67 | 70.83 | Synergistic effect |
| 40 | Compound I-72:bisultap = 10:1 | 1+0.1 | 83.33 | 60.42 | Synergistic effect |
| 41 | Compound I-72:bisultap = 5:1 | 0.5+0.1 | 64.58 | 41.67 | Synergistic effect |
| 42 | Compound I-72:bisultap = 1:1 | 1+1 | 85.42 | 62.07 | Synergistic effect |

(continued)

| Treatment number | Compound or composition | Concentration (mg/L) | Mortality rate (%) | Theoretical mortality rate (%) | Synergism |
|---|---|---|---|---|---|
| 43 | Compound I-72:bisultap = 1:5 | 1+5 | 87.50 | 64.54 | Synergistic effect |
| 44 | Compound I-72:bisultap = 1:10 | 0.5+5 | 68.75 | 47.74 | Synergistic effect |
| 45 | Compound I-72:bisultap = 1:20 | 0.5+10 | 75.00 | 55.03 | Synergistic effect |
| 46 | Compound I-72:bisultap = 1:50 | 0.1+5 | 50.00 | 30.95 | Synergistic effect |
| 47 | Compound I-72:bisultap = 1:100 | 0.1+10 | 62.50 | 40.58 | Synergistic effect |

Example 6 Synergism assay of the composition containing the compound I-72 against *Pyrausta nubilalis* Hubern

Test subject: 3rd-instar larvae *of Pyrausta nubilalis* Hubern, a sensitive strain reared indoors.
Test conditions: temperature: 24-26°C, humidity: RH 60%, and illumination: L:D = 14:10

Preparation method: the test pesticides were accurately weighed respectively with an electronic analytical balance. After the two technical materials were respectively added into an appropriate amount of solvent and completely dissolved, the stock solution of the required concentration was prepared with water containing 0.1% Tween 80. The stock solutions of the two active ingredients were mixed in a certain ratio to prepare a mixed solution, which was then diluted respectively into a series of pesticide solutions with a certain concentration gradient according to the experimental design dosage.

Experimental method: the artificial diet-pesticide film method was adopted. A standard clean 24-well culture plate was selected. 1 ml of artificial diet was added to each well. After the diet cooled and solidified, a quantitative amount of a pesticide solution was added to the culture plate using a continuous sampler, and then it was air-dried naturally in the shade. The standard test insects were introduced, with 1 insect in each well, a total of 48 insects. The treated test insects were placed in an observation room under certain conditions. The reaction of the test insects was regularly observed, and the number of dead and live insects was investigated 72 h later.

The evaluation method adopted was the Bliss method. This method is applicable to the qualitative screening of insecticidal compositions. According to the concept of independent joint action he proposed, Bliss believes that the theoretical mortality rate P when insecticides are used in combination can be calculated by the following formula:

$$P = P_m + P_n (1-P_m)$$

$P_m$ is the mortality rate (%) of the target when the first active ingredient is at a concentration of m; and $P_n$ is the mortality rate (%) of the target when the second active ingredient is at a concentration of n.

If the actual mortality rate of the target after the two active ingredients are mixed at a certain concentration is greater than theoretical mortality rate P, it is determined that the two active ingredients have a synergistic effect when used in combination at the set concentration, and otherwise, they have an antagonistic effect.

The test results are shown in Table 6. As can be seen from the table, the mixtures of the compound I-72 with abamectin, spinosad and spinetoram show a synergistic effect in a ratio range of 50:1-1:50; and the mixture with emamectin benzoate shows a synergistic effect in a ratio range of 50:1-1:10.

Table 6 Results of the synergism assay of the composition containing the compound I-72 against the 3rd-instar larvae of *Pyrausta nubilalis* Hubern

| Treatment number | Compound or composition | Concentration (mg/L) | Mortality rate (%) | Theoretical mortality rate (%) | Synergism |
|---|---|---|---|---|---|
| 1 | Compound I-72 | 5 | 81.25 | / | / |
| 2 | | 2 | 72.92 | / | / |
| 3 | | 1 | 62.50 | / | / |
| 4 | | 0.1 | 25.00 | / | / |
| 5 | | 0.05 | 10.42 | / | / |
| 6 | Abamectin | 5 | 85.42 | / | / |
| 7 | | 2 | 75.00 | / | / |
| 8 | | 1 | 58.33 | / | / |
| 9 | | 0.1 | 10.42 | / | / |
| 10 | Compound I-72:abamectin | 5+0.1 | 100 | 83.20 | Synergistic |
| | = 50:1 | | | | effect |
| 11 | Compound I-72:abamectin = 20:1 | 2+0.1 | 100 | 75.74 | Synergistic effect |
| 12 | Compound I-72:abamectin = 10:1 | 1+0.1 | 93.75 | 66.41 | Synergistic effect |
| 13 | Compound I-72:abamectin = 1:1 | 1+1 | 100 | 84.38 | Synergistic effect |
| 14 | Compound I-72:abamectin = 1:10 | 0.1+1 | 85.42 | 68.75 | Synergistic effect |
| 15 | Compound I-72:abamectin = 1:20 | 0.1+2 | 97.92 | 81.25 | Synergistic effect |
| 16 | Compound I-72:abamectin = 1:50 | 0.1+5 | 100 | 89.06 | Synergistic effect |
| 17 | Spinosad | 5 | 79.17 | / | / |
| 18 | | 2 | 68.75 | / | / |
| 19 | | 1 | 52.08 | / | / |
| 20 | | 0.1 | 4.17 | / | / |
| 21 | Compound I-72:spinosad = 50:1 | 5+0.1 | 100 | 82.03 | Synergistic effect |
| 22 | Compound I-72:spinosad = 20:1 | 2+0.1 | 95.83 | 74.05 | Synergistic effect |
| 23 | Compound I-72:spinosad = 10:1 | 1+0.1 | 87.50 | 64.06 | Synergistic effect |
| 24 | Compound I-72:spinosad = 1:1 | 1+1 | 100 | 82.03 | Synergistic effect |
| 25 | Compound I-72:spinosad = 1:10 | 0.1+1 | 85.42 | 64.06 | Synergistic effect |
| 26 | Compound I-72:spinosad = 1:20 | 0.1+2 | 97.92 | 76.56 | Synergistic effect |
| 27 | Compound I-72:spinosad = | 0.1+5 | 100 | 84.38 | Synergistic |

(continued)

| Treatment number | Compound or composition | Concentration (mg/L) | Mortality rate (%) | Theoretical mortality rate (%) | Synergism |
|---|---|---|---|---|---|
| | 1:50 | | | | effect |
| 28 | Spinetoram | 5 | 81.25 | / | / |
| 29 | | 2 | 70.83 | / | / |
| 30 | | 1 | 56.25 | / | / |
| 31 | | 0.1 | 8.33 | / | / |
| 32 | Compound I-72:spinetoram = 50:1 | 5+0.1 | 100 | 82.81 | Synergistic effect |
| 33 | Compound I-72:spinetoram = 20:1 | 2+0.1 | 95.83 | 75.17 | Synergistic effect |
| 34 | Compound I-72:spinetoram = 10:1 | 1+0.1 | 89.58 | 65.63 | Synergistic effect |
| 35 | Compound I-72:spinetoram = 1:1 | 1+1 | 100 | 83.59 | Synergistic effect |
| 36 | Compound I-72:spinetoram = 1:10 | 0.1+1 | 91.67 | 67.19 | Synergistic effect |
| 37 | Compound I-72:spinetoram = 1:20 | 0.1+2 | 97.92 | 78.13 | Synergistic effect |
| 38 | Compound I-72:spinetoram = 1:50 | 0.1+5 | 100 | 85.94 | Synergistic effect |
| 39 | Emamectin benzoate | 0.5 | 87.50 | / | / |
| 40 | | 0.2 | 79.17 | / | / |
| 41 | | 0.1 | 50.00 | / | / |
| 42 | | 0.05 | 41.67 | / | / |
| 43 | Compound 1-72:emamectin benzoate= 50:1 | 5+0.1 | 100 | 90.63 | Synergistic effect |
| 44 | Compound 1-72:emamectin benzoate= 20:1 | 2+0.1 | 100 | 86.46 | Synergistic effect |
| 45 | Compound 1-72:emamectin benzoate= 10:1 | 1+0.1 | 100 | 81.25 | Synergistic effect |
| 46 | Compound I-72:emamectin | 0.1+0.1 | 87.50 | 62.50 | Synergistic |
| | benzoate= 1:1 | | | | effect |
| 47 | Compound 1-72:emamectin benzoate= 1:10 | 0.05+0.5 | 100 | 88.80 | Synergistic effect |

Example 7 Indoor joint toxicity assay of the combined use of the compound I-72 and abamectin against *Chilo suppressalis* (Walker) in rice

Test target: 2nd-instar larvae of *Chilo suppressalis* (Walker). The insect source was collected from Nanchang, Jiangxi Province, and it is the 11th generation continuously cultured indoors, with a relatively high resistance level to amide pesticides such as chlorantraniliprole.
Test conditions: temperature: 25-27°C, humidity: RH 60%, and illumination: L:D = 14:10

Preparation method: the test pesticides were accurately weighed respectively with an electronic analytical balance. After the two technical materials were respectively added into an appropriate amount of solvent and completely dissolved, the stock solution of the required concentration was prepared with water containing 0.1% Tween 80. The stock

solutions of the two active ingredients were mixed in a certain ratio to prepare a mixed solution, which was then diluted respectively into a series of pesticide solutions with a certain concentration gradient according to the experimental design dosage.

Experimental method: the spraying method was adopted. Rice stalks with the same length and thickness were selected, cut into the same length, and evenly sprayed with the pesticide solution in the order from low dosage to high dosage according to the experimental design, with 1.5 mL of the pesticide solution for each treatment. The stalks were placed in a 6-cm-diameter Petri dish with filter paper. After natural air-drying in the shade, uniform and healthy test insects were introduced, with 10 insects for each treatment and 4 replicates for each treatment. In addition, a blank control was set up. The number of dead and live insects was investigated 72 hours later. The corrected mortality rate was calculated using the Abbott's formula, and the DPS data processing software was used for statistical analysis to calculate the toxicities ($LC_{50}$ values) of the single test pesticides and the mixtures under the test ratios.

Evaluation method: the Sun Y-P method was adopted to calculate the co-toxicity coefficient of each mixture ratio and to evaluate the joint action type of each mixture, as in Example 1.

As can be seen from the table (Table 7), the mixture of the compound I-72 and abamectin shows a synergistic effect on resistant *Chilo suppressalis* (Walker) in a ratio range of 10:1-1:10.

Table 7 Results of the indoor joint toxicity assay of the combined use of the compound I-72 and abamectin against *Chilo suppressalis* (Walker) in rice

| Treatment | Toxicity regression equation (Y=a+bX) | $LC_{50}$ (mg/L) | Co-toxicity coefficient (CTC) |
|---|---|---|---|
| A:compound I-72 | 5.1699+1.8703X | 0.8112 | / |
| B:abamectin | 3.2144+1.9730X | 8.0355 | / |
| A:B=10:1 | 5.4726+1.8524X | 0.5558 | 158.94 |
| A:B=5:1 | 5.2887+1.1997X | 0.5746 | 166.07 |
| A:B=2:1 | 5.2066+1.6096X | 0.7442 | 155.66 |
| A:B=1:1 | 5.0362+1.5105X | 0.9463 | 155.73 |
| A:B=1:2 | 4.8120+1.3718X | 1.3710 | 147.69 |
| A:B=1:5 | 4.3364+1.8702X | 2.2639 | 142.88 |
| A:B=1:10 | 4.1915+1.5865X | 3.2332 | 137.34 |

Example 8 Indoor activity assay of the combined use of the compound I-72 and spinetoram against *Chilo suppressalis* (Walker)

The test subject, the test conditions, the preparation of the pesticide solution, the test method and the evaluation method were the same as those in Example 7.

As can be seen from the table (Table 8), the mixture of the compound I-72 and spinetoram shows a synergistic effect on resistant *Chilo suppressalis* (Walker) in a ratio range of 10:1-1:10.

Table 8 Results of the indoor joint toxicity assay of the combined use of the compound I-72 and spinetoram against *Chilo suppressalis* (Walker) in rice

| Treatment | Toxicity regression equation (Y=a+bX) | $LC_{50}$ (mg/L) | Co-toxicity coefficient (CTC) |
|---|---|---|---|
| A:compound I-72 | 5.1699+1.8703X | 0.8112 | / |
| B:spinetoram | 3.1494+1.8998X | 9.4220 | / |
| A:B=10:1 | 5.2685+1.5762X | 0.6756 | 130.95 |
| A:B=5:1 | 5.2220+1.6167X | 0.7289 | 131.28 |
| A:B=2:1 | 5.1456+1.5893X | 0.8098 | 144.06 |
| A:B=1:1 | 4.9899+1.4981X | 1.0156 | 147.09 |
| A:B=1:2 | 4.7928+1.5949X | 1.3488 | 153.93 |
| A:B=1:5 | 4.3604+1.6920X | 2.3879 | 142.49 |
| A:B=1:10 | 4.0326+1.7581X | 3.5499 | 135.07 |

Example 9 Indoor activity assay of the combined use of the compound I-72 and emamectin benzoate against *Spodoptera exigua* Hübner

Test subject: 3rd-instar larvae of *Spodoptera exigua* Hiibner, a sensitive strain reared indoors.

Experimental method: the dipping method was adopted. The cabbage leaves cultivated in the greenhouse were taken, the surface wax layer was removed, and leaf disks with a diameter of 3 cm were made with a puncher. The leaf disks were dipped in the prepared pesticide solution for 10 s, and then put into a 9-cm-diameter Petri dish lined with filter paper. After natural air-drying in the shade, the standard test insects were introduced, with 10 insects placed in each dish and 3 replicates performed. The treated test insects were placed in an observation room under certain conditions. The reaction of the test insects was regularly observed, and the number of dead and live insects was investigated 72 h later.

The test conditions, the preparation of the pesticide solution and the evaluation method were the same as those in Example 1.

As can be seen from the table (Table 9), the mixture of the compound I-72 and emamectin benzoate shows a significant synergistic effect on the 3rd-instar larvae of *Spodoptera exigua* Hübner in a ratio range of 10:1-1:10.

Table 9 Results of the indoor joint toxicity assay of the combined use of the compound I-72 and emamectin benzoate against *Spodoptera exigua* Hübner

| Treatment | Toxicity regression equation (Y=a+bX) | $LC_{50}$ (mg/L) | Co-toxicity coefficient (CTC) |
|---|---|---|---|
| A:compound I-72 | 5.7162+1.1588X | 0.2410 | / |
| B:emamectin benzoate | 7.2878+2.1653X | 0.0878 | / |
| A:B=10:1 | 6.1382+1.4151X | 0.1569 | 132.52 |
| A:B=5:1 | 6.5251+1.6362X | 0.1169 | 159.64 |
| A:B=2:1 | 6.3758+1.4130X | 0.1063 | 143.37 |
| A:B=1:1 | 6.5693+1.3205X | 0.0648 | 198.58 |
| A:B=1:2 | 7.0304+1.6779X | 0.0616 | 180.67 |
| A:B=1:5 | 7.1003+1.8609X | 0.0744 | 132.03 |
| A:B=1:10 | 6.9586+1.7337X | 0.0742 | 125.58 |

Example 10 Indoor activity assay of the combined use of the compound I-72 and spinosad against *Spodoptera frugiperda*

Test subject: 3rd-instar larvae of *Spodoptera frugiperda,* a sensitive strain reared indoors.

Experimental method: the dipping method was adopted. The corn leaves cultivated in the greenhouse were taken, cut into leaf segments of 5 cm long, dipped in the prepared pesticide solution for 10 s, and then cut into small pieces of 1.5 cm × 1.5 cm after natural air-drying in the shade. These pieces were placed in a 24-well culture plate, and the standard test insects were introduced, with 48 insects for each treatment. The treated test insects were placed in an observation room under certain conditions. The reaction of the test insects was regularly observed, and the number of dead and live insects was investigated 72 h later.

The test conditions, the preparation of the pesticide solution and the evaluation method were the same as those in Example 1.

As can be seen from the table (Table 10), the mixture of the compound I-72 and spinosad shows a significant synergistic effect on the 3rd-instar larvae of *Spodoptera frugiperda* in a ratio range of 10:1-1:10.

Table 10 Results of the indoor joint toxicity assay of the combined use of the compound I-72 and spinosad against *Spodoptera frugiperda*

| Treatment | Toxicity regression equation (Y=a+bX) | $LC_{50}$ (mg/L) | Co-toxicity coefficient (CTC) |
|---|---|---|---|
| A:compound I-72 | 6.4503+1.3073X | 0.0777 | / |
| B:spinosad | 4.8918+2.1282X | 1.1242 | / |
| A:B=10:1 | 6.8982+1.6168X | 0.0670 | 126.77 |
| A:B=5:1 | 7.2560+1.9256X | 0.0674 | 136.58 |
| A:B=2:1 | 6.9595+1.7272X | 0.0734 | 153.62 |
| A:B=1:1 | 6.8832+1.8133X | 0.0915 | 158.93 |
| A:B=1:2 | 6.1862+1.4025X | 0.1426 | 143.63 |
| A:B=1:5 | 6.0092+1.7146X | 0.2579 | 134.41 |

(continued)

| Treatment | Toxicity regression equation (Y=a+bX) | $LC_{50}$ (mg/L) | Co-toxicity coefficient (CTC) |
|---|---|---|---|
| A:B=1:10 | 5.4137+0.9929X | 0.3831 | 131.94 |

Example 11 Indoor activity assay of the combined use of the compound I-72 and spinetoram against *Frankliniella occidentalis* Pergande

Test subject: 2nd-instar nymphs of *Frankliniella occidentalis* Pergande, a sensitive strain reared indoors.

Experimental method: the spraying method was adopted. The kidney bean leaves cultivated in the greenhouse were selected, and the petioles were wrapped with moist degreased cotton and sealing film. They were evenly sprayed with the pesticide solution in the order from low dosage to high dosage according to the experimental design, placed in a 6-cm-diameter Petri dish with filter paper. After natural air-drying in the shade, the test insects were introduced, with 20 insects for each treatment and 3 replicates. In addition, a blank control was set up. The number of dead and live insects was investigated 48 hours later. The corrected mortality rate was calculated using the Abbott's formula, and the DPS data processing software was used for statistical analysis to calculate the toxicities ($LC_{50}$ values) of the single test pesticides and the mixtures under the test ratios.

The test conditions, the preparation of the pesticide solution and the evaluation method were the same as those in Example 1.

As can be seen from the table (Table 11), the mixture of the compound I-72 and spinetoram has a significant synergistic effect on the 2nd-instar nymphs of *Frankliniella occidentalis* Pergande in a ratio range of 10:1-1:10.

Table 11 Results of the indoor joint toxicity assay of the combined use of the compound I-72 and spinetoram against *Frankliniella occidentalis* Pergande

| Treatment | Toxicity regression equation (Y=a+bX) | $LC_{50}$ (mg/L) | Co-toxicity coefficient (CTC) |
|---|---|---|---|
| A:compound I-72 | 4.6429+1.2363X | 1.9445 | / |
| B:spinetoram | 5.1688+1.5824X | 0.7822 | / |
| A:B=10:1 | 4.8864+1.4065X | 1.2045 | 142.23 |
| A:B=5:1 | 5.0020+1.4657X | 0.9969 | 156.34 |
| A:B=2:1 | 5.2589+1.5101X | 0.6738 | 193.00 |
| A:B=1:1 | 5.2738+1.0897X | 0.5608 | 198.95 |
| A:B=1:2 | 5.2771+1.3913X | 0.6322 | 154.52 |
| A:B=1:5 | 5.3332+1.8374X | 0.6587 | 131.90 |
| A:B=1:10 | 5.4444+2.0118X | 0.6013 | 137.56 |

Example 12 Indoor activity assay of the combined use of the compound I-72 and emamectin benzoate against adult *Bemisia tabaci* (Gennadius)

Test subject: adult *Bemisia tabaci* (Gennadius), a sensitive strain reared indoors.

Experimental method: the spraying method was adopted. The kidney bean seedlings cultivated in the greenhouse were selected and evenly sprayed with the pesticide solution in the order from low dosage to high dosage according to the experimental design. After natural air-drying in the shade, a self-made glass cover was put on, and the test insects were introduced, with 20-30 insects for each treatment and 3 replicates. In addition, a blank control was set up. The number of dead and live insects was investigated 72 hours later. The corrected mortality rate was calculated using the Abbott's formula, and the DPS data processing software was used for statistical analysis to calculate the toxicities ($LC_{50}$ values) of the single test pesticides and the mixtures under the test ratios.

The test conditions, the preparation of the pesticide solution and the evaluation method were the same as those in Example 1.

As can be seen from the table (Table 12), the mixture of the compound I-72 and emamectin benzoate has a significant synergistic effect on the adult *Bemisia tabaci* (Gennadius) in a ratio range of 10:1-1:10.

Table 12 Results of the indoor joint toxicity assay of the combined use of the compound I-72 and emamectin benzoate against *Bemisia tabaci* (Gennadius)

| Treatment | Toxicity regression equation (Y=a+bX) | $LC_{50}$ (mg/L) | Co-toxicity coefficient (CTC) |
|---|---|---|---|
| A:compound I-72 | 4.2179+1.6523X | 2.9739 | / |
| B:emamectin benzoate | 4.8737+1.5993X | 1.1995 | / |
| A:B=10:1 | 4.4427+1.9429X | 1.9357 | 135.42 |
| A:B=5:1 | 4.7968+1.3550X | 1.4125 | 168.90 |
| A:B=2:1 | 4.9592+1.4191X | 1.0684 | 186.41 |
| A:B=1:1 | 4.8921+1.5774X | 1.1707 | 146.02 |
| A:B=1:2 | 4.9590+1.5111X | 1.0645 | 140.65 |
| A:B=1:5 | 5.0361+1.3643X | 0.9410 | 141.55 |
| A:B=1:10 | 5.0527+1.3979X | 0.9168 | 138.33 |

Example 13 Indoor activity assay of the combined use of the compound I-72 and abamectin against adult *Bemisia tabaci* (Gennadius)

The test subject, the test method, the test conditions, the preparation of the pesticide solution and the evaluation method were the same as those in Example 12.

As can be seen from the table (Table 13), the mixture of the compound I-72 and abamectin has a significant synergistic effect on the adult *Bemisia tabaci* (Gennadius) in a ratio range of 10:1-1:10.

Table 13 Results of the indoor joint toxicity assay of the combined use of the compound I-72 and abamectin against *Bemisia tabaci* (Gennadius)

| Treatment | Toxicity regression equation (Y=a+bX) | $LC_{50}$ (mg/L) | Co-toxicity coefficient (CTC) |
|---|---|---|---|
| A:compound I-72 | 4.2179+1.6523X | 2.9739 | / |
| B:abamectin | 4.1821+2.3530X | 2.2263 | / |
| A:B=10:1 | 4.5840+1.7592X | 1.7239 | 167.40 |
| A:B=5:1 | 4.4807+1.9607X | 1.8401 | 153.05 |
| A:B=2:1 | 4.7144+1.4248X | 1.5865 | 168.58 |
| A:B=1:1 | 4.8033+1.5836X | 1.3310 | 191.31 |
| A:B=1:2 | 4.8327+1.8332 X | 1.2338 | 196.95 |
| A:B=1:5 | 4.6361+1.8185 X | 1.5852 | 146.58 |
| A:B=1:10 | 4.6497+1.5425X | 1.6870 | 135.06 |

Example 14 Indoor joint toxicity assay of the mixture of the compound I-72 and organophosphorus insecticides such as chlorpyrifos against *Frankliniella occidentalis* Pergande

Test target: *Frankliniella occidentalis* Pergande, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, kidney bean leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with about 20 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 14.

Table 14 Results of the indoor joint toxicity assay of the mixture of the compound I-72 and organophosphorus insecticides such as chlorpyrifos against *Frankliniella occidentalis* Pergande

| Compound or composition | Toxicity regression equation (Y=) | $LC_{50}$ (mg/L) | 95% confidence limit | Co-toxicity coefficient CTC |
|---|---|---|---|---|
| A:compound I-72 | 3.74+2.53X | 3.13 | 2.70-3.69 | - |
| B:chlorpyrifos | 3.12+2.83X | 4.60 | 3.99-5.29 | - |
| A:B=10:1 | 4.03+2.95x | 2.13 | 1.83-2.44 | 151.62 |
| A:B=5:1 | 4.10+2.78X | 2.11 | 1.82-2.44 | 156.36 |
| A:B=3:1 | 4.12+5.54x | 2.23 | 1.90-2.58 | 152.57 |
| A:B=1:1 | 3.99+2.66X | 2.39 | 1.79-2.45 | 155.67 |
| A:B=1:3 | 3.76+2.59X | 3.01 | 2.59-3.53 | 137.01 |
| A:B=1:5 | 3.72+2.47X | 3.28 | 2.81-3.90 | 130.11 |
| A:B=1:10 | 3.63+2.53X | 3.49 | 2.99-4.17 | 126.66 |
| A:compound I-72 | 3.74+2.53X | 3.13 | 2.70-3.69 | - |
| B:triazophos | 2.05+2.50X | 15.10 | 12.88-18.26 | - |
| A:B=10:1 | 4.19+2.64X | 2.03 | 1.73-2.35 | 165.89 |
| A:B=5:1 | 3.97+2.99x | 2.20 | 1.91-2.52 | 163.75 |
| A:B=3:1 | 4.04+2.51X | 2.42 | 2.08-2.81 | 161.35 |
| A:B=1:1 | 6.53+2.88X | 3.23 | 2.80-3.78 | 160.67 |
| A:B=1:3 | 7.31+2.49X | 5.32 | 4.58-6.20 | 145.23 |
| A:B=1:5 | 2.95+2.70X | 5.77 | 5.00-6.73 | 159.81 |
| A:B=1:10 | 2.83+2.63X | 6.70 | 4.86-10.33 | 167.31 |
| A:compound I-72 | 3.74+2.53X | 3.13 | 2.70-3.69 | - |
| B:malathion | 0.71+2.49X | 52.28 | 36.97-75.09 | - |
| A:B=10:1 | 3.93+2.48X | 2.70 | 2.32-3.16 | 126.95 |
| A:B=5:1 | 4.38+2.73X | 2.77 | 2.39-3.23 | 134.39 |
| A:B=3:1 | 3.58+2.83X | 3.17 | 2.74-3.71 | 129.41 |
| A:B=1:1 | 3.80+2.00X | 4.01 | 3.31-5.06 | 147.60 |
| A:B=1:3 | 2.72+2.45X | 8.51 | 7.03-10.00 | 124.89 |
| A:B=1:5 | 2.30+2.60X | 10.92 | 9.34-12.65 | 132.51 |
| A:B=1:10 | 2.17+2.40X | 15.13 | 12.94-17.94 | 142.42 |

Example 15 Indoor joint toxicity assay of the mixture of the compound I-72 and organophosphorus insecticides such as chlorpyrifos against *Chilo suppressalis* (Walker)

Test target: 3rd-instar larvae of *Chilo suppressalis* (Walker), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, tender and fresh rice seedlings were selected and dipped in the prepared pesticide solution for 10 s in the order from low dosage to high dosage according to the experimental design. After natural air-drying in the shade, they were cut into small sections of 5 cm, placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 15.

Table 15 Results of the indoor joint toxicity assay of the mixture of the compound I-72 and organophosphorus insecticides such as chlorpyrifos against *Chilo suppressalis* (Walker)

| Compound or composition | Toxicity regression equation (Y=) | $LC_{50}$ (mg/L) | 95% confidence limit | Co-toxicity coefficient CTC |
|---|---|---|---|---|
| A:compound I-72 | 4.51+2.00x | 1.76 | 1.33-2.64 | - |
| B:chlorpyrifos | 4.34+2.27x | 1.96 | 1.53-2.73 | - |
| A:B=10:1 | 5.20+2.24x | 0.82 | 0.64-1.04 | 215.53 |
| A:B=5:1 | 4.09+2.25x | 0.91 | 0.70-1.16 | 197.13 |
| A:B=1:1 | 4.79+2.43x | 1.22 | 0.97-1.58 | 152.62 |
| A:B=1:5 | 4.65+2.32x | 1.42 | 1.12-1.91 | 136.05 |
| A:B=1:10 | 4.61+2.24x | 1.50 | 1.17-2.07 | 129.52 |
| A:compound I-72 | 4.51+2.00x | 1.76 | 1.33-2.64 | - |
| B:diazinon | 2.85+2.71x | 6.22 | 5.03-7.94 | - |
| A:B=10:1 | 4.96+2.47x | 1.04 | 0.83-1.31 | 181.20 |
| A:B=3:1 | 4.47+2.08x | 1.33 | 1.03-1.81 | 161.51 |
| A:B=1:1 | 4.63+2.27x | 1.46 | 1.14-1.99 | 188.15 |
| A:B=1:3 | 4.16+2.63x | 2.08 | 1.63-2.58 | 183.05 |
| A:B=1:10 | 3.73+2.46x | 3.28 | 2.62-4.30 | 153.95 |
| A:compound I-72 | 4.51+2.00x | 1.76 | 1.33-2.64 | - |
| B:acephate | 2.44+2.45x | 11.09 | 8.67-13.91 | - |
| A:B=20:1 | 4.81+2.05x | 1.23 | 0.95-1.66 | 148.80 |
| A:B=5:1 | 4.69+2.34x | 1.35 | 1.07-1.80 | 151.42 |
| A:B=3:1 | 4.52+2.29x | 1.61 | 1.26-2.26 | 138.10 |
| A:B=1:1 | 4.16+2.41x | 2.23 | 1.74-2.80 | 136.45 |
| A:B=1:3 | 3.96+2.18x | 3.00 | 2.34-3.96 | 159.24 |
| A:B=1:5 | 3.81+2.15x | 3.59 | 2.79-4.93 | 164.28 |
| A:B=1:20 | 3.57+2.09x | 4.84 | 3.64-7.42 | 182.90 |

Example 16 Synergism assay of the mixture of the compound I-72 and organophosphorus insecticides such as chlorpyrifos against *Plutella xylostella*

Test target: 3rd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, fresh cabbage leaves cultivated in the greenhouse were selected. The cabbage leaves were made into circular leaf disks with a diameter of 3 cm using a puncher and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 16.

Table 16 Results of the indoor joint toxicity assay of the mixture of the compound I-72 and organophosphorus insecticides such as chlorpyrifos against *Plutella xylostella*

| Compound or composition | Toxicity regression equation (Y=) | $LC_{50}$ (mg/L) | 95% confidence limit | Co-toxicity coefficient CTC |
|---|---|---|---|---|
| A:compound I-72 | 7.00+1.89x | 0.09 | 0.07-0.12 | - |

(continued)

| Compound or composition | Toxicity regression equation (Y=) | $LC_{50}$ (mg/L) | 95% confidence limit | Co-toxicity coefficient CTC |
|---|---|---|---|---|
| B:chlorpyrifos | 2.42+2.27x | 13.71 | 10.77-17.71 | - |
| A:B=20:1 | 7.27+1.88x | 0.06 | 0.05-0.08 | 153.78 |
| A:B=5:1 | 7.93+2.54x | 0.07 | 0.06-0.09 | 149.85 |
| A:B=1:1 | 7.10+2.32x | 0.12 | 0.10-0.16 | 139.97 |
| A:B=1:5 | 5.95+2.49x | 0.42 | 0.32-0.52 | 122.96 |
| A:B=1:20 | 8.08+2.10x | 0.94 | 0.69-1.37 | 179.79 |

Example 17 Indoor joint toxicity assay of the mixture of the compound I-72 and organophosphorus insecticides such as chlorpyrifos against *Aphis gossypii* Glover

Test target: *Aphis gossypii* Glover nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with uniform and consistent *Aphis gossypii* were selected, with about 20 insects on each leaf. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 17.

Table 17 Results of the indoor joint toxicity assay of the mixture of the compound I-72 and organophosphorus insecticides such as chlorpyrifos against *Aphis gossypii*

| Compound or composition | Toxicity regression equation (Y=) | $LC_{50}$ (mg/L) | 95% confidence limit | Co-toxicity coefficient CTC |
|---|---|---|---|---|
| A:compound I-72 | 3.94+2.33x | 2.83 | 2.43-3.34 | - |
| B:chlorpyrifos | 3.44+2.52x | 4.16 | 3.53-4.83 | - |
| A:B=10:1 | 4.59+2.29x | 1.15 | 1.29-1.79 | 253.17 |
| A:B=3:1 | 4.46+2.07x | 1.83 | 1.54-2.24 | 168.16 |
| A:B=1:1 | 4.48+1.84x | 1.92 | 1.58-2.44 | 175.09 |
| A:B=1:3 | 4.19+2.25x | 2.28 | 1.94-2.66 | 163.15 |
| A:B=1:10 | 3.96+2.48x | 2.64 | 2.27-3.07 | 151.22 |
| A:compound I-72 | 3.94+2.33x | 2.83 | 2.43-3.34 | - |
| B:diazinon | 1.81+2.43x | 20.54 | 17.75-23.81 | - |
| A:B=10:1 | 4.06+2.50x | 2.39 | 2.04-2.77 | 128.89 |
| A:B=3:1 | 3.86+2.52x | 2.84 | 2.45-3.31 | 127.34 |
| A:B=1:1 | 3.93+2.01x | 3.40 | 2.86-4.14 | 146.30 |
| A:B=1:3 | 3.28+2.15x | 6.29 | 5.37-7.47 | 127.52 |
| A:B=1:10 | 2.79+2.25x | 9.61 | 8.12-11.33 | 136.36 |
| A:compound I-72 | 3.94+2.33x | 2.83 | 2.43-3.34 | - |
| B:phoxim | 1.58+2.28x | 31.62 | 26.58-38.97 | - |
| A:B=10:1 | 4.26+2.34x | 4.26 | 1.77-2.42 | 148.50 |
| A:B=3:1 | 4.21+2.09x | 2.34 | 0.20-2.76 | 156.75 |
| A:B=1:1 | 3.94+2.13x | 3.16 | 2.54-33.78 | 164.57 |
| A:B=1:3 | 3.42+2.13x | 5.51 | 4.32-6.66 | 162.10 |

(continued)

| Compound or composition | Toxicity regression equation (Y=) | $LC_{50}$ (mg/L) | 95% confidence limit | Co-toxicity coefficient CTC |
|---|---|---|---|---|
| A:B=1:10 | 2.97+2.06x | 9.67 | 8.11-11.51 | 169.98 |

Example 18 Synergism assay of the mixture of the compound I-72 and organophosphorus insecticides such as chlorpyrifos against *Bemisia tabaci* (Gennadius)

Test target: *Bemisia tabaci* (Gennadius) nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with neat and consistent *Bemisia tabaci* (Gennadius) nymphs were selected and made into leaf disks, with about 20 insects on each leaf disk. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 96 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 18.

Table 18 Results of the indoor joint toxicity assay of the mixture of the compound I-72 and organophosphorus insecticides such as chlorpyrifos against *Bemisia tabaci* (Gennadius)

| Compound or composition | Toxicity regression equation (Y=) | $LC_{50}$ (mg/L) | 95% confidence limit | Co-toxicity coefficient CTC |
|---|---|---|---|---|
| A:compound I-72 | 3.16+2.61x | 5.05 | 4.38-5.83 | - |
| B:chlorpyrifos | 2.15+2.64x | 12.08 | 10.43-13.96 | - |
| A:B=10:1 | 3.78+2.22X | 3.54 | 5.91-4.20 | 152.40 |
| A:B=3:1 | 3.49+2.29x | 4.60 | 3.89-5.40 | 128.59 |
| A:B=1:1 | 3.55+2.09x | 4.92 | 4.12-5.87 | 144.80 |
| A:B=1:3 | 3.13+2.25x | 6.80 | 4.41-12.92 | 131.79 |
| A:B=1:10 | 2.86+2.38x | 7.94 | 6.69-9.80 | 135.03 |
| A:compound I-72 | 3.16+2.61x | 5.05 | 4.38-5.83 | - |
| B:acephate | 0.99+2.61x | 34.92 | 26.34-50.72 | - |
| A:B=10:1 | 3.59+2.31x | 4.06 | 3.45-4.72 | 134.85 |
| A:B=3:1 | 3.41+2.33x | 4.81 | 4.14-5.57 | 133.65 |
| A:B=1:1 | 4.48+6.22x | 5.27 | 4.48-6.22 | 167.49 |
| A:B=1:3 | 2.46+2.57x | 9.70 | 8.38-11.21 | 145.27 |
| A:B=1:10 | 2.23+2.30x | 16.00 | 13.60-19.45 | 141.99 |

Example 19 Indoor joint toxicity assay of the mixture of the compound I-72 and organophosphorus insecticides such as chlorpyrifos against *Phyllotreta* spp.

Test target: adult *Phyllotreta* spp., a sensitive strain reared indoors.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, fresh cabbage seedlings cultivated in the greenhouse were selected and evenly sprayed with the pesticide solution in the order from low dosage to high dosage according to the experimental design. After natural air-drying in the shade, they were covered with a glass cover, and uniform and healthy test insects were introduced,

with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 19.

Table 19 Results of the indoor joint toxicity assay of the mixture of the compound I-72 and 3 kinds of organophosphorus insecticides such as chlorpyrifos against *Phyllotreta* spp.

| Compound or composition | Toxicity regression equation (Y=) | $LC_{50}$ (mg/L) | 95% confidence limit | Co-toxicity coefficient CTC |
|---|---|---|---|---|
| A:compound I-72 | 3.77+2.57x | 3.01 | 2.42-3.86 | - |
| B:chlorpyrifos | 1.31+2.29x | 40.37 | 31.45-56.55 | - |
| A:B=10:1 | 4.84+2.14x | 1.19 | 0.92-1.54 | 275.86 |
| A:B=5:1 | 4.65+2.28x | 1.42 | 1.12-1.84 | 251.03 |
| A:B=3:1 | 4.50+2.34x | 1.64 | 1.29-2.16 | 239.54 |
| A:B=1:1 | 4.35+2.12x | 2.04 | 1.56-2.91 | 275.33 |
| A:B=1:3 | 3.53+2.44x | 4.02 | 3.09-5.04 | 244.87 |
| A:B=1:5 | 3.24+2.24x | 6.12 | 4.81-8.06 | 215.17 |
| A:B=1:10 | 3.02+2.18x | 8.11 | 6.26-11.51 | 233.94 |
| A:compound I-72 | 3.77+2.57x | 3.01 | 2.42-3.86 | - |
| B:acephate | 0.26+2.65x | 61.61 | 49.73-78.80 | - |
| A:B=10:1 | 4.06+2.25x | 2.63 | 2.05-3.38 | 125.55 |
| A:B=5:1 | 3.99+2.31x | 2.75 | 2.17-3.55 | 130.06 |
| A:B=1:1 | 3.62+2.29x | 4.04 | 3.13-5.61 | 142.04 |
| A:B=1:5 | 2.97+1.96x | 10.83 | 7.90-17.84 | 134.15 |
| A:B=1:10 | 1.98+2.57x | 15.06 | 12.10-19.29 | 147.76 |

Example 20 Synergism assay of the mixture of the compound I-72 and organophosphorus insecticides such as chlorpyrifos against *Hyphantria cunea*

Test target: 3rd-instar larvae of *Hyphantria cunea,* a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, fresh and tender poplar leaves were selected, cut into small sections of 5 cm, and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 20.

Table 20 Results of the indoor joint toxicity assay of the mixture of the compound I-72 and 3 kinds of organophosphorus insecticides such as chlorpyrifos against *Hyphantria cunea*

| Compound or composition | Toxicity regression equation (Y=) | $LC_{50}$ (mg/L) | 95% confidence limit | Co-toxicity coefficient CTC |
|---|---|---|---|---|
| A:compound I-72 | 2.97+2.68x | 5.74 | 4.64-7.249 | - |

(continued)

| Compound or composition | Toxicity regression equation (Y=) | $LC_{50}$ (mg/L) | 95% confidence limit | Co-toxicity coefficient CTC |
|---|---|---|---|---|
| B:chlorpyrifos | 3.18+2.52x | 5.24 | 4.18-6.62 | - |
| A:B=10:1 | 4.13+2.08x | 2.63 | 2.01-3.59 | 216.53 |
| A:B=5:1 | 4.17+1.91x | 2.73 | 2.056-3.83 | 206.98 |
| A:B=3:1 | 4.07+1.10x | 3.06 | 2.30-4.42 | 183.12 |
| A:B=1:1 | 4.02+1.93x | 3.24 | 2.43-4.74 | 169.37 |
| A:B=1:3 | 3.92+1.98x | 3.52 | 2.64-5.28 | 152.28 |
| A:B=1:5 | 3.75+2.23x | 3.58 | 2.74-5.27 | 148.53 |
| A:B=1:10 | 3.93+1.86x | 3.75 | 2.86-5.85 | 141.01 |
| A:compound I-72 | 2.97+2.68x | 5.74 | 4.64-7.249 | |
| B:triazophos | 1.82+2.70x | 15.03 | 12.17-19.09 | |
| A:B=10:1 | 3.39+2.44x | 4.58 | 0.56-5.38 | 132.77 |
| A:B=5:1 | 3.24+2.59x | 4.77 | 3.80-5.96 | 133.99 |
| A:B=3:1 | 2.96+27.91x | 5.35 | 4.32-6.67 | 126.77 |
| A:B=1:1 | 2.81+2.90x | 5.72 | 4.67-7.14 | 145.27 |
| A:B=1:3 | 7.93+2.59x | 6.29 | 5.06-8.10 | 170.00 |
| A:B=1:5 | 3.11+2.06x | 8.22 | 6.28-11.90 | 143.96 |
| A:B=1:10 | 3.07+1.96x | 9.64 | 7.16-15.06 | 135.88 |
| A:compound I-72 | 2.97+2.68x | 5.74 | 4.64-7.249 | |
| B:phoxim | 2.62+2.37x | 10.05 | 7.70-12.67 | |
| A:B=10:1 | 3.49+2.23x | 4.79 | 3.71-6.13 | 124.75 |
| A:B=5:1 | 3.38+2.32x | 4.98 | 3.90-6.35 | 124.15 |
| A:B=3:1 | 3.12+2.65x | 5.11 | 4.10-6.39 | 125.78 |
| A:B=1:1 | 3.14+2.51x | 5.52 | 4.41-7.01 | 132.36 |
| A:B=1:3 | 3.40+2.08x | 5.84 | 4.53-7.76 | 144.78 |
| A:B=1:5 | 3.18+2.22x | 6.60 | 5.17-8.83 | 135.44 |
| A:B=1:10 | 2.94+2.44x | 6.98 | 5.54-9.27 | 134.89 |

Example 21 Indoor joint toxicity assay of the mixture of the compound I-72 and organophosphorus insecticides such as chlorpyrifos against *Ostrinia furnacnlis* Guenee

Test target: 3rd-instar larvae of *Ostrinia furnacalis* Guenee, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, fresh tender corn stalks cultivated in the greenhouse were selected, cut into small sections of 3 cm, and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 21.

Table 21 Results of the indoor joint toxicity assay of the mixture of the compound I-72 and organophosphorus insecticides such as chlorpyrifos against *Ostrinia furnacnlis* Guenee

| Compound or composition | Toxicity regression equation (Y=) | $LC_{50}$ (mg/L) | 95% confidence limit | Co-toxicity coefficient CTC |
|---|---|---|---|---|
| A:compound I-72 | 4.80+2.59x | 1.19 | 0.95-1.49 | - |
| B:chlorpyrifos | 3.32+2.36x | 5.18 | 4.08-6.60 | - |
| A:B=20:1 | 5.08+2.18x | 0.92 | 0.68-1.18 | 134.40 |
| A:B=3:1 | 4.80+2.30x | 1.22 | 0.95-1.56 | 121.24 |
| A:B=1:1 | 4.66+2.31x | 1.41 | 1.11-1.82 | 137.86 |
| A:B=1:3 | 4.33+2.17x | 2.04 | 1.57-2.90 | 138.73 |
| A:B=1:20 | 4.15+1.87x | 2.83 | 2.03-4.87 | 157.69 |
| A:compound I-72 | 4.80+2.59x | 1.19 | 0.95-1.49 | - |
| B:acephate | 1.88+2.63x | 15.47 | 12.47-19.83 | - |
| A:B=10:1 | 5.30+1.97x | 0.70 | 0.50-0.92 | 185.17 |
| A:B=5:1 | 5.19+1.98x | 0.80 | 0.60-1.05 | 175.36 |
| A:B=1:1 | 4.71+2.53x | 1.30 | 1.04-1.69 | 170.53 |
| A:B=1:5 | 3.77+2.45x | 3.18 | 2.54-4.14 | 162.63 |
| A:B=1:10 | 3.74+1.81x | 4.97 | 3.61-8.10 | 149.28 |

Example 22 Indoor joint toxicity assay of the mixture of the compound I-72 and carbosulfan against *Frankliniella occidentalis* Pergande

Test subject: 2nd-instar nymphs of *Frankliniella occidentalis* Pergande, a sensitive strain reared indoors.

Preparation of the pesticide solution: according to different test requirements, the test samples in Table 1 were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Test conditions: temperature: 25-27°C, humidity: RH 60%, and illumination: L:D = 14:10

Experimental method: the spraying method was adopted. The kidney bean leaves cultivated in the greenhouse were selected, and the petioles were wrapped with moist degreased cotton and sealing film. They were evenly sprayed with the pesticide solution in the order from low dosage to high dosage according to the experimental design, placed in a 6-cm-diameter Petri dish with filter paper. After natural air-drying in the shade, the test insects were introduced, with 20 insects for each treatment and 3 replicates. In addition, a blank control was set up. The number of dead and live insects was investigated 48 hours later. The corrected mortality rate was calculated using the Abbott's formula, and the DPS data processing software was used for statistical analysis to calculate the toxicities ($LC_{50}$ values) of the single test pesticides and the mixtures under the test ratios.

Evaluation method: the Sun Yunpei (Sun Y-P) method was adopted to calculate the co-toxicity coefficient of each mixture ratio and evaluate the joint action type of each mixture, as in Example 1.

As can be seen from the table (Table 22), the mixture of the compound I-72 and carbosulfan shows a synergistic effect on *Frankliniella occidentalis* in a ratio range of 10:1-1:20.

Table 22 Results of the indoor joint toxicity assay of the mixture of the compound I-72 and carbosulfan against *Frankliniella occidentalis*

| | Toxicity regression equation (Y=a+bX) | $LC_{50}$ (mg/L) | Co-toxicity coefficient CTC |
|---|---|---|---|
| A:compound I-72 | Y=4.2045+2.3935X | 2.1496 | - |
| B:carbosulfan | Y=1.8445+1.9295X | 43.1920 | - |
| A:B=10:1 | Y=4.3312+2.3750X | 1.9125 | 123.02 |
| A:B=5:1 | Y=4.6365+1.4296X | 1.7957 | 142.23 |
| A:B=1:1 | Y=4.0163+2.0702x | 2.9866 | 137.13 |
| A:B=1:5 | Y=3.7144+1.5482X | 6.7674 | 152.61 |
| A:B=1:10 | Y=3.5486+1.3676X | 11.5161 | 137.10 |
| A:B=1:20 | Y=3.5206+1.2833X | 14.2174 | 159.12 |

Example 23 Indoor joint toxicity assay of the mixture of the compound I-72 and carbaryl against *Chilo suppressalis* (Walker)

Test target: 2nd-instar larvae of *Chilo suppressalis* (Walker). The insect source was collected from Nanchang, Jiangxi Province, and it is the 11th generation continuously cultured indoors, with a relatively high resistance level to amide pesticides such as chlorantraniliprole.

Experimental method: the spraying method was adopted. Rice stalks with the same length and thickness were selected, cut into the same length, and evenly sprayed with the pesticide solution in the order from low dosage to high dosage according to the experimental design, with 1.5 mL of the pesticide solution for each treatment. The stalks were placed in a 6-cm-diameter Petri dish with filter paper. After natural air-drying in the shade, uniform and healthy test insects were introduced, with 3 replicates for each treatment. In addition, a blank control was set up.

The treated test materials were placed in an observation room, and the temperature, humidity and illumination of the observation room could be adjusted as needed. The test conditions, the preparation of the pesticide solution and the evaluation method were the same as those in Example 1.

As can be seen from the table (Table 23), the mixture of the compound I-72 and carbaryl shows a synergistic effect on *Chilo suppressalis* (Walker) in a ratio range of 1:1-1:60.

Table 23 Results of the indoor joint toxicity assay of the mixture of the compound I-72 and carbaryl against *Chilo suppressalis* (Walker)

| | Toxicity regression equation (Y=a+bX) | $LC_{50}$ (mg/L) | Co-toxicity coefficient CTC |
|---|---|---|---|
| A:compound I-72 | Y=5.0939+1.7090X | 0.8811 | |
| B:carbaryl | Y=1.9490+1.7437X | 56.1927 | |
| A:B=1:1 | Y=5.0234+2.4954X | 0.9787 | 177.28 |
| A:B=1:10 | Y=3.2049+2.1997X | 6.5475 | 127.96 |
| A:B=1:20 | Y=3.0966+1.9825X | 9.1217 | 154.42 |
| A:B=1:40 | Y=2.5580+2.0060X | 16.4967 | 134.58 |
| A:B=1:60 | Y=2.4381+2.0203X | 18.5393 | 149.38 |

Example 24 Indoor joint toxicity assay of the mixture of the compound I-72 and fenobucarb against *Pyrrhalta aenescens*

Test target: *Pyrrhalta aenescens,* a strain reared indoors.

Experimental method: the insect-dipping method was adopted. *Pyrrhalta aenescens* of the same size were selected, put into an insect-dipping cage, and evenly sprayed with the pesticide solution in the order from low dosage to high dosage according to the experimental design, with dipping for 10 s for each treatment. They were placed in a 9-cm-diameter Petri dish with filter paper. After natural air-drying in the shade, feed was added, with 3 replicates for each treatment. In addition, a blank control was set up.

The treated test materials were placed in an observation room. The total number of test insects and the number of dead insects were investigated 24 hours later. The temperature, humidity and illumination of the observation room could be adjusted as needed. The test conditions, the preparation of the pesticide solution and the evaluation method were the same as those in Example 1.

As can be seen from the table (Table 24), the mixture of the compound I-72 and fenobucarb shows a synergistic effect on *Pyrrhalta aenescens* in a ratio range of 10:1-1:40.

Table 24 Results of the indoor joint toxicity assay of the mixture of the compound I-72 and fenobucarb against *Pyrrhalta aenescens*

| | Toxicity regression equation (Y=a+bX) | $LC_{50}$ (mg/L) | Co-toxicity coefficient CTC |
|---|---|---|---|
| A:compound I-72 | Y=4.6887+2.5090X | 1.3307 | |
| B:fenobucarb | Y=2.8101+1.3946X | 37.1749 | |
| A:B=10:1 | Y=5.2886+2.4470X | 0.7622 | 191.36 |
| A:B=5:1 | Y=5.1729+2.0364X | 0.8224 | 192.79 |
| A:B=1:1 | Y=4.5927+1.8755X | 1.6488 | 155.84 |
| A:B=1:10 | Y=3.7728+1.8880X | 4.4671 | 241.30 |
| A:B=1:20 | Y=2.6089+2.5890X | 8.3868 | 194.18 |

(continued)

| | Toxicity regression equation (Y=a+bX) | $LC_{50}$ (mg/L) | Co-toxicity coefficient CTC |
|---|---|---|---|
| A:B=1:40 | Y=3.0096+2.0071X | 9.8106 | 228.68 |

Example 25 Indoor joint toxicity assay of the mixture of the compound I72 and spirodiclofen against *Tetranychus cinnabarinus* (Boisduval)

Test target: adult *Tetranychus cinnabarinus* (Boisduval), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the adult *Tetranychus cinnabarinus* (Boisduval) was determined by adopting the potted-seedling spraying method. First, the adult Tetranychus cinnabarinus of uniform size were transferred onto the leaves of kidney bean seedlings at the stage when the first pair of true leaves was fully expanded. After the adult mites had stabilized, the base number was counted. Then, the uniform spraying was performed with the pesticide solution in the order from low to high dose according to the experimental design, with 1.5 mL for each seedling and 3 replicates for each treatment. In addition, a blank control was set up.

The treated test materials were placed in an observation room, and the temperature, humidity and illumination of the observation room could be adjusted as needed. The number of dead and live mites was investigated after 72 hours. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 25.

Table 25 Results of the indoor joint toxicity assay of the mixture of the compound I72 and spirodiclofen against *Tetranychus cinnabarinus* (Boisduval)

| | Toxicity regression equation (Y=) | $LC_{50}$ (mg/L) | 95% confidence limit | Co-toxicity coefficient CTC |
|---|---|---|---|---|
| A:compound I-72 | 1.7843+2.0802X | 35.1420 | 29.2416-44.6171 | - |
| B:spirodiclofen | 2.4084+2.2314X | 14.5033 | 13.0081-16.2500 | - |
| A:B=50:1 | 1.9210+2.5114X | 16.8267 | 15.1059-18.9347 | 203.1777 |
| A:B=10:1 | 2.3584+2.2024X | 15.8274 | 14.1271-17.8833 | 196.5998 |
| A:B=5:1 | 2.5307+2.1237X | 14.5457 | 12.9139-16.4797 | 195.2816 |
| A:B=3:1 | 2.5554+2.2004X | 12.9113 | 11.5963-14.3904 | 200.7594 |
| A:B=1:1 | 2.5455+2.4423X | 10.1156 | 9.0203-11.2665 | 202.9806 |
| A:B=1:3 | 2.4037+2.7840X | 8.5622 | 7.7508-9.5533 | 198.5371 |
| A:B=1:5 | 2.4223+2.7946X | 8.3638 | 7.5834-9.3057 | 192.2208 |
| A:B=1:10 | 2.5536+2.7080X | 8.0057 | 7.2737-8.8745 | 191.3805 |
| A:B=1:50 | 2.6070+2.7255X | 7.5511 | 6.8637-8.3546 | 194.3070 |

Example 26 Indoor joint toxicity assay of the mixture of the compound I-72 and spirotetramat against *Thrips flavus* Schrank

Test target: *Thrips flavus* Schrank nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, eggplant seedlings with *Thrips flavus* Schrank were selected, and the base number was counted. Then, uniform spraying was performed with the pesticide solution in the order from low to high doses according to the experimental design, with 2 mL for each seedling and 3 replicates for each treatment. In addition, a blank control was set up.

The treated test materials were placed in an observation room, and the temperature, humidity and illumination of

the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 26.

Table 26 Results of the indoor joint toxicity assay of the mixture of the compound I72 and spirotetramat against *Thrips flavus* Schrank

| | Toxicity regression equation (Y=) | $LC_{50}$ (mg/L) | 95% confidence limit | Co-toxicity coefficient CTC |
|---|---|---|---|---|
| A:compound I-72 | 4.2065+2.5591X | 2.0420 | 1.7715-2.4202 | - |
| B:spirotetramat | 2.4421+2.3484X | 12.2815 | 10.6948-14.0901 | - |
| A:B=20:1 | 4.9487+2.3538X | 1.0514 | 0.9020-1.2131 | 202.2406 |
| A:B=10:1 | 4.9199+2.0676X | 1.0933 | 0.9278-1.2769 | 202.0851 |
| A:B=5:1 | 4.8245+2.1013X | 1.2121 | 1.0307-1.4225 | 195.6543 |
| A:B=3:1 | 4.7276+2.1922X | 1.3312 | 1.1451-1.5533 | 193.7852 |
| A:B=1:1 | 4.4530+2.3713X | 1.7009 | 1.4693-2.0073 | 205.8845 |
| A:B=1:3 | 3.9078+2.4990X | 2.7356 | 2.3850-3.1533 | 199.2179 |
| A:B=1:5 | 3.6930+2.4502X | 3.4154 | 2.9688-3.9977 | 195.8856 |
| A:B=1:10 | 3.2114+2.7964X | 4.3612 | 3.7656-5.2264 | 193.4302 |
| A:B=1:20 | 3.2040+2.5251X | 5.1438 | 4.3418-6.4042 | 192.7392 |

Example 27 Indoor joint toxicity assay of the mixture of the compound I-72 and spiromesifen against *Bemisia tabaci* (Gennadius) nymphs

Test target: *Bemisia tabaci* (Gennadius) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with neat and consistent *Bemisia tabaci* (Gennadius) nymphs were selected and made into leaf disks, with about 20 insects on each leaf disk. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 96 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 27.

Table 27 Results of the indoor joint toxicity assay of the mixture of the compound I-72 and spiromesifen against *Bemisia tabaci* (Gennadius) nymphs

| | Toxicity regression equation (Y=) | $LC_{50}$ (mg/L) | 95% confidence limit | Co-toxicity coefficient CTC |
|---|---|---|---|---|
| A:compound I-72 | 2.6309+2.2036X | 11.8878 | 10.2122-13.7976 | - |
| B:spiromesifen | 2.8223+2.1215X | 10.6291 | 9.0044-12.4161 | - |
| A:B=10:1 | 3.6007+1.8284X | 5.8253 | 4.4073-7.2142 | 201.8980 |
| A:B=5:1 | 3.4066+2.0622X | 5.9244 | 4.5651-7.2449 | 196.7738 |
| A:B=3:1 | 3.4340+2.0474X | 5.8196 | 4.4876-7.1089 | 198.3982 |
| A:B=1:1 | 3.4552+2.0718X | 5.5668 | 4.2149-6.8732 | 201.6097 |
| A:B=1:3 | 3.4909+2.0317X | 5.5308 | 4.1947-6.8196 | 197.4054 |
| A:B=1:5 | 3.4874+2.0345X | 5.5396 | 4.1690-6.8549 | 195.3238 |

(continued)

| | Toxicity regression equation (Y=) | $LC_{50}$ (mg/L) | 95% confidence limit | Co-toxicity coefficient CTC |
|---|---|---|---|---|
| A:B=1:10 | 3.4079+2.1339X | 5.5731 | 4.2580-6.8339 | 192.5743 |

Example 28 Indoor joint toxicity assay of the mixture of the compound I-72 and spiropidion against *Aphis gossypii* Glover nymphs

Test target: *Aphis gossypii* Glover nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with uniform and consistent *Aphis gossypii* were selected, with about 30-40 insects on each leaf. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 28.

Table 28 Results of the indoor joint toxicity assay of the mixture of the compound I72 and spiropidion against *Aphis gossypii* Glover nymphs

| | Toxicity regression equation (Y=) | $LC_{50}$ (mg/L) | 95% confidence limit | Co-toxicity coefficient CTC |
|---|---|---|---|---|
| A:compound I-72 | 4.0167+1.9535X | 3.1869 | 2.6859-3.6950 | |
| B:spiropidion | 3.3591+2.3871X | 4.8686 | 4.3509-5.4426 | |
| A:B=10:1 | 4.5639+1.9116X | 1.6910 | 1.2786-2.0896 | 194.5701 |
| A:B=5:1 | 4.5167+1.9508X | 1.7690 | 1.3630-2.1604 | 191.1588 |
| A:B=3:1 | 4.5130+1.9013X | 1.8035 | 1.3920-2.2000 | 193.4074 |
| A:B=1:1 | 4.4243+1.9480X | 1.9749 | 1.5650-2.3715 | 195.0596 |
| A:B=1:3 | 4.3417+1.8921X | 2.2280 | 1.8035-2.6433 | 193.0513 |
| A:B=1:5 | 4.3203+1.8305X | 2.3512 | 1.9107-2.7830 | 190.3295 |
| A:B=1:10 | 4.3045+1.8135X | 2.4185 | 1.9757-2.8546 | 192.0955 |

Example 29 Indoor joint toxicity assay of the mixture of the compound I72 and spirobudifen against *Tetranychus urticae* Koch

Test target: adult *Tetranychus urticae* Koch, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the adult *Tetranychus urticae* Koch was determined by adopting the potted-seedling spraying method. First, the adult *Tetranychus urticae* Koch of uniform size were transferred onto the leaves of kidney bean seedlings at the stage when the first pair of true leaves was fully expanded. After the adult mites had stabilized, the base number was counted. Then, the uniform spraying was performed with the pesticide solution in the order from low to high dose according to the experimental design, with 1.5 mL for each seedling and 3 replicates for each treatment. In addition, a blank control was set up.

The treated test materials were placed in an observation room, and the temperature, humidity and illumination of the observation room could be adjusted as needed. The number of dead and live mites was investigated after 72 hours.

The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 29.

Table 29 Results of the indoor joint toxicity assay of the mixture of the compound I72 and spirobudifen against *Tetranychus urticae* Koch

| | Toxicity regression equation (Y=) | $LC_{50}$ (mg/L) | 95% confidence limit | Co-toxicity coefficient CTC |
|---|---|---|---|---|
| A:compound I-72 | 1.7169+2.0275X | 41.6151 | 33.3699-56.1459 | - |
| B:spirotetramat | 2.4636+ 2.7759X | 8.1988 | 7.2708-9.1190 | - |
| A:B=10:1 | 1.8802+2.5268X | 17.1651 | 15.4186-19.3127 | 176.8962 |
| A:B=5:1 | 2.3066+2.2755X | 15.2625 | 13.6554-17.1770 | 162.3675 |
| A:B=3:1 | 2.6227+2.1423X | 12.8732 | 11.4776-14.4531 | 160.1190 |
| A:B=1:1 | 2.6749+2.5650X | 8.0627 | 7.0896-9.0305 | 169.9037 |
| A:B=1:3 | 3.2847+2.2039X | 6.0024 | 4.9962-6.9771 | 170.8992 |
| A:B=1:5 | 3.3528+2.1919X | 5.6430 | 4.6720-6.5822 | 167.7416 |
| A:B=1:10 | 3.4349+2.1323X | 5.4200 | 4.4172-6.3881 | 163.1812 |

Example 30 Indoor joint toxicity assay of the mixture of the compound I-72 and spirotetramat against *Unaspis yanonensis* Kuwana

Test target: *Unaspis yanonensis* Kuwana nymphs.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: the activity of the mixture against *Unaspis yanonensis* Kuwana nymphs on citrus was determined by adopting the dipping method. First, the collected citrus leaves with *Unaspis yanonensis* Kuwana nymphs were treated with the pesticide solution in the order from low dosage to high dosage according to the experimental design. After air-drying, the petioles were kept moist with degreased cotton, and then the leaves were placed in a Petri dish, with 3 replicates for each treatment. **In** addition, a blank control was set up.

The treated test materials were placed in an observation room, and the temperature, humidity and illumination of the observation room could be adjusted as needed. The number of dead and live insects was investigated 120 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 30.

Table 30 Results of the indoor joint toxicity assay of the mixture of the compound I-72 and spirotetramat against *Unaspis yanonensis* Kuwana

| | Toxicity regression equation (Y=) | $LC_{50}$ (mg/L) | 95% confidence limit | Co-toxicity coefficient CTC |
|---|---|---|---|---|
| A:compound I-72 | 0.6105+2.3398X | 75.1676 | 59.3283-105.5383 | - |
| B:spirotetramat | 2.4003+2.7341X | 8.9093 | 7.6848-10.1904 | - |
| A:B=10:1 | 1.9869+2.1673X | 24.5592 | 20.5140-30.9356 | 182.7953 |
| A:B=5:1 | 1.4127+2.7463X | 20.2394 | 17.4959-24.1295 | 166.0708 |
| A:B=1:1 | 2.5348+2.7033X | 8.1639 | 6.9228-9.3956 | 195.5239 |
| A:B=1:5 | 3.3159+2.1485X | 6.0790 | 5.1984-7.0961 | 172.1743 |
| A:B=1:10 | 3.3601+2.1430X | 5.8238 | 4.9649-6.8007 | 166.6754 |

Example 31 Indoor joint toxicity assay of the mixture of the compound I-72 and spiropidion against *Plutella xylostella*

Test target: 2nd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 31.

Table 31 Results of the indoor joint toxicity assay of the mixture of the compound I-72 and spiropidion against *Plutella xylostella*

| | Toxicity regression equation (Y=) | $LC_{50}$ (mg/L) | 95% confidence limit | Co-toxicity coefficient CTC |
|---|---|---|---|---|
| A:compound I-72 | 7.1855+2.0670X | 0.0876 | 0.0630-0.1139 | - |
| B:spiropidion | 0.8929+1.4666X | 631.4873 | 344.1308-2706.4833 | - |
| A:B=10:1 | 7.3370+1.9972X | 0.0676 | 0.0443-0.0903 | 142.6162 |
| A:B=5:1 | 7.0481+1.8422X | 0.0773 | 0.0516-0.1036 | 136.0222 |
| A:B=1:1 | 6.8924+2.1063X | 0.1263 | 0.0812-0.1693 | 138.7061 |
| A:B=1:5 | 6.0009+2.4737X | 0.3939 | 0.1916-0.5746 | 133.3813 |
| A:B=1:10 | 5.3726+2.2889X | 0.6874 | 0.4677-0.8969 | 140.0371 |

Example 32 In vitro joint toxicity assay of the mixture of I-72 and fluopyram against *Meloidogyne incognita*

Test target: second-instar larvae of meloidogyne incognita, a sensitive strain reared in a greenhouse.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the prepared pesticide solutions were added to a 24-well plate in the order from low dosage to high dosage according to the experimental design. In each well of each treatment, 50 nematodes were placed. Each drug had 5 concentrations set, with 3 replicates. After the treatment, the 24-well plate was placed in a constant temperature incubator at 25°C. In addition, a blank control group was set up. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 32.

Table 32 Results of the in vitro joint toxicity assay of the mixture of I-72 and fluopyram against *Meloidogyne incognita*

| | Toxicity regression equation (Y=) | $LC_{50}$ (mg/L) | Co-toxicity coefficient CTC |
|---|---|---|---|
| A:I-72 | -2.8760+3.2874X | 248.7943 | - |
| B:fluopyram | 5.4501+2.0906X | 0.6091 | - |
| A:B=10:1 | 3.8809+1.8413X | 4.0530 | 161.36 |
| A:B=5:1 | 4.3295+1.8458X | 2.3081 | 156.42 |
| A:B=3:1 | 4.8679+2.4366X | 1.1330 | 160.49 |
| A:B=1:1 | 5.0101+2.5142X | 0.9908 | 122.65 |
| A:B=1:3 | 5.4286+2.0240X | 0.6164 | 148.04 |
| A:B=1:5 | 5.5555+2.0663X | 0.5385 | 135.67 |

(continued)

| | Toxicity regression equation (Y=) | $LC_{50}$ (mg/L) | Co-toxicity coefficient CTC |
|---|---|---|---|
| A:B=1:10 | 5.5213+1.6003X | 0.4723 | 141.83 |

Example 33 Indoor joint toxicity assay of the mixture of the compound I-72 and d-limonene against adult *Bemisia tabaci* (Gennadius)

Test subject: adult *Bemisia tabaci* (Gennadius), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Test conditions: temperature: 25-27°C, humidity: RH 60%, and illumination: L:D = 14:10

Experimental method: the spraying method was adopted. The kidney bean seedlings cultivated in the greenhouse were selected and evenly sprayed with the pesticide solution in the order from low dosage to high dosage according to the experimental design. After natural air-drying in the shade, a self-made glass cover was put on, and the test insects were introduced, with 20-30 insects for each treatment and 3 replicates. In addition, a blank control was set up. The number of dead and live insects was investigated 72 hours later. The corrected mortality rate was calculated using the Abbott's formula, and the DPS data processing software was used for statistical analysis to calculate the toxicities ($LC_{50}$ values) of the single test pesticides and the mixtures under the test ratios.

Evaluation method: the Sun Yunpei (Sun Y-P) method was adopted to calculate the co-toxicity coefficient of each mixture ratio and evaluate the joint action type of each mixture, as in Example 1.

As can be seen from the table (Table 33), the mixture of the compound I-72 and d-limonene shows a significant synergistic effect on adult *Bemisia tabaci* (Gennadius) in a ratio range of 10:1-1:10.

Table 33 Results of the indoor joint toxicity assay of the mixture of the compound I-72 and d-limonene against adult *Bemisia tabaci* (Gennadius)

| Treatment | Toxicity regression equation (Y=a+bX) | $LC_{50}$ (mg/L) | Co-toxicity coefficient CTC |
|---|---|---|---|
| A:compound I-72 | Y=4.2668+1.5825X | 2.9061 | - |
| B:d-limonene | Y=3.4011+1.8450X | 7.3553 | - |
| A:B=10:1 | Y=4.5819+1.4108X | 1.9785 | 155.43 |
| A:B=5:1 | Y=4.6113+1.2963X | 1.9946 | 162.03 |
| A:B=2:1 | Y=4.4132+1.4810X | 2.4899 | 146.19 |
| A:B=1:1 | Y=4.3098+1.7593X | 2.4678 | 168.82 |
| A:B=1:2 | Y=4.2086+1.5865X | 3.1537 | 154.42 |
| A:B=1:5 | Y=4.1887+1.6048X | 3.2030 | 182.95 |
| A:B=1:10 | Y=4.1558+1.6046X | 3.3581 | 192.27 |

Example 34 Indoor joint toxicity assay of the mixture of the compound I-72 and matrine against *Myzus persicae* (Sulzer)

Test subject: mixed aphids of *Myzus persicae* (Sulzer), a sensitive strain reared indoors.

Experimental method: the spraying method on leaves with aphids was adopted. Cabbage leaves with a certain number of *Myzus persicae* (Sulzer) were taken. The prepared pesticide solutions were evenly sprayed on both the front and back sides of the leaves in the order from low concentration to high concentration according to the experimental design. Then, the leaves were placed in a 6-cm-diameter Petri dish with filter paper. After natural air-drying in the shade, they were placed in the observation room. The experiment had 3 replicates set, and in addition, a blank control was set up. The number of dead and live insects was investigated 48 hours later. The corrected mortality rate was calculated using the Abbott's formula, and the DPS data processing software was used for statistical analysis to calculate the toxicities ($LC_{50}$ values) of the single test pesticides and the mixtures under the test ratios.

The test conditions, the preparation of the pesticide solution and the evaluation method were the same as those in Example 1.

As can be seen from the table (Table 34), the mixture of the compound I-72 and matrine shows a significant synergistic effect on *Myzus persicae* (Sulzer) in a ratio range of 10:1-1:10.

Table 34 Results of the indoor joint toxicity assay of the mixture of the compound I-72 and matrine against aphids

| Treatment | Toxicity regression equation (Y=a+bX) | $LC_{50}$ (mg/L) | Co-toxicity coefficient CTC |
|---|---|---|---|
| A:compound I-72 | Y=3.6516+1.6780X | 6.3617 | |
| B:matrine | Y=3.9095+2.1373X | 3.2375 | |
| A:B=10:1 | Y=4.5409+1.0840X | 2.6519 | 220.54 |
| A:B=5:1 | Y=4.375 1+1.6362X | 2.4095 | 227.44 |
| A:B=1:1 | Y=4.4137+2.2381X | 1.8280 | 234.75 |
| A:B=1:5 | Y=4.2267+2.2845X | 2.1803 | 161.73 |
| A:B=1:10 | Y=4.5771+2.0327X | 1.6146 | 209.88 |

Example 35 Indoor joint toxicity assay of the mixture of the compound I-72 and rotenone against *Phyllotreta striolata* (Walker)

Test target: adult *Phyllotreta striolata* (Walker), a strain reared indoors.

Experimental method: the dipping method was adopted. Adult flea beetles of uniform size were put into an insect-dipping cage and dipped for 10 s in the order from low dosage to high dosage according to the experimental design, with 30 beetles for each treatment. The beetles were placed in a 9-cm-diameter Petri dish with filter paper, with 3 replicates for each treatment. In addition, a blank control was set up. The treated test materials were placed in an observation room, and the temperature, humidity and illumination of the observation room could be adjusted as needed.

The test conditions, the preparation of the pesticide solution and the evaluation method were the same as those in Example 1.

It can be seen from the table (Table 35) that the mixture of the compound I-72 and rotenone shows a synergistic effect on *Phyllotreta striolata* (Walker) at a ratio of 1:10-10:1.

Table 35 Results of the indoor joint toxicity assay of the mixture of the compound I-72 and rotenone against *Phyllotreta striolata* (Walker)

| Treatment | Toxicity regression equation (Y=a+bX) | $LC_{50}$ (mg/L) | Co-toxicity coefficient CTC |
|---|---|---|---|
| A:compound I-72 | Y=4.5275+1.8351X | 1.8091 | - |
| B:rotenone | Y=1.9459+2.3665X | 19.5243 | - |
| A:B=10:1 | Y=4.8987+1.9759X | 1.1253 | 175.22 |
| A:B=5:1 | Y=4.8587+2.1601X | 1.1625 | 183.35 |
| A:B=1:1 | Y=4.6717+1.7889X | 1.5259 | 217.01 |
| A:B=1:5 | Y=4.0321+1.7730X | 3.5149 | 211.04 |
| A:B=1:10 | Y=3.9408+1.6464X | 4.3988 | 234.82 |

Example 36 Indoor joint toxicity assay of the mixture of the compound I-72 and azadirachtin against *Chilo suppressalis* (Walker)

Test target: 2nd-instar larvae of *Chilo suppressalis* (Walker). The insect source was collected from Nanchang, Jiangxi Province, and it is the 11th generation continuously cultured indoors, with a relatively high resistance level to amide pesticides such as chlorantraniliprole.

Experimental method: the spraying method was adopted. Rice stalks with the same length and thickness were selected, cut into the same length, and evenly sprayed with the pesticide solution in the order from low dosage to high dosage according to the experimental design, with 1.5 mL of the pesticide solution for each treatment. The stalks were placed in a 6-cm-diameter Petri dish with filter paper. After natural air-drying in the shade, uniform and healthy test insects were introduced, with 10 insects for each treatment and 4 replicates for each treatment. In addition, a blank control was set up. The number of dead and live insects was investigated 72 hours later. The corrected mortality rate was calculated using the Abbott's formula, and the DPS data processing software was used for statistical analysis to calculate the toxicities ($LC_{50}$ values) of the single test pesticides and the mixtures under the test ratios.

The test conditions, the preparation of the pesticide solution and the evaluation method were the same as those in Example 1.

It can be seen from the table (Table 36) that the mixture of the compound I-72 and azadirachtin shows a synergistic effect on *Chilo suppressalis* (Walker) in a ratio range of 1:20-20:1.

Table 36 Results of the indoor joint toxicity assay of the mixture of the compound I-72 and azadirachtin against *Chilo suppressalis* (Walker)

| Treatment | Toxicity regression equation (Y=a+bX) | $LC_{50}$ (mg/L) | Co-toxicity coefficient CTC |
|---|---|---|---|
| A:compound I-72 | Y=5.1591+1.8698X | 0.8220 | - |
| B:azadirachtin | Y=2.9333+1.5281X | 22.5149 | - |
| A:B=20:1 | Y=5.5860+2.0050X | 0.5102 | 168.86 |
| A:B=10:1 | Y=5.4468+2.0876X | 0.6109 | 147.47 |
| A:B=5:1 | Y=5.2293+1.8749X | 0.7545 | 129.79 |
| A:B=1:1 | Y=5.1485+2.1399X | 0.8523 | 186.10 |
| A:B=1:5 | Y=4.4754+1.7866X | 1.9661 | 212.13 |
| A:B=1:10 | Y=4.1164+1.8743X | 2.9610 | 223.70 |
| A:B=1:20 | Y=3.8234+1.7732X | 4.6086 | 216.49 |

Example 37 Indoor synergism screening test of the mixture of the compound I-72 and different pyrethroid insecticides against *Yponomeuta evonymallus* (Linnaeus)

Test target: 3rd-instar larvae of *Yponomeuta evonymallus* (Linnaeus).

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: Firstly, *Hylotelephium spectabile* leaves were selected and dipped into the prepared pesticide solutions for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control (CK) was set up.

The treated test materials were placed in an observation room, and the temperature, humidity and illumination of the observation room could be adjusted as needed. The number of dead and alive insects was investigated 72 hours later, and the corrected mortality rate was calculated using the Abbott's formula.

The synergism of the mixture was evaluated by the Bliss method. According to the concept of independent joint action he proposed, Bliss believes that the theoretical mortality rate P when insecticides are used in combination can be calculated by the following formula:

$$P = Pm + Pn\,(1-Pm)$$

Pm is the measured mortality rate (%) of the target when the first active ingredient is at a concentration of m; and Pn is the measured mortality rate (%) of the target when the second active ingredient is used at a concentration of n.

If the actual mortality rate of the target after the two active ingredients are mixed at a certain concentration is greater than theoretical mortality rate P, it is determined that the two active ingredients have a synergistic effect when used in combination at the set concentration, and otherwise, they have an antagonistic effect. The test results are shown in Table 37.

Table 37 Results of indoor synergism screening of the mixture of the compound I-72 and different pyrethroid insecticides against *Yponomeuta evonymallus* (Linnaeus)

| Test pesticide | Concentration (mg/L) | Measured mortality rate (%) | Theoretical mortality rate (%) | Synergism |
|---|---|---|---|---|
| Compound I-72 | 5 | 57.1 | / | / |
| | 0.1 | 11.1 | / | / |
| Gamma-cyhalothrin | 5 | 48.3 | / | / |
| | 0.1 | 6.9 | / | / |

(continued)

| Test pesticide | Concentration (mg/L) | Measured mortality rate (%) | Theoretical mortality rate (%) | Synergism |
|---|---|---|---|---|
| Fenpropathrin | 5 | 40.7 | / | / |
| | 1 | 22.6 | / | / |
| | 0.5 | 13.3 | / | / |
| Lambda-cyhalothrin | 5 | 53.3 | / | / |
| | 2 | 39.3 | / | / |
| | 0.25 | 16.1 | / | / |
| Beta-cyfluthrin | 5 | 51.6 | / | / |
| | 1 | 21.4 | / | / |
| | 0.5 | 12.9 | / | / |
| Cyfluthrin | 5 | 48.4 | / | / |
| | 1 | 18.8 | / | / |
| | 0.5 | 10.0 | / | / |
| Esfenvalerate | 5 | 40.0 | / | / |
| | 1 | 13.8 | / | / |
| | 0.5 | 9.4 | / | / |
| Alpha-cypermethrin | 5 | 43.8 | / | / |
| | 1 | 19.4 | / | / |
| | 0.5 | 9.1 | / | / |
| Theta-cypermethrin | 5 | 46.4 | / | / |
| | 1 | 16.7 | / | / |
| | 0.5 | 10.3 | / | / |
| Compound I-72 + gamma-cyhalothrin | 0.1+5 | 71.0 | 54.0 | Synergistic effect |
| | 5+5 | 92.6 | 77.8 | Synergistic effect |
| | 5+0.1 | 76.7 | 60.1 | Synergistic effect |
| Compound I-72 + fenpropathrin | 0.1+1 | 58.1 | 31.2 | Synergistic effect |
| | 5+5 | 89.7 | 74.6 | Synergistic effect |
| | 5+0.5 | 82.8 | 62.9 | Synergistic effect |
| Compound I-72 + lambda-cyhalothrin | 0.1+2 | 66.7 | 46.0 | Synergistic effect |
| | 5+5 | 96.4 | 80.0 | Synergistic effect |
| | 5+0.25 | 83.9 | 64.1 | Synergistic effect |
| Compound I-72 + beta-cyfluthrin | 0.1+1 | 50.0 | 30.2 | Synergistic effect |
| | 5+5 | 96.8 | 79.3 | Synergistic effect |
| | 5+0.5 | 85.7 | 62.7 | Synergistic effect |
| Compound I-72 + cyfluthrin | 0.1+1 | 41.4 | 27.8 | Synergistic effect |
| | 5+5 | 93.1 | 77.9 | Synergistic effect |
| | 5+0.5 | 87.1 | 61.4 | Synergistic effect |
| Compound I-72 + esfenvalerate | 0.1+1 | 43.3 | 23.4 | Synergistic effect |
| | 5+5 | 92.9 | 74.3 | Synergistic effect |
| | 5+0.5 | 80.6 | 61.2 | Synergistic effect |

(continued)

| Test pesticide | Concentration (mg/L) | Measured mortality rate (%) | Theoretical mortality rate (%) | Synergism |
|---|---|---|---|---|
| Compound I-72 + alpha-cypermethrin | 0.1+1 | 45.5 | 28.3 | Synergistic effect |
| | 5+5 | 86.7 | 75.9 | Synergistic effect |
| | 5+0.5 | 81.3 | 61.0 | Synergistic effect |
| Compound I-72 + theta-cypermethrin | 0.1+1 | 57.6 | 25.9 | Synergistic effect |
| | 5+5 | 93.5 | 77.0 | Synergistic effect |
| | 5+0.5 | 90.6 | 61.6 | Synergistic effect |
| CK | - | 0 | - | - |

Example 38 Indoor synergism screening test of the mixture of the compound I-72 and different pyrethroid insecticides against *Aphis craccivora*

Test target: *Aphis craccivora* nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, broad bean seedlings with uniform and consistent *Aphis craccivora* were selected, with about 30-40 insects on each seedling. Then, they were evenly sprayed with the pesticide solution in the order from low dosage to high dosage according to the experimental design, with 1.5 mL of the solution for each leaf and 3 replicates for each treatment. In addition, a blank control (CK) was set up.

The treated test materials were placed in an observation room, and the temperature, humidity and illumination of the observation room could be adjusted as needed. The number of dead and alive insects was investigated 48 hours later, and the corrected mortality rate was calculated using the Abbott's formula.

The synergism of the mixture was evaluated by adopting the Bliss method, as in Example 5. The test results are shown in Table 38.

Table 38 Results of indoor synergism screening of the mixture of the compound I-72 and different pyrethroid insecticides against *Aphis craccivora*

| Test pesticide | Concentration (mg/L) | Measured mortality rate (%) | Theoretical mortality rate (%) | Synergism |
|---|---|---|---|---|
| Compound I-72 | 3 | 60.6 | / | / |
| | 0.1 | 11.9 | / | / |
| Bifenthrin | 3 | 62.0 | / | / |
| | 2 | 49.1 | / | / |
| | 0.15 | 10.0 | / | / |
| Beta-cypermethrin | 1 | 49.7 | / | / |
| | 0.3 | 16.1 | / | / |
| Cypermethrin | 2 | 60.9 | / | / |
| | 0.15 | 13.3 | / | / |
| Etofenprox | 2 | 49.5 | / | / |
| | 0.15 | 14.0 | / | / |
| Deltamethrin | 3 | 61.4 | / | / |
| | 1 | 28.0 | / | / |
| | 0.3 | 17.3 | / | / |

(continued)

| Test pesticide | Concentration (mg/L) | Measured mortality rate (%) | Theoretical mortality rate (%) | Synergism |
|---|---|---|---|---|
| Pyrethrin | 3 | 63.0 | / | / |
| | 1 | 25.6 | / | / |
| | 0.3 | 15.6 | / | / |
| Zeta-cypermethrin | 2 | 64.5 | / | / |
| | 0.15 | 17.1 | / | / |
| Fenvalerate | 3 | 51.1 | / | / |
| | 1 | 29.0 | / | / |
| | 0.3 | 14.7 | / | / |
| Permethrin | 3 | 64.8 | / | / |
| | 1 | 25.3 | / | / |
| | 0.3 | 12.0 | / | / |
| | 0.1+2 | 74.0 | 55.1 | Synergistic effect |
| Compound I-72 + bifenthrin | 3+3 | 97.8 | 85.0 | Synergistic effect |
| | 3+0.15 | 85.8 | 64.5 | Synergistic effect |
| Compound I-72 + beta-cypermethrin | 0.1+1 | 74.7 | 55.7 | Synergistic effect |
| | 3+0.3 | 88.6 | 66.9 | Synergistic effect |
| Compound I-72 + cypermethrin | 0.1+2 | 81.5 | 65.5 | Synergistic effect |
| | 3+0.15 | 86.8 | 65.9 | Synergistic effect |
| Compound I-72 + etofenprox | 0.1+2 | 78.9 | 55.5 | Synergistic effect |
| | 3+0.15 | 82.8 | 66.1 | Synergistic effect |
| Compound I-72 + deltamethrin | 0.1+1 | 57.8 | 36.6 | Synergistic effect |
| | 3+3 | 97.2 | 84.8 | Synergistic effect |
| | 3+0.3 | 86.7 | 67.4 | Synergistic effect |
| Compound I-72 + pyrethrin | 0.1+1 | 53.8 | 34.5 | Synergistic effect |
| | 3+3 | 98.8 | 85.4 | Synergistic effect |
| | 3+0.3 | 88.8 | 66.7 | Synergistic effect |
| Compound I-72 + zeta-cypermethrin | 0.1+2 | 84.7 | 68.7 | Synergistic effect |
| | 3+0.15 | 88.1 | 67.4 | Synergistic effect |
| Compound I-72 + fenvalerate | 0.1+1 | 61.3 | 37.5 | Synergistic effect |
| | 3+3 | 97.1 | 80.7 | Synergistic effect |
| | 3+0.3 | 84.3 | 66.4 | Synergistic effect |
| Compound I-72 + permethrin | 0.1+1 | 53.0 | 34.3 | Synergistic effect |
| | 3+3 | 97.9 | 86.1 | Synergistic effect |
| | 3+0.3 | 83.7 | 65.3 | Synergistic effect |
| CK | - | 0 | - | - |

Example 39 Indoor joint toxicity assay of the mixture of the compound I-72 and fenpropathrin against *Tetranychus cinnabarinus* (Boisduval)

Test target: adult *Tetranychus cinnabarinus* (Boisduval), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the adult *Tetranychus cinnabarinus* (Boisduval) was determined by adopting the potted-seedling spraying method. First, the adult Tetranychus cinnabarinus of uniform size were transferred onto the leaves of kidney bean seedlings at the stage when the first pair of true leaves was fully expanded. After the adult mites had stabilized, the base number was counted. Then, the uniform spraying was performed with the pesticide solution in the order from low to high dose according to the experimental design, with 1.5 mL for each seedling and 3 replicates for each treatment. In addition, a blank control was set up.

The treated test materials were placed in an observation room, and the temperature, humidity and illumination of the observation room could be adjusted as needed. The number of dead and live mites was investigated after 72 hours. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 39.

Table 39 Results of the indoor joint toxicity assay of the mixture of the compound I-72 and fenpropathrin against *Tetranychus cinnabarinus* (Boisduval)

| | Toxicity regression equation (Y=) | $LC_{50}$ (mg/L) | 95% confidence limit | Co-toxicity coefficient CTC |
|---|---|---|---|---|
| A:compound I-72 | 1.3351+2.3901X | 34.1482 | 30.8084-38.1936 | - |
| B:fenpropathrin | 3.0106+2.6820X | 5.5177 | 4.9970-6.0718 | - |
| A:B=10:1 | 2.5335+2.3454X | 11.2633 | 10.1214-12.4940 | 206.0053 |
| A:B=5:1 | 2.6834+2.3228X | 9.9379 | 8.8919-11.0312 | 184.2640 |
| A:B=1:1 | 3.2291+2.4277X | 5.3636 | 4.8349-5.9245 | 177.1271 |
| A:B=1:5 | 3.1740+2.9486X | 4.1619 | 3.7257-4.5934 | 154.1125 |
| A:B=1:10 | 3.4468+2.6186X | 3.9185 | 3.4642-4.3676 | 152.4281 |

Example 40 Indoor joint toxicity assay of the mixture of the compound I-72 and bifenthrin against *Bemisia tabaci* (Gennadius)

Test target: *Bemisia tabaci* (Gennadius) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with neat and consistent *Bemisia tabaci* (Gennadius) nymphs were selected and made into leaf disks, with about 20 insects on each leaf disk. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 96 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 40.

Table 40 Results of the indoor joint toxicity assay of the mixture of the compound I-72 and bifenthrin against *Bemisia tabaci* (Gennadius)

| | Toxicity regression equation (Y=) | $LC_{50}$ (mg/L) | 95% confidence limit | Co-toxicity coefficient CTC |
|---|---|---|---|---|
| A:compound I-72 | 2.8611+2.0637X | 10.8756 | 9.2122-12.7234 | - |
| B:bifenthrin | 1.2077+2.1124X | 62.4026 | 50.0424-84.5846 | - |
| A:B=10:1 | 3.5432+1.8722X | 5.9997 | 4.5791-7.3824 | 195.9791 |

(continued)

| | Toxicity regression equation (Y=) | $LC_{50}$ (mg/L) | 95% confidence limit | Co-toxicity coefficient CTC |
|---|---|---|---|---|
| A:B=5:1 | 3.5187+1.8878X | 6.0907 | 4.6215-7.5313 | 207.0561 |
| A:B=3:1 | 3.4236+1.9144X | 6.6595 | 5.2125-8.0878 | 205.7915 |
| A:B=1:1 | 2.8286+2.2164X | 9.5435 | 8.0565-11.1191 | 194.0905 |
| A:B=1:3 | 2.3614+2.2739X | 14.4676 | 12.4526-16.9631 | 197.4520 |
| A:B=1:5 | 2.2060+2.2405X | 17.6634 | 15.1465-21.0522 | 197.4066 |
| A:B=1:10 | 1.8003+2.4270X | 20.8157 | 17.7502-25.2636 | 209.5365 |

Example 41 Indoor joint toxicity assay of the mixture of the compound I-72 and beta-cyfluthrin *against Mythimna separata*

Test target: 2nd-instar larvae *of Mythimna separata.*

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, corn leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 41.

Table 41 Results of the indoor joint toxicity assay of the mixture of the compound I-72 and beta-cyfluthrin against *Mythimna separata*

| | Toxicity regression equation (Y=) | $LC_{50}$ (mg/L) | 95% confidence limit | Co-toxicity coefficient CTC |
|---|---|---|---|---|
| A:compound I-72 | 7.9540+1.9211X | 0.0290 | 0.0096-0.0482 | - |
| B:beta-cyfluthrin | 4.9610+2.0938X | 1.0438 | 0.7821-1.3470 | - |
| A:B=50:1 | 8.1906+1.9040X | 0.0211 | 0.0102-0.0313 | 140.0935 |
| A:B=20:1 | 8.2265+1.9461X | 0.0220 | 0.0113-0.0320 | 138.3055 |
| A:B=10:1 | 8.2154+2.0072X | 0.0250 | 0.0140-0.0352 | 127.1936 |
| A:B=1:1 | 7.2894+1.6776X | 0.0432 | 0.0199-0.0653 | 130.6495 |
| A:B=1:10 | 6.4210+1.9865X | 0.1926 | 0.1401-0.2511 | 129.5888 |
| A:B=1:20 | 5.9129+1.6497X | 0.2797 | 0.2052-0.3917 | 139.9543 |
| A:B=1:50 | 5.9842+2.2264X | 0.3614 | 0.2661-0.4626 | 171.2897 |

Example 42 Indoor joint toxicity assay of the mixture of the compound I-72 and lambda-cyhalothrin against *Ostrinia furnacalis* Guenee

Test target: 3rd-instar larvae of *Ostrinia furnacalis* Guenee.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, tender corn stems were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with

10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 42.

Table 42 Results of the joint toxicity assay of the mixture of the compound I-72 and lambda-cyhalothrin against *Ostrinia furnacalis* Guenee

| | Toxicity regression equation (Y=) | $LC_{50}$ (mg/L) | 95% confidence limit | Co-toxicity coefficient CTC |
|---|---|---|---|---|
| A:compound I-72 | 5.2289+2.4350X | 0.8053 | 0.6400-1.0557 | - |
| B:lambda-cyhalothrin | 4.5763+1.6100X | 1.8329 | 1.2044-4.0395 | - |
| A:B=10:1 | 5.4426+2.1634X | 0.6243 | 0.4831-0.8068 | 135.9169 |
| A:B=5:1 | 5.4119+2.0734X | 0.6329 | 0.4851-0.8277 | 140.3550 |
| A:B=3:1 | 5.4563+2.4934X | 0.6561 | 0.5228-0.8300 | 142.7433 |
| A:B=1:1 | 5.3003+2.2103X | 0.7313 | 0.5740-0.9576 | 153.0090 |
| A:B=1:3 | 5.0726+1.7100X | 0.9069 | 0.6726-1.3412 | 153.2290 |
| A:B=1:5 | 5.0396+1.7505X | 0.9493 | 0.7036-1.4163 | 159.2235 |
| A:B=1:10 | 4.8804+1.8184X | 1.1636 | 0.8549-1.8380 | 141.1495 |

Example 43 Indoor joint toxicity assay of the mixture of the compound I-72 and beta-cypermethrin against *Plutella xylostella*

Test target: 2nd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 43.

Table 43 Results of the indoor joint toxicity assay of the mixture of the compound I-72 and beta-cypermethrin against *Plutella xylostella*

| | Toxicity regression equation (Y=) | $LC_{50}$ (mg/L) | 95% confidence limit | Co-toxicity coefficient CTC |
|---|---|---|---|---|
| A:compound I-72 | 7.2187+2.1183X | 0.0897 | 0.0653-0.1155 | - |
| B:beta-cypermethrin | 1.6939+1.9479X | 49.8056 | 36.8582-78.9680 | - |
| A:B=10:1 | 7.2988+1.9610X | 0.0673 | 0.0438-0.0901 | 146.6155 |
| A:B=5:1 | 6.9778+1.6786X | 0.0663 | 0.0403-0.0919 | 162.1496 |
| A:B=1:1 | 6.4565+1.4726X | 0.1025 | 0.0508-0.1524 | 174.5642 |
| A:B=1:5 | 6.2780+2.4075X | 0.2946 | 0.2342-0.3805 | 181.0113 |
| A:B=1:10 | 5.5059+1.6785X | 0.4996 | 0.3571-0.8466 | 193.9321 |

Example 44 Indoor joint toxicity assay of the mixture of the compound I-72 and etofenprox against *Nilaparvata lugens* (Stal)

Test target: *Nilaparvata lugens* (Stal) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the *Nilaparvata lugens* (Stal) nymphs was determined by adopting the potted-seedling spraying method. First, rice seedlings were planted in culture pots. Uniform spraying was performed with the pesticide solution in the order from low dosage to high dosage according to the experimental design, with 2 mL for each seedling. Then, *Nilaparvata lugens* nymphs of uniform size were transferred onto the rice seedlings, with 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 44.

Table 44 Results of the indoor joint toxicity assay of the mixture of the compound I-72 and etofenprox against *Nilaparvata lugens* (Stal)

| | Toxicity regression equation (Y=) | $LC_{50}$ (mg/L) | 95% confidence limit | Co-toxicity coefficient CTC |
|---|---|---|---|---|
| A:compound I-72 | 0.5337+1.8231X | 281.7563 | 174.0605-695.9200 | - |
| B:etofenprox | 1.3788+2.5772X | 25.4133 | 21.7662-29.7071 | - |
| A:B=10:1 | 1.8483+1.7146X | 68.8938 | 52.1070-103.4384 | 213.3399 |
| A:B=5:1 | 0.7418+2.4782X | 52.2729 | 43.1384-67.6073 | 201.0362 |
| A:B=3:1 | 1.6952+2.0704X | 39.4674 | 33.0765-48.8528 | 202.7110 |
| A:B=1:1 | 2.4057+1.8821X | 23.8999 | 19.4825-31.1217 | 195.0695 |
| A:B=1:3 | 2.5609+1.9758X | 17.1597 | 14.3715-21.0370 | 191.7012 |
| A:B=1:5 | 2.6983+1.9597X | 14.9463 | 12.6013-17.9809 | 200.4218 |
| A:B=1:10 | 2.4140+2.2237X | 14.5506 | 12.4112-17.2447 | 190.4022 |

Example 45 Indoor joint toxicity assay of the mixture of the compound I-72 and deltamethrin against *Phyllotreta vittuta* Fabr.

Test target: adult *Phyllotreta vittuta* Fabr.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, uniform and consistent potted cabbage seedlings were selected. Then, uniform spraying was performed with the pesticide solution in the order from low dosage to high dosage according to the experimental design. After air-drying in the shade, adult flea beetles were transferred onto the treated cabbage seedlings, and then glass covers were put on them, with about 30-40 adult flea beetles on each seedling and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 45.

Table 45 Results of the indoor joint toxicity assay of the mixture of the compound I-72 and deltamethrin against *Phyllotreta vittuta* Fabr.

| | Toxicity regression equation (Y=) | $LC_{50}$ (mg/L) | 95% confidence limit | Co-toxicity coefficient CTC |
|---|---|---|---|---|
| A:compound I-72 | 4.7979+2.1548X | 1.2410 | 1.0537-1.4609 | - |
| B:deltamethrin | 3.5803+1.7109X | 6.7577 | 5.2251-9.7374 | - |
| A:B=10:1 | 5.4622+2.4381X | 0.6463 | 0.5122-0.7747 | 207.4082 |
| A:B=5:1 | 5.3605+2.3457X | 0.7020 | 0.5625-0.8377 | 204.6353 |
| A:B=3:1 | 5.2701+2.4181X | 0.7732 | 0.6367-0.9084 | 201.6511 |
| A:B=1:1 | 4.9727+2.2630X | 1.0281 | 0.8684-1.2011 | 203.9569 |
| A:B=1:3 | 4.4810+2.3662X | 1.6571 | 1.4257-1.9629 | 193.1514 |
| A:B=1:5 | 4.2428+2.4948X | 2.0115 | 1.7202-2.4280 | 192.9761 |
| A:B=1:10 | 4.2304+1.8894X | 2.5544 | 2.0683-3.3709 | 188.4105 |

Example 46 Indoor joint toxicity assay of the mixture of the compound I-72 and fenvalerate against *Myzus persicae* (Sulzer)

Test target: *Myzus persicae* (Sulzer) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves with uniform and consistent *Myzus persicae* (Sulzer) were selected, with about 30-40 insects on each leaf. Then, they were evenly sprayed with the pesticide solution in the order from low dosage to high dosage according to the experimental design, with 1.5 mL of the solution for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 46.

Table 46 Results of the indoor joint toxicity assay of the mixture of the compound I-72 and fenvalerate against *Myzus persicae* (Sulzer)

| | Toxicity regression equation (Y=) | $LC_{50}$ (mg/L) | 95% confidence limit | Co-toxicity coefficient CTC |
|---|---|---|---|---|
| A:compound I-72 | 2.6067+2.6185X | 8.2036 | 7.3699-9.2173 | - |
| B:fenvalerate | 1.9327+1.9962X | 34.4008 | 28.4760-43.9909 | - |
| A:B=20:1 | 3.5452+2.3117X | 4.2593 | 3.7063-4.8210 | 199.8532 |
| A:B=10:1 | 3.6489+2.1105X | 4.3669 | 3.8027-4.9458 | 201.8310 |
| A:B=5:1 | 3.6721+1.9731X | 4.7096 | 4.0982-5.3521 | 199.5113 |
| A:B=1:1 | 3.2123+2.1973X | 6.5105 | 5.7931-7.3276 | 203.4848 |
| A:B=1:5 | 2.9374+1.9350X | 11.6394 | 10.0780-13.8107 | 192.8915 |
| A:B=1:10 | 2.9621+1.8214X | 13.1472 | 11.1398-16.1168 | 202.7879 |
| A:B=1:20 | 2.7697+1.8955X | 15.0195 | 12.5709-18.8052 | 198.8083 |

Example 47 Indoor joint toxicity assay of the mixture of the compound I-72 and pyrethrin against *Lipaphis erysimi* (Kaltenbach)

Test target: *Lipaphis erysimi* (Kaltenbach).

Preparation of the pesticide solution: according to different test requirements, the test samples were accurately weighed respectively with an electronic analytical balance. The technical pesticides were dissolved in acetone, and then

diluted with 0.1% Tween 80 water into a series of pesticide solutions with a certain concentration gradient according to the experimental design dosage.

Experimental method: first, cabbage leaves with uniform and consistent *Lipaphis erysimi* (Kaltenbach) were selected, with about 30-40 insects on each leaf. Then, they were evenly sprayed with the pesticide solution in the order from low dosage to high dosage according to the experimental design, with 1.5 mL of the solution for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 47.

Table 47 Results of the indoor joint toxicity assay of the mixture of the compound I-72 and pyrethrin against *Lipaphis erysimi* (Kaltenbach)

| | Toxicity regression equation (Y=) | $LC_{50}$ (mg/L) | 95% confidence limit | Co-toxicity coefficient CTC |
|---|---|---|---|---|
| A:compound I-72 | 2.6799+2.2779X | 10.4355 | 9.2501-11.6996 | - |
| B:pyrethrin | 2.2931+1.5531X | 55.3268 | 41.0658-84.9221 | - |
| A:B=10:1 | 3.6302+1.8371X | 5.5669 | 4.4879-6.6202 | 202.3843 |
| A:B=5:1 | 3.6495+1.7288X | 6.0423 | 4.9042-7.1665 | 199.7148 |
| A:B=1:1 | 3.0807+2.0368X | 8.7562 | 7.6132-9.9309 | 200.5326 |
| A:B=1:5 | 2.7625+1.8610X | 15.9336 | 13.9756-18.3610 | 202.2364 |
| A:B=1:10 | 2.7928+1.7001X | 19.8719 | 17.0578-23.7111 | 200.1454 |

Example 48 Indoor synergism screening test of the mixture of the compound I-72 and different plant growth regulators against wheat aphids

Test target: *Sitobion miscanthi* (Fabricius).

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, wheat seedlings with uniform and consistent *Sitobion miscanthi* (Fabricius) were selected, with about 30-40 insects on each pot of wheat. Then, they were evenly sprayed with the pesticide solution in the order from low dosage to high dosage according to the experimental design, with 2.5 mL for each pot and 3 replicates for each treatment. In addition, a blank control CK was set up.

The treated test materials were placed in an observation room, and the temperature, humidity and illumination of the observation room could be adjusted as needed. The number of dead and alive insects was investigated 48 hours later, and the corrected mortality rate was calculated using the Abbott's formula.

The synergism of the mixture was evaluated by the Bliss method. According to the concept of independent joint action he proposed, Bliss believes that the theoretical mortality rate P when insecticides are used in combination can be calculated by the following formula:

$$P = Pm + Pn\ (1-Pm)$$

Pm is the measured mortality rate (%) of the target when the first active ingredient is at a concentration of m; and Pn is the measured mortality rate (%) of the target when the second active ingredient is used at a concentration of n.

If the actual mortality rate of the target after the two active ingredients are mixed at a certain concentration is greater than theoretical mortality rate P, it is determined that the two active ingredients have a synergistic effect when used in combination at the set concentration, and otherwise, they have an antagonistic effect. The test results are shown in Table 48.

Table 48 Results of indoor synergism screening of the mixture of the compound I-72 and different plant growth regulators against wheat aphids

| Test pesticide | Concentration (mg/L) | Measured mortality rate (%) | Theoretical mortality rate (%) | Synergism |
|---|---|---|---|---|
| Compound I-72 | 10 | 64.2 | / | / |
| Brassinolide | 200 | 12.6 | / | / |
| | 10 | 8.8 | / | / |
| | 0.5 | 6.7 | / | / |
| Gibberellic acid | 200 | 12.5 | / | / |
| | 10 | 10.0 | / | / |
| | 0.5 | 5.9 | / | / |
| Paclobutrazol | 100 | 11.3 | / | / |
| | 10 | 7.8 | / | / |
| | 1 | 6.8 | / | / |
| S-abscisic acid | 100 | 10.3 | / | / |
| | 10 | 8.3 | / | / |
| | 1 | 7.9 | / | / |
| Ethephon | 500 | 15.0 | / | / |
| | 10 | 8.8 | / | / |
| | 0.2 | 7.0 | / | / |
| Compound I-72 + brassinolide | 10+200 | 89.7 | 68.7 | Synergistic effect |
| | 10+10 | 82.5 | 67.4 | Synergistic effect |
| | 10+0.5 | 80.0 | 66.6 | Synergistic effect |
| Compound I-72 + gibberellic acid | 10+200 | 87.1 | 68.7 | Synergistic effect |
| | 10+10 | 80.9 | 67.8 | Synergistic effect |
| | 10+0.5 | 79.2 | 66.3 | Synergistic effect |
| Compound I-72 + paclobutrazol | 10+100 | 87.0 | 68.3 | Synergistic effect |
| | 10+10 | 82.1 | 67.0 | Synergistic effect |
| | 10+1 | 80.4 | 66.7 | Synergistic effect |
| Compound I-72 + S-abscisic acid | 10+100 | 86.4 | 67.9 | Synergistic effect |
| | 10+10 | 83.0 | 67.2 | Synergistic effect |
| | 10+1 | 82.6 | 67.1 | Synergistic effect |
| Compound I-72 + ethephon | 10+500 | 87.7 | 69.6 | Synergistic effect |
| | 10+10 | 84.5 | 67.4 | Synergistic effect |
| | 10+0.2 | 79.7 | 66.8 | Synergistic effect |
| CK | - | 0 | - | - |

Example 49 Indoor synergism screening test of the mixture of the compound I-72 and different insect attractants and insecticides against *Plutella xylostella*

Test target: 2nd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the

experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control CK was set up.

The treated test materials were placed in an observation room, and the temperature, humidity and illumination of the observation room could be adjusted as needed. The number of dead and alive insects was investigated 72 hours later, and the corrected mortality rate was calculated using the Abbott's formula.

The synergism of the mixture was evaluated by adopting the Bliss method, as in Example 5. The test results are shown in Table 49.

Table 49 Results of indoor synergism screening of the mixture of the compound I-72 and different insect attractants and insecticides against *Plutella xylostella*

| Test pesticide | Concentration (mg/L) | Measured mortality rate (%) | Theoretical mortality rate (%) | Synergism |
|---|---|---|---|---|
| Compound I-72 | 0.1 | 46.9 | / | / |
| Camphor | 5 | 13.8 | / | / |
| | 0.1 | 9.7 | / | / |
| | 0.002 | 7.4 | / | / |
| Engine oil | 2 | 17.2 | / | / |
| | 0.1 | 10.3 | / | / |
| | 0.005 | 3.3 | / | / |
| Muscalure | 5 | 20.7 | / | / |
| | 0.1 | 10.0 | / | / |
| | 0.002 | 3.1 | / | / |
| Pyridalyl | 2 | 24.1 | / | / |
| | 0.1 | 12.9 | / | / |
| | 0.005 | 8.0 | / | / |
| Fluxametamide | 1 | 75.9 | / | / |
| | 0.1 | 48.4 | / | / |
| | 0.01 | 6.9 | / | / |
| Isocycloseram | 1 | 80.0 | / | / |
| | 0.1 | 71.9 | / | / |
| | 0.01 | 17.9 | / | / |
| Fipronil | 1 | 27.6 | / | / |
| | 0.1 | 16.7 | / | / |
| | 0.01 | 6.7 | / | / |
| Compound I-72 + camphor | 0.1+5 | 72.7 | 54.2 | Synergistic effect |
| | 0.1+0.1 | 69.0 | 52.0 | Synergistic effect |
| | 0.1+0.002 | 63.0 | 50.8 | Synergistic effect |
| Compound I-72 + engine oil | 0.1+2 | 83.3 | 56.0 | Synergistic effect |
| | 0.1+0.1 | 73.3 | 52.4 | Synergistic effect |
| | 0.1+0.005 | 64.5 | 48.6 | Synergistic effect |

(continued)

| Test pesticide | Concentration (mg/L) | Measured mortality rate (%) | Theoretical mortality rate (%) | Synergism |
|---|---|---|---|---|
| Compound I-72 + muscalure | 0.1+5 | 74.2 | 57.9 | Synergistic effect |
| | 0.1+0.1 | 70.0 | 52.2 | Synergistic effect |
| | 0.1+0.002 | 60.0 | 48.5 | Synergistic effect |
| Compound I-72 + pyridalyl | 0.1+2 | 71.4 | 59.7 | Synergistic effect |
| | 0.1+0.1 | 70.4 | 53.7 | Synergistic effect |
| | 0.1+0.005 | 67.7 | 51.1 | Synergistic effect |
| Compound I-72 + fluxametamide | 0.1+1 | 100.0 | 87.2 | Synergistic effect |
| | 0.1+0.1 | 90.3 | 72.6 | Synergistic effect |
| | 0.1+0.01 | 64.3 | 50.5 | Synergistic effect |
| Compound I-72 + isocycloseram | 0.1+1 | 100.0 | 89.4 | Synergistic effect |
| | 0.1+0.1 | 96.8 | 85.1 | Synergistic effect |
| | 0.1+0.01 | 67.9 | 56.4 | Synergistic effect |
| Compound I-72 + fipronil | 0.1+1 | 76.7 | 61.5 | Synergistic effect |
| | 0.1+0.1 | 71.0 | 55.7 | Synergistic effect |
| | 0.1+0.01 | 65.5 | 50.4 | Synergistic effect |
| CK | - | 0 | - | - |

Example 50 Indoor synergism screening test of the mixture of the compound I-72 and different chitin synthesis inhibitors against *Plutella xylostella*

Test target: 2nd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control (CK) was set up.

The treated test materials were placed in an observation room, and the temperature, humidity and illumination of the observation room could be adjusted as needed. The number of dead and alive insects was investigated 72 hours later, and the corrected mortality rate was calculated using the Abbott's formula.

The synergism of the mixture was evaluated by the Bliss method. According to the concept of independent joint action he proposed, Bliss believes that the theoretical mortality rate P when insecticides are used in combination can be calculated by the following formula:

$$P = Pm + Pn\ (1 - Pm)$$

Pm is the measured mortality rate (%) of the target when the first active ingredient is at a concentration of m; and Pn is the measured mortality rate (%) of the target when the second active ingredient is used at a concentration of n.

If the actual mortality rate of the target after the two active ingredients are mixed at a certain concentration is greater than theoretical mortality rate P, it is determined that the two active ingredients have a synergistic effect when used in combination at the set concentration, and otherwise, they have an antagonistic effect. The test results are shown in Table 50.

Table 50 Results of indoor synergism screening of the mixture of the compound I-72 and different chitin synthesis inhibitors against *Plutella xylostella*

| Test pesticide | Concentration (mg/L) | Measured mortality rate (%) | Theoretical mortality rate (%) | Synergism |
|---|---|---|---|---|
| Compound I-72 | 0.5 | 80.0 | / | / |
| Diflubenzuron | 25 | 31.0 | / | / |
| | 0.5 | 12.9 | / | / |
| | 0.01 | 11.1 | / | / |
| Hexaflumuron | 10 | 22.6 | / | / |
| | 0.5 | 13.8 | / | / |
| | 0.025 | 6.7 | / | / |
| Lufenuron | 10 | 20.7 | / | / |
| | 0.5 | 12.5 | / | / |
| | 0.025 | 7.4 | / | / |
| Flufenoxuron | 25 | 27.6 | / | / |
| | 0.5 | 10.7 | / | / |
| | 0.01 | 9.7 | / | / |
| Triflumuron | 10 | 17.2 | / | / |
| | 0.5 | 13.8 | / | / |
| | 0.025 | 6.9 | / | / |
| Chlorfluazuron | 10 | 24.1 | / | / |
| | 0.5 | 10.3 | / | / |
| | 0.025 | 3.4 | / | / |
| Chlorbenzuron | 25 | 25.8 | / | / |
| | 0.5 | 14.8 | / | / |
| | 0.01 | 6.5 | / | / |
| Diafenthiuron | 10 | 21.4 | / | / |
| | 0.5 | 13.3 | / | / |
| | 0.025 | 6.3 | / | / |
| Compound I-72 + diflubenzuron | 0.5+25 | 100.0 | 86.2 | Synergistic effect |
| | 0.5+0.5 | 100.0 | 82.6 | Synergistic effect |
| | 0.5+0.01 | 96.6 | 82.2 | Synergistic effect |
| Compound I-72 + hexaflumuron | 0.5+10 | 100.0 | 84.5 | Synergistic effect |
| | 0.5+0.5 | 100.0 | 82.8 | Synergistic effect |
| | 0.5+0.025 | 96.7 | 81.3 | Synergistic effect |
| Compound I-72 + lufenuron | 0.5+10 | 100.0 | 84.1 | Synergistic effect |
| | 0.5+0.5 | 100.0 | 82.5 | Synergistic effect |
| | 0.5+0.025 | 100.0 | 81.5 | Synergistic effect |
| Compound I-72 + flufenoxuron | 0.5+25 | 100.0 | 85.5 | Synergistic effect |
| | 0.5+0.5 | 93.8 | 82.1 | Synergistic effect |
| | 0.5+0.01 | 93.3 | 81.9 | Synergistic effect |

(continued)

| Test pesticide | Concentration (mg/L) | Measured mortality rate (%) | Theoretical mortality rate (%) | Synergism |
|---|---|---|---|---|
| Compound I-72 + triflumuron | 0.5+10 | 100.0 | 83.4 | Synergistic effect |
| | 0.5+0.5 | 100.0 | 82.8 | Synergistic effect |
| | 0.5+0.025 | 96.3 | 81.4 | Synergistic effect |
| Compound I-72 + chlorfluazuron | 0.5+10 | 100.0 | 84.8 | Synergistic effect |
| | 0.5+0.5 | 96.9 | 82.1 | Synergistic effect |
| | 0.5+0.025 | 96.4 | 80.7 | Synergistic effect |
| Compound I-72 + chlorbenzuron | 0.5+25 | 100.0 | 85.2 | Synergistic effect |
| | 0.5+0.5 | 100.0 | 83.0 | Synergistic effect |
| | 0.5+0.01 | 93.1 | 81.3 | Synergistic effect |
| Compound I-72 + diafenthiuron | 0.5+10 | 100.0 | 84.3 | Synergistic effect |
| | 0.5+0.5 | 100.0 | 82.7 | Synergistic effect |
| | 0.5+0.025 | 96.6 | 81.3 | Synergistic effect |
| CK | - | 0 | - | - |

Example 51 Indoor synergism screening test of the mixture of the compound I-72 with different ecdysteroid insecticides and juvenile hormone insecticides against *Ostrinia furnacalis* Guenee

Test target: 3rd-instar larvae of *Ostrinia furnacalis* Guenee.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, tender corn stems were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control (CK) was set up.

The treated test materials were placed in an observation room, and the temperature, humidity and illumination of the observation room could be adjusted as needed. The number of dead and alive insects was investigated 72 hours later, and the corrected mortality rate was calculated using the Abbott's formula.

The synergism of the mixture was evaluated by adopting the Bliss method, as in Example 5. The test results are shown in Table 51.

Table 51 Results of indoor synergism screening of the mixture of the compound I-72 and different ecdysteroid insecticides and juvenile hormone insecticides against *Ostrinia furnacalis* Guenee

| Test pesticide | Concentration (mg/L) | Measured mortality rate (%) | Theoretical mortality rate (%) | Synergism |
|---|---|---|---|---|
| Compound I-72 | 2 | 75.9 | / | / |
| Methoxyfenozide | 40 | 50.0 | / | / |
| | 2 | 18.8 | / | / |
| | 0.1 | 11.1 | / | / |
| Fufenozide | 40 | 41.9 | / | / |
| | 2 | 15.4 | / | / |
| | 0.1 | 9.4 | / | / |

(continued)

| Test pesticide | Concentration (mg/L) | Measured mortality rate (%) | Theoretical mortality rate (%) | Synergism |
|---|---|---|---|---|
| Tebufenozide | 40 | 46.4 | / | / |
| | 2 | 17.2 | / | / |
| | 0.1 | 10.3 | / | / |
| Cyromazine | 40 | 21.2 | / | / |
| | 2 | 10.7 | / | / |
| | 0.1 | 6.9 | / | / |
| Pyriproxyfen | 100 | 16.1 | / | / |
| | 2 | 9.7 | / | / |
| | 0.04 | 7.1 | / | / |
| Methoprene | 100 | 25.0 | / | / |
| | 2 | 17.9 | / | / |
| | 0.04 | 10.0 | / | / |
| Compound I-72 + methoxyfenozide | 2+40 | 100.0 | 87.9 | Synergistic effect |
| | 2+2 | 100.0 | 80.4 | Synergistic effect |
| | 2+0.1 | 90.0 | 78.5 | Synergistic effect |
| Compound I-72 + fufenozide | 2+40 | 100.0 | 86.0 | Synergistic effect |
| | 2+2 | 96.4 | 79.6 | Synergistic effect |
| | 2+0.1 | 93.8 | 78.1 | Synergistic effect |
| Compound I-72 + tebufenozide | 2+40 | 96.7 | 87.1 | Synergistic effect |
| | 2+2 | 93.9 | 80.0 | Synergistic effect |
| | 2+0.1 | 93.3 | 78.4 | Synergistic effect |
| Compound I-72 + cyromazine | 2+40 | 93.5 | 81.0 | Synergistic effect |
| | 2+2 | 93.1 | 78.4 | Synergistic effect |
| | 2+0.1 | 89.7 | 77.5 | Synergistic effect |
| Compound I-72 + pyriproxyfen | 2+100 | 96.8 | 79.8 | Synergistic effect |
| | 2+2 | 96.6 | 78.2 | Synergistic effect |
| | 2+0.04 | 90.6 | 77.6 | Synergistic effect |
| Compound I-72 + methoprene | 2+100 | 96.3 | 81.9 | Synergistic effect |
| | 2+2 | 94.1 | 80.2 | Synergistic effect |
| | 2+0.04 | 90.3 | 78.3 | Synergistic effect |
| CK | - | 0 | - | - |

Example 52 Indoor joint toxicity assay of the mixture of the compound I-72 and buprofezin against *Nilaparvata lugens* (Stal)

Test target: *Nilaparvata lugens* (Stal) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the *Nilaparvata lugens* (Stal) nymphs was determined by

adopting the potted-seedling spraying method. First, rice seedlings were planted in culture pots. Uniform spraying was performed with the pesticide solution in the order from low dosage to high dosage according to the experimental design, with 2 mL for each seedling. Then, *Nilaparvata lugens* nymphs of uniform size were transferred onto the rice seedlings, with 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 52.

Table 52 Results of the indoor joint toxicity assay of the mixture of the compound I-72 and buprofezin against *Nilaparvata lugens* (Stal)

| | Toxicity regression equation (Y=) | $LC_{50}$ (mg/L) | 95% confidence limit | Co-toxicity coefficient CTC |
|---|---|---|---|---|
| A:compound I-72 | 0.4964+1.8746X | 252.6068 | 199.5868-350.5903 | - |
| B:buprofezin | 4.3687+2.1295X | 1.9789 | 1.6784-2.4079 | - |
| A:B=20:1 | 2.3546+2.0933X | 18.3563 | 15.5761-22.2098 | 195.7273 |
| A:B=10:1 | 2.2761+2.5450X | 11.7568 | 10.1981-13.5068 | 171.7033 |
| A:B=5:1 | 3.3573+2.1056X | 6.0280 | 5.1349-7.0586 | 189.5503 |
| A:B=3:1 | 3.3178+2.7179X | 4.1583 | 3.5365-4.7787 | 185.9881 |
| A:B=1:1 | 4.3761+1.9855X | 2.0618 | 1.3959-2.6956 | 190.4689 |
| A:B=1:3 | 4.7463+1.9170X | 1.3562 | 1.0615-1.6475 | 194.0454 |
| A:B=1:5 | 4.8004+1.8965X | 1.2742 | 0.9834-1.5584 | 186.0704 |
| A:B=1:10 | 4.8475+1.8998X | 1.2030 | 0.9086-1.4888 | 180.8100 |
| A:B=1:20 | 4.8943+1.8775X | 1.1384 | 0.8426-1.4243 | 182.4557 |

Example 53 Indoor joint toxicity assay of the mixture of the compound I-72 and methoxyfenozide against *Chilo suppressalis* (Walker)

Test target: 3rd-instar larvae of *Chilo suppressalis* (Walker).

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, tender rice stems were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 53.

Table 53 Results of the indoor joint toxicity assay of the mixture of the compound I-72 and methoxyfenozide against *Chilo suppressalis* (Walker)

| | Toxicity regression equation (Y=) | $LC_{50}$ (mg/L) | 95% confidence limit | Co-toxicity coefficient CTC |
|---|---|---|---|---|
| A:compound I-72 | 4.9766+2.6842X | 1.0203 | 0.8006-1.2599 | |
| B:methoxyfenozide | 2.9694+2.1338X | 8.9466 | 5.8223-20.8464 | |
| A:B=20:1 | 5.3850+1.6372X | 0.5819 | 0.3247-0.8315 | 183.0633 |
| A:B=10:1 | 5.3967+1.5634X | 0.5576 | 0.2975-0.8058 | 199.0219 |

(continued)

| | Toxicity regression equation (Y=) | $LC_{50}$ (mg/L) | 95% confidence limit | Co-toxicity coefficient CTC |
|---|---|---|---|---|
| A:B=5:1 | 5.3383+1.5379X | 0.6026 | 0.3293-0.8679 | 198.6373 |
| A:B=3:1 | 5.2791+1.5977X | 0.6688 | 0.3974-0.9374 | 195.9456 |
| A:B=1:1 | 5.0584+1.3404X | 0.9045 | 0.5571-1.3057 | 202.5028 |
| A:B=1:3 | 4.6215+1.9127X | 1.5773 | 1.1986-2.1795 | 192.7865 |
| A:B=1:5 | 4.4274+2.0029X | 1.9315 | 1.4682-2.7861 | 201.8412 |
| A:B=1:10 | 4.1871+1.9059X | 2.6700 | 1.9317-4.4756 | 196.3852 |
| A:B=1:20 | 4.1356+1.6759X | 3.2794 | 2.2298-6.5474 | 199.1384 |

Example 54 Indoor joint toxicity assay of the mixture of the compound I-72 and lufenuron against *Spodoptera exigua* Hübner

Test target: 2nd-instar larvae of *Spodoptera exigua* Hiibner.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 54.

Table 54 Results of the indoor joint toxicity assay of the mixture of the compound I-72 and lufenuron against *Spodoptera exigua* Hübner

| | Toxicity regression equation (Y=) | $LC_{50}$ (mg/L) | 95% confidence limit | Co-toxicity coefficient CTC |
|---|---|---|---|---|
| A:compound I-72 | 6.0157+1.7992X | 0.2726 | 0.1533-0.3846 | |
| B:lufenuron | 3.1272+1.6879X | 12.8677 | 9.3617-17.8131 | |
| A:B=10:1 | 6.3988+1.8380X | 0.1734 | 0.0687-0.2738 | 172.5820 |
| A:B=5:1 | 6.4232+1.9175X | 0.1810 | 0.0778-0.2789 | 179.9245 |
| A:B=3:1 | 6.1840+1.6847X | 0.1982 | 0.0850-0.3053 | 182.0529 |
| A:B=1:1 | 5.8488+1.4911X | 0.2696 | 0.1379-0.3983 | 197.9853 |
| A:B=1:3 | 5.3885+1.3139X | 0.5062 | 0.3178-0.7417 | 202.5147 |
| A:B=1:5 | 5.2155+1.7176X | 0.7491 | 0.4781-1.0216 | 197.4232 |
| A:B=1:10 | 4.8439+1.4958X | 1.2716 | 0.8926-1.8205 | 194.5835 |

Example 55 Indoor joint toxicity assay of the mixture of the compound I-72 and cyromazine against *Liriomyza sativae* Blanchard

Test target: *Liriomyza sativae* Blanchard larvae.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, kidney bean seedlings with the *Liriomyza sativae* Blanchard larvae (the larvae had just invaded and formed mines) were selected. Spraying treatments were performed in the order from low dosage to high

dosage according to the experimental design, with 3 replicates for each treatment. In addition, a blank control was set up.

The treated test materials were placed in an observation room, and the temperature, humidity and illumination of the observation room could be adjusted as needed. After the larvae in the blank control group pupated, the numbers of dead and live insects were then counted. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 55.

Table 55 Results of the indoor joint toxicity assay of the mixture of the compound I-72 and cyromazine against *Liriomyza sativae* Blanchard

| | Toxicity regression equation (Y=) | $LC_{50}$ (mg/L) | 95% confidence limit | Co-toxicity coefficient CTC |
|---|---|---|---|---|
| A:compound I-72 | 5.5614+1.8693X | 0.5008 | 0.3521-0.6438 | |
| B:cyromazine | 3.7773+1.7356X | 5.0638 | 4.0187-6.9048 | |
| A:B=10:1 | 5.9432+1.8303X | 0.3053 | 0.2275-0.3809 | 178.6961 |
| A:B=5:1 | 5.9231+1.7944X | 0.3059 | 0.2264-0.3831 | 192.6471 |
| A:B=1:1 | 5.7044+2.0587X | 0.4548 | 0.3170-0.5852 | 200.3997 |
| A:B=1:5 | 4.9278+2.2467X | 1.0768 | 0.9092-1.2622 | 186.7210 |
| A:B=1:10 | 4.6254+2.0824X | 1.5132 | 1.2759-1.8216 | 183.0396 |

Example 56 Indoor joint toxicity assay of the mixture of the compound I-72 and hexaflumuron against *Mythimna separata*

Test target: 2nd-instar larvae of *Mythimna separata.*

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, corn leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 56.

Table 56 Results of the indoor joint toxicity assay of the mixture of the compound I-72 and hexaflumuron against *Mythimna separata*

| | Toxicity regression equation (Y=) | $LC_{50}$ (mg/L) | 95% confidence limit | Co-toxicity coefficient CTC |
|---|---|---|---|---|
| A:compound I-72 | 7.4167+1.5878X | 0.0301 | 0.0096-0.0509 | |
| B:hexaflumuron | 3.4614+2.0634X | 5.5676 | 4.2973-7.3571 | |
| A:B=10:1 | 7.7242+1.6219X | 0.0209 | 0.0092-0.0321 | 158.3355 |
| A:B=5:1 | 7.5703+1.5482X | 0.0219 | 0.0100-0.0334 | 164.7534 |
| A:B=1:1 | 7.3251+1.5951X | 0.0349 | 0.0130-0.0564 | 171.5653 |
| A:B=1:5 | 6.8205+1.9264X | 0.1135 | 0.0848-0.1741 | 154.9309 |
| A:B=1:10 | 6.3924+2.0651X | 0.2117 | 0.1606-0.3118 | 148.3788 |

Example 57 Indoor joint toxicity assay of the mixture of the compound I-72 and chlorantraniliprole against *Chilo suppressalis* (Walker)

Test target: 3rd-instar larvae of *Chilo suppressalis* (Walker).

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, tender rice stems were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control (CK) was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 57.

Table 57 Results of the indoor joint toxicity assay of the mixture of the compound I-72 and chlorantraniliprole against *Chilo suppressalis* (Walker)

| | Toxicity regression equation (Y=) | $LC_{50}$ (mg/L) | 95% confidence limit | Co-toxicity coefficient CTC |
|---|---|---|---|---|
| A:compound I72 | 4.9525+2.0739X | 1.0541 | 0.7899-1.3621 | |
| B:chlorantraniliprole | 4.8473+1.9731X | 1.1950 | 0.9060-1.5627 | |
| A:B=50:1 | 5.4550+1.9687X | 0.5873 | 0.3622-0.8019 | 179.8949 |
| A:B=10:1 | 5.4219+1.6461X | 0.5543 | 0.3036-0.7943 | 192.2446 |
| A:B=5:1 | 5.5218+1.7056X | 0.4944 | 0.2612-0.7159 | 217.4922 |
| A:B=3:1 | 5.6216+2.1845X | 0.5194 | 0.3065-0.7145 | 209.1344 |
| A:B=1:1 | 5.4841+1.8747X | 0.5518 | 0.3207-0.7681 | 203.0080 |
| A:B=1:3 | 5.3950+1.8769X | 0.6160 | 0.3781-0.8450 | 187.7383 |
| A:B=1:5 | 5.3903+2.0189X | 0.6407 | 0.4128-0.8600 | 182.4428 |
| A:B=1:10 | 5.2955+1.9362X | 0.7037 | 0.4637-0.9383 | 167.7770 |
| A:B=1:50 | 5.3036+1.9055X | 0.6929 | 0.4509-0.9290 | 172.0165 |

Example 58 Indoor joint toxicity assay of the mixture of the compound I-72 and tetraniliprole against *Plutella xylostella*

Test target: 2nd-instar larvae of *Plutella xylostella.*

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 58.

Table 58 Results of the indoor joint toxicity assay of the mixture of the compound I-72 and tetraniliprole against *Plutella xylostella*

| | Toxicity regression equation (Y=) | $LC_{50}$ (mg/L) | 95% confidence limit | Co-toxicity coefficient CTC |
|---|---|---|---|---|
| A:compound I-72 | 6.8637+1.7725X | 0.0888 | 0.0610-0.1193 | - |
| B:tetraniliprole | 7.1088+1.9324X | 0.0810 | 0.0561-0.1069 | - |
| A:B=10:1 | 7.6724+2.0380X | 0.0488 | 0.0272-0.0690 | 180.3317 |
| A:B=5:1 | 7.4483+1.8389X | 0.0466 | 0.0242-0.0676 | 187.5142 |
| A:B=3:1 | 7.4993+1.8589X | 0.0452 | 0.0232-0.0658 | 191.7308 |
| A:B=1:1 | 7.7512+1.9890X | 0.0414 | 0.0201-0.0613 | 204.7915 |
| A:B=1:3 | 7.8111+2.0578X | 0.0430 | 0.0221-0.0624 | 192.4760 |
| A:B=1:5 | 7.9006+2.1322X | 0.0436 | 0.0222-0.0631 | 188.5887 |
| A:B=1:10 | 7.7966+2.1130X | 0.0475 | 0.0263-0.0669 | 172.0683 |

Example 59 Indoor joint toxicity assay of the mixture of the compound I-72 and cyantraniliprole against *Myzus persicae* (Sulzer)

Test target: *Myzus persicae* (Sulzer) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves with uniform and consistent *Myzus persicae* (Sulzer) were selected, with about 30-40 insects on each leaf. Then, they were evenly sprayed with the pesticide solution in the order from low dosage to high dosage according to the experimental design, with 1.5 mL of the solution for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 59.

Table 59 Results of the indoor joint toxicity assay of the mixture of the compound I-72 and cyantraniliprole against *Myzus persicae* (Sulzer)

| | Toxicity regression equation (Y=) | $LC_{50}$ (mg/L) | 95% confidence limit | Co-toxicity coefficient CTC |
|---|---|---|---|---|
| A:compound I-72 | 2.6930+2.5337X | 8.1380 | 7.3319-9.1118 | - |
| B:cyantraniliprole | 4.8429+2.1924X | 1.1794 | 1.0506-1.3214 | - |
| A:B=10:1 | 4.0439+2.2154X | 2.7013 | 2.4123-3.0330 | 196.0869 |
| A:B=5:1 | 4.3726+1.9912X | 2.0659 | 1.8089-2.3415 | 198.6199 |
| A:B=3:1 | 4.5248+2.3098X | 1.6060 | 1.3945-1.8185 | 204.7461 |
| A:B=1:1 | 4.9971+1.9038X | 1.0035 | 0.8741-1.1418 | 205.3034 |
| A:B=1:3 | 5.2544+2.0053X | 0.7467 | 0.6352-0.8585 | 200.9025 |
| A:B=1:5 | 5.3001+1.9110X | 0.6966 | 0.5882-0.8042 | 197.4614 |
| A:B=1:10 | 5.3456+1.8260X | 0.6468 | 0.5354-0.7569 | 197.7254 |

Example 60 Indoor joint toxicity assay of the mixture of the compound I-72 and tetrachlorantraniliprole against *Spodoptera exigua* Hiibner

Test target: 2nd-instar larvae of *Spodoptera exigua* Hiibner.

Preparation of the pesticide solution: according to different test requirements, the test samples were accurately weighed respectively with an electronic analytical balance. The technical pesticides were dissolved in acetone, and then

diluted with 0.1 % Tween 80 water into a series of pesticide solutions with a certain concentration gradient according to the experimental design dosage.

Experimental method: first, cabbage leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 60.

Table 60 Results of the indoor joint toxicity assay of the mixture of the compound I-72 and tetrachlorantraniliprole against *Spodoptera exigua* Hiibner

| | Toxicity regression equation (Y=) | $LC_{50}$ (mg/L) | 95% confidence limit | Co-toxicity coefficient CTC |
|---|---|---|---|---|
| A:compound I-72 | 6.0835+1.8081X | 0.2516 | 0.1376-0.3594 | - |
| B:tetrachlorantraniliprole | 5.4535+2.4161X | 0.6491 | 0.5129-0.8269 | - |
| A:B=20:1 | 6.6365+1.8386X | 0.1288 | 0.0708-0.1834 | 201.1957 |
| A:B=10:1 | 6.7830+2.0500X | 0.1350 | 0.0792-0.1869 | 197.4051 |
| A:B=5:1 | 6.5776+1.8355X | 0.1382 | 0.0797-0.1944 | 202.7578 |
| A:B=3:1 | 6.5397+1.8165X | 0.1420 | 0.0819-0.1987 | 209.1586 |
| A:B=1:1 | 6.4665+1.9636X | 0.1791 | 0.1187-0.2387 | 202.4507 |
| A:B=1:3 | 6.1311+1.7869X | 0.2328 | 0.1204-0.3397 | 199.8718 |
| A:B=1:5 | 6.1862+2.0821X | 0.2693 | 0.1609-0.3710 | 190.7806 |
| A:B=1:10 | 5.9273+1.6787X | 0.2803 | 0.1555-0.3997 | 202.4925 |
| A:B=1:20 | 5.8919+1.8284X | 0.3252 | 0.2046-0.4430 | 185.6149 |

Example 61 Indoor joint toxicity assay of the mixture of the compound I-72 and flubendiamide against *Ostrinia furnacnlis* Guenee

Test target: 3-instar larvae of *Ostrinia furnacnlis* Guenee.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, tender corn stems were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 61.

Table 61 Results of the indoor joint toxicity assay of the mixture of the compound I-72 and flubendiamide against *Ostrinia furnacnlis* Guenee

| | Toxicity regression equation (Y=) | $LC_{50}$ (mg/L) | 95% confidence limit | Co-toxicity coefficient CTC |
|---|---|---|---|---|
| A:compound I-72 | 5.1947+2.0498X | 0.8036 | 0.5675-1.0470 | - |
| B:flubendiamide | 4.9789+2.0588X | 1.0239 | 0.7615-1.3255 | - |

(continued)

| | Toxicity regression equation (Y=) | $LC_{50}$ (mg/L) | 95% confidence limit | Co-toxicity coefficient CTC |
|---|---|---|---|---|
| A:B=10:1 | 5.7343+2.0661X | 0.4412 | 0.2276-0.6375 | 185.7765 |
| A:B=5:1 | 5.7644+2.0008X | 0.4149 | 0.2058-0.6097 | 200.8795 |
| A:B=3:1 | 5.7001+1.9484X | 0.4372 | 0.2173-0.6406 | 194.2388 |
| A:B=1:1 | 5.6656+1.9174X | 0.4496 | 0.2338-0.6521 | 200.2605 |
| A:B=1:3 | 5.5926+1.9814X | 0.5023 | 0.2801-0.7087 | 190.7762 |
| A:B=1:5 | 5.5506+1.9375X | 0.5198 | 0.2920-0.7334 | 188.3803 |
| A:B=1:10 | 5.5763+2.0079X | 0.5164 | 0.2990-0.7202 | 193.4615 |

Example 62 Indoor joint toxicity assay of the mixture of the compound I-72 and tolfenpyrad against *Thrips flavus* Schrank

Test target: *Thrips flavus* Schrank nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, eggplant seedlings with *Thrips flavus* Schrank were selected, and the base number was counted. Then, uniform spraying was performed with the pesticide solution in the order from low to high doses according to the experimental design, with 2 mL for each seedling and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 62.

Table 62 Results of the indoor joint toxicity assay of the mixture of the compound I72 and tolfenpyrad against *Thrips flavus* Schrank

| | Toxicity regression equation (Y=) | $LC_{50}$ (mg/L) | 95% confidence limit | Co-toxicity coefficient CTC |
|---|---|---|---|---|
| A:compound I72 | 4.3080+2.2629X | 2.0222 | 1.7486-2.4017 | - |
| B:tolfenpyrad | 1.5911+2.3401X | 28.6235 | 24.9963-33.0189 | - |
| A:B=10:1 | 4.8984+1.7650X | 1.1417 | 0.9593-1.3500 | 193.4639 |
| A:B=5:1 | 4.8547+1.7946X | 1.2049 | 1.0243-1.4141 | 198.5872 |
| A:B=3:1 | 4.7486+1.9722X | 1.3411 | 1.1535-1.5658 | 196.4274 |
| A:B=1:1 | 4.5578+1.7276X | 1.8029 | 1.5245-2.1861 | 209.5244 |
| A:B=1:3 | 3.8427+2.1639X | 3.4263 | 2.9773-4.0125 | 194.7929 |
| A:B=1:5 | 3.5225+2.2390X | 4.5700 | 3.9837-5.2193 | 196.1902 |
| A:B=1:10 | 2.6026+2.9346X | 6.5606 | 5.8673-7.4203 | 198.6880 |

Example 63 Indoor joint toxicity assay of the mixture of the compound I-72 and cyantraniliprole against *Phyllotreta vittuta* Fabr.

Test target: adult *Phyllotreta vittuta* Fabr.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, uniform and consistent potted cabbage seedlings were selected. Then, uniform spraying was performed with the pesticide solution in the order from low dosage to high dosage according to the

experimental design. After air-drying in the shade, adult flea beetles were transferred onto the treated cabbage seedlings, and then glass covers were put on them, with about 30-40 adult flea beetles on each seedling and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 63.

Table 63 Results of the indoor joint toxicity assay of the mixture of the compound I-72 and cyantraniliprole against *Phyllotreta vittuta* Fabr.

| | Toxicity regression equation (Y=) | $LC_{50}$ (mg/L) | 95% confidence limit | Co-toxicity coefficient CTC |
|---|---|---|---|---|
| A:compound I-72 | 4.8639+2.0948X | 1.1614 | 0.9860-1.3614 | - |
| B:cyantraniliprole | 1.7471+2.0874X | 36.1673 | 28.2424-51.6860 | - |
| A:B=10:1 | 5.3201+1.7582X | 0.6575 | 0.4971-0.8164 | 193.6755 |
| A:B=5:1 | 5.2403+1.5738X | 0.7035 | 0.5222-0.8867 | 196.8380 |
| A:B=1:1 | 4.8928+2.1771X | 1.1201 | 0.9478-1.3139 | 200.9269 |
| A:B=1:5 | 3.8280+2.4153X | 3.0565 | 2.6378-3.5875 | 196.4521 |
| A:B=1:10 | 3.3747+2.3244X | 5.0030 | 4.1559-6.3675 | 193.2890 |

Example 64 Indoor joint toxicity assay of the mixture of the compound I-72 and clothianidin against *Myzus persicae* (Sulzer)

Test target: *Myzus persicae* (Sulzer) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cabbage leaves with uniform and consistent *Myzus persicae* (Sulzer) were selected, with about 30-40 insects on each leaf. Then, they were evenly sprayed with the pesticide solution in the order from low dosage to high dosage according to the experimental design, with 1.5 mL of the solution for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 64.

Table 64 Results of the indoor joint toxicity assay of the mixture of the compound I-72 and clothianidin against *Myzus persicae* (Sulzer)

| | Toxicity regression equation (Y=) | $LC_{50}$ (mg/L) | 95% confidence limit | Co-toxicity coefficient CTC |
|---|---|---|---|---|
| A:compound I-72 | 3.1031+2.0938X | 8.0528 | 7.0559-9.3922 | - |
| B:clothianidin | 5.7688+2.6490X | 0.5126 | 0.4621-0.5691 | - |
| A:B=10:1 | 4.2798+2.2692X | 2.0768 | 1.8280-2.3424 | 165.8971 |
| A:B=5:1 | 4.3090+2.7025X | 1.8017 | 1.5938-2.0130 | 129.4886 |
| A:B=3:1 | 4.7698+2.4684X | 1.2395 | 1.0290-1.4417 | 138.8959 |
| A:B=1:1 | 5.3697+2.2620X | 0.6864 | 0.5816-0.7892 | 140.4196 |
| A:B=1:3 | 5.6877+2.2288X | 0.4914 | 0.3866-0.5920 | 136.1928 |
| A:B=1:5 | 5.8258+2.4860X | 0.4654 | 0.4152-0.5203 | 130.5136 |
| A:B=1:10 | 6.0438+2.8316X | 0.4279 | 0.3834-0.4751 | 130.9393 |

Example 65 Indoor joint toxicity assay of the mixture of the compound I-72 and acetamiprid against *Phyllotreta vittuta* Fabr.

Test target: adult *Phyllotreta vittuta* Fabr.

Preparation of the pesticide solution: according to different test requirements, the test samples were accurately weighed respectively with an electronic analytical balance. The technical pesticides were dissolved in acetone, and then diluted with 0.1 % Tween 80 water into a series of pesticide solutions with a certain concentration gradient according to the experimental design dosage.

Experimental method: first, uniform and consistent potted cabbage seedlings were selected. Then, uniform spraying was performed with the pesticide solution in the order from low dosage to high dosage according to the experimental design. After air-drying in the shade, adult flea beetles were transferred onto the treated cabbage seedlings, and then glass covers were put on them, with about 30-40 adult flea beetles on each seedling and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 65.

Table 65 Results of the indoor joint toxicity assay of the mixture of the compound I-72 and acetamiprid against *Phyllotreta vittuta* Fabr.

| | Toxicity regression equation (Y=) | $LC_{50}$ (mg/L) | 95% confidence limit | Co-toxicity coefficient CTC |
|---|---|---|---|---|
| A:compound I-72 | 4.8268+2.9642X | 1.1440 | 1.0333-1.2629 | - |
| B:acetamiprid | 2.9234+2.3102X | 7.9232 | 6.9889-9.1604 | - |
| A:B=20:1 | 5.0885+2.1376X | 0.9091 | 0.7911-1.0314 | 131.1933 |
| A:B=10:1 | 5.0614+2.4845X | 0.9447 | 0.8335-1.0596 | 131.3147 |
| A:B=5:1 | 4.9584+2.6480X | 1.0369 | 0.9244-1.1554 | 128.6856 |
| A:B=1:1 | 4.5652+2.3002X | 1.5453 | 1.3269-1.7634 | 129.3823 |
| A:B=1:5 | 3.8227+2.4791X | 2.9846 | 2.6742-3.3527 | 133.5601 |
| A:B=1:10 | 3.7048+2.5643X | 3.1995 | 2.7815-3.6160 | 160.9377 |
| A:B=1:20 | 3.6462+2.5411X | 3.4102 | 2.9752-3.8494 | 181.2062 |

Example 66 Indoor joint toxicity assay of the mixture of the compound I-72 and thiamethoxam against *Yponomeuta evonymallus* (Linnaeus)

Test target: 3rd-instar larvae of *Yponomeuta evonymallus* (Linnaeus).

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, *Hylotelephium spectabile* leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 66.

Table 66 Results of the indoor joint toxicity assay of the mixture of the compound I-72 and thiamethoxam against *Yponomeuta evonymallus* (Linnaeus)

| | Toxicity regression equation (Y=) | $LC_{50}$ (mg/L) | 95% confidence limit | Co-toxicity coefficient CTC |
|---|---|---|---|---|
| A:compound I-72 | 3.6279+2.0776X | 4.5752 | 3.4307-6.9915 | - |
| B:thiamethoxam | 0.6324+1.7094X | 358.9351 | 238.4787-770.3887 | - |
| A:B=10:1 | 3.3509+2.8408X | 3.8065 | 3.0603-5.0812 | 132.0465 |
| A:B=5:1 | 3.6837+2.1109X | 4.2032 | 3.2141-6.1013 | 130.2892 |
| A:B=3:1 | 6.6375+1.9799X | 4.8773 | 3.6849-6.4242 | 124.5479 |
| A:B=1:1 | 2.6271+2.9167X | 6.5094 | 5.2943-8.3424 | 138.8048 |
| A:B=1:3 | 3.1066+1.7312X | 12.4090 | 9.0643-16.9575 | 142.0494 |
| A:B=1:5 | 2.2859+2.1057X | 19.4489 | 14.8900-27.8307 | 132.6897 |
| A:B=1:10 | 1.3391+2.4491X | 31.2467 | 22.8693-52.8430 | 142.8563 |

Example 67 Indoor joint toxicity assay of the mixture of the compound I-72 and nitenpyram against *Aphis gossypii* Glover

Test target: *Aphis gossypii* Glover nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with uniform and consistent *Aphis gossypii* were selected, with about 30-40 insects on each leaf. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 67.

Table 67 Results of the indoor joint toxicity assay of the mixture of the compound I-72 and nitenpyram against *Aphis gossypii* Glover

| | Toxicity regression equation (Y=) | $LC_{50}$ (mg/L) | 95% confidence limit | Co-toxicity coefficient CTC |
|---|---|---|---|---|
| A:compound I-72 | 3.9700+2.1615X | 2.9959 | 2.6614-3.3960 | - |
| B:nitenpyram | 6.0802+2.5990X | 0.3840 | 0.3398-0.4298 | - |
| A:B=10:1 | 4.7778+2.1108X | 1.2743 | 1.1239-1.4459 | 145.2835 |
| A:B=5:1 | 4.9583+2.0770X | 1.0474 | 0.9185-1.1856 | 134.0730 |
| A:B=3:1 | 5.1605+2.1656X | 0.8431 | 0.7271-0.9615 | 131.5924 |
| A:B=1:1 | 5.5347+1.9620X | 0.5339 | 0.4250-0.6400 | 127.5187 |
| A:B=1:3 | 5.9672+2.2607X | 0.3734 | 0.3270-0.4217 | 131.5144 |
| A:B=1:5 | 6.0855+2.2819X | 0.3344 | 0.2896-0.3799 | 134.3609 |
| A:B=1:10 | 6.0540+2.1105X | 0.3167 | 0.2699-0.3640 | 131.7102 |

Example 68 Indoor joint toxicity assay of the mixture of the compound I-72 and dinotefuran against *Frankliniella occidentalis*

Test target: *Frankliniella occidentalis* nymphs.

Preparation of the pesticide solution: according to different test requirements, the test samples were accurately weighed respectively with an electronic analytical balance. The technical pesticides were dissolved in acetone, and then

diluted with 0.1% Tween 80 water into a series of pesticide solutions with a certain concentration gradient according to the experimental design dosage.

Experimental method: first, kidney bean leaves were selected and dipped in the prepared pesticide solution for 10 s in the order from low dosage to high dosage according to the experimental design. After natural air-drying in the shade, they were placed in a 9-cm-diameter Petri dish with filter paper, and uniform and healthy test insects were introduced, with 20-30 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 68.

Table 68 Results of the indoor joint toxicity assay of the mixture of the compound I-72 and dinotefuran against *Frankliniella occidentalis*

| | Toxicity regression equation (Y=) | $LC_{50}$ (mg/L) | 95% confidence limit | Co-toxicity coefficient CTC |
|---|---|---|---|---|
| A:compound I-72 | 3.8594+2.9873X | 2.4090 | 2.1258-2.7246 | - |
| B:dinotefuran | 1.3166+1.9628X | 75.2665 | 62.1840-94.6905 | - |
| A:B=10:1 | 4.2983+2.4101X | 1.9550 | 1.6403-2.2896 | 135.1116 |
| A:B=5:1 | 4.1492+2.5003X | 2.1891 | 1.8772-2.5300 | 131.2130 |
| A:B=3:1 | 4.1097+2.2813X | 2.4561 | 2.0716-2.9082 | 129.3945 |
| A:B=1:1 | 3.7024+2.3618X | 3.5431 | 2.8993-4.2069 | 131.7635 |
| A:B=1:3 | 3.4427+1.8637X | 6.8484 | 5.6159-8.6435 | 128.3777 |
| A:B=1:5 | 3.2011+1.8634X | 9.2344 | 7.4093-12.3247 | 134.9302 |
| A:B=1:10 | 3.1935+1.6428X | 12.5806 | 9.4195-19.3958 | 159.5629 |

Example 69 Indoor joint toxicity assay of the mixture of the compound I-72 and sulfoxaflor against *Aphis craccivora* nymphs

Test target: *Aphis craccivora* nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, broad bean seedlings with uniform and consistent *Aphis craccivora* were selected, with about 30-40 insects on each seedling. Then, they were evenly sprayed with the pesticide solution in the order from low dosage to high dosage according to the experimental design, with 1.5 mL of the solution for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 69.

Table 69 Results of the indoor joint toxicity assay of the mixture of the compound I-72 and sulfoxaflor against *Aphis craccivora* nymphs

| | Toxicity regression equation (Y=) | $LC_{50}$ (mg/L) | 95% confidence limit | Co-toxicity coefficient CTC |
|---|---|---|---|---|
| A:compound I-72 | 4.3032+1.7326X | 2.5245 | 2.1250-3.1248 | - |
| B:sulfoxaflor | 6.9995+2.8295X | 0.1965 | 0.1750-0.2186 | - |
| A:B=50:1 | 5.1703+2.3958X | 0.8491 | 0.7413-0.9577 | 241.2796 |
| A:B=20:1 | 5.3775+2.2827X | 0.6834 | 0.5816-0.7830 | 236.1800 |

(continued)

| | Toxicity regression equation (Y=) | $LC_{50}$ (mg/L) | 95% confidence limit | Co-toxicity coefficient CTC |
|---|---|---|---|---|
| A:B=10:1 | 5.8837+2.7758X | 0.4805 | 0.4294-0.5330 | 252.9691 |
| A:B=1:1 | 6.4043+2.3720X | 0.2558 | 0.2129-0.2976 | 142.5136 |
| A:B=1:10 | 6.6929+2.1032X | 0.1567 | 0.1146-0.1973 | 136.8546 |
| A:B=1:20 | 7.4231+2.9586X | 0.1517 | 0.1312-0.1716 | 135.4729 |
| A:B=1:50 | 7.4038+2.8254X | 0.1410 | 0.1211-0.1602 | 141.9183 |

Example 70 Indoor joint toxicity assay of the mixture of the compound I-72 and imidacloprid against *Nilaparvata lugens* (Stal)

Test target: *Nilaparvata lugens* (Stal) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the *Nilaparvata lugens* (Stal) nymphs was determined by adopting the potted-seedling spraying method. First, rice seedlings were planted in culture pots. Uniform spraying was performed with the pesticide solution in the order from low dosage to high dosage according to the experimental design, with 2 mL for each seedling. Then, *Nilaparvata lugens* nymphs of uniform size were transferred onto the rice seedlings, with 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 70.

Table 70 Results of the indoor joint toxicity assay of the mixture of the compound I-72 and imidacloprid against *Nilaparvata lugens* (Stal)

| | Toxicity regression equation (Y=) | $LC_{50}$ (mg/L) | 95% confidence limit | Co-toxicity coefficient CTC |
|---|---|---|---|---|
| A:compound I-72 | 1.5728+1.4371X | 242.5899 | 181.8662-369.8962 | - |
| B:imidacloprid | 3.5779+2.0602X | 4.9010 | 4.1383-5.7954 | - |
| A:B=10:1 | 0.3973+3.8454X | 25.3273 | 22.5999-28.4070 | 177.0820 |
| A:B=5:1 | 1.3992+2.7923X | 19.4778 | 16.6645-22.4130 | 137.1203 |
| A:B=3:1 | 0.6375+4.0242X | 12.1357 | 10.8585-13.5366 | 152.3089 |
| A:B=1:1 | 2.9495+2.3902X | 7.2090 | 5.6351-10.3575 | 133.2771 |
| A:B=1:3 | 3.3516+2.4746X | 4.6357 | 3.9102-5.7530 | 140.0215 |
| A:B=1:5 | 3.1848+2.8658X | 4.2992 | 3.6843-5.2047 | 136.2462 |
| A:B=1:10 | 3.4910+2.5791X | 3.8467 | 3.3083-4.6038 | 139.8660 |

Example 71 Indoor joint toxicity assay of the mixture of the compound I-72 and thiacloprid against *Bemisia tabaci* (Gennadius) nymphs

Test target: *Bemisia tabaci* (Gennadius) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with neat and consistent *Bemisia tabaci* (Gennadius) nymphs were selected and made into leaf disks, with about 20 insects on each leaf disk. Then, they were evenly sprayed with the pesticide solution in the order from low dosage to high dosage according to the experimental design, with 1.5 mL for each

leaf and 3 replicates for each treatment. In addition, a blank control was set up.

The treated test materials were placed in an observation room, and the temperature, humidity and illumination of the observation room could be adjusted as needed. The number of dead and live insects was investigated 96 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 71.

Table 71 Results of the indoor joint toxicity assay of the mixture of the compound I-72 and thiacloprid against *Bemisia tabaci* (Gennadius) nymphs

| | Toxicity regression equation (Y=) | $LC_{50}$ (mg/L) | 95% confidence limit | Co-toxicity coefficient CTC |
|---|---|---|---|---|
| A:compound I-72 | 2.8679+2.0577X | 10.8675 | 8.7873-14.4430 | - |
| B:thiacloprid | 3.4745+1.9156X | 6.2564 | 5.2480-7.5906 | - |
| A:B=10:1 | 2.4967+2.9669X | 6.9780 | 6.1195-8.1199 | 145.9601 |
| A:B=5:1 | 2.9944+2.5167X | 6.2648 | 5.4105-7.3632 | 154.4924 |
| A:B=3:1 | 3.3139+2.6566X | 4.3123 | 3.7315-4.9421 | 212.8023 |
| A:B=1:1 | 3.3875+2.6322X | 4.0985 | 3.5028-4.7305 | 193.7563 |
| A:B=1:3 | 3.2910+2.7180X | 4.2537 | 3.6811-4.8691 | 164.5343 |
| A:B=1:5 | 3.3900+2.5252X | 4.3409 | 3.7243-5.0164 | 155.0937 |
| A:B=1:10 | 2.9342+3.1813X | 4.4602 | 3.8971-5.0695 | 145.8996 |

Example 72 Indoor joint toxicity assay of the mixture of the compound I-72 and nicotine against *Aphis citricola van der* Goot

Test target: *Aphis citricola van der* Goot nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, apple leaves with uniform and consistent *Aphis citricola van der* Goot were selected, with about 30-40 insects on each leaf. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 72.

Table 72 Results of the indoor joint toxicity assay of the mixture of the compound I-72 and nicotine against *Aphis citricola van der* Goot

| | Toxicity regression equation (Y=) | $LC_{50}$ (mg/L) | 95% confidence limit | Co-toxicity coefficient CTC |
|---|---|---|---|---|
| A:compound I-72 | 3.9726+2.1179X | 3.0555 | 2.7416-3.4287 | - |
| B:nicotine | 3.3866+1.7663X | 8.1927 | 6.6007-10.9141 | - |
| A:B=10:1 | 4.2061+3.1861X | 1.7749 | 1.5845-1.9618 | 182.5584 |
| A:B=5:1 | 3.9999+3.3137X | 2.0036 | 1.8322-2.1773 | 170.3022 |
| A:B=1:1 | 3.3245+3.5705X | 2.9462 | 2.7114-3.2167 | 151.0781 |
| A:B=1:5 | 3.2168+3.0146X | 3.9039 | 3.5233-4.3911 | 163.9243 |
| A:B=1:10 | 3.4747+2.6501X | 3.7633 | 3.4028-4.2116 | 188.8376 |

Example 73 Indoor joint toxicity assay of the mixture of the compound I-72 and pymetrozine against *Myzus persicae* (Sulzer)

Test target: *Myzus persicae* (Sulzer) nymphs, a sensitive strain reared indoors.
Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.
Experimental method: first, cabbage leaves with uniform and consistent *Myzus persicae* (Sulzer) were selected, with about 30-40 insects on each leaf. Then, they were evenly sprayed with the pesticide solution in the order from low dosage to high dosage according to the experimental design, with 1.5 mL of the solution for each leaf and 3 replicates for each treatment. In addition, a blank control was set up.
The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 73.

Table 73 Results of the indoor joint toxicity assay of the mixture of the compound I-72 and pymetrozine against *Myzus persicae* (Sulzer)

| | Toxicity regression equation (Y=) | $LC_{50}$ (mg/L) | 95% confidence limit | Co-toxicity coefficient CTC |
|---|---|---|---|---|
| A:compound I-72 | 2.8031+2.4383X | 7.9619 | 7.1842-8.8916 | - |
| B:pymetrozine | 4.1867+1.0972X | 5.5120 | 4.4966-6.6793 | - |
| A:B=50:1 | 3.4387+2.1110X | 5.4907 | 4.8964-6.1295 | 143.7536 |
| A:B=20:1 | 3.1506+2.5597X | 5.2784 | 4.7253-5.8622 | 147.7119 |
| A:B=10:1 | 3.6684+1.7844X | 5.5755 | 4.8879-6.3279 | 137.2563 |
| A:B=1:1 | 3.1963+2.5984X | 4.9450 | 4.4198-5.4898 | 131.7340 |
| A:B=1:10 | 3.8367+1.9631X | 3.9139 | 3.3243-4.5059 | 144.8867 |
| A:B=1:20 | 3.7879+2.0733X | 3.8425 | 3.3034-4.3821 | 145.5836 |
| A:B=1:50 | 3.6986+2.1149X | 4.1243 | 3.5518-4.7067 | 134.4606 |

Example 74 Indoor joint toxicity assay of the mixture of the compound I-72 and flonicamid against *Aphis gossypii* Glover

Test target: *Aphis gossypii* Glover nymphs, a sensitive strain reared indoors.
Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.
Experimental method: first, cotton leaves with uniform and consistent *Aphis gossypii* were selected, with about 30-40 insects on each leaf. Then, they were evenly sprayed with the pesticide solution in the order from low dosage to high dosage according to the experimental design, with 1.5 mL for each leaf and 3 replicates for each treatment. In addition, a blank control was set up.
The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 74.

Table 74 Results of the indoor joint toxicity assay of the mixture of the compound I-72 and flonicamid against *Aphis gossypii* Glover

| | Toxicity regression equation (Y=) | $LC_{50}$ (mg/L) | 95% confidence limit | Co-toxicity coefficient CTC |
|---|---|---|---|---|
| A:compound I-72 | 3.7781+2.7246X | 2.8086 | 2.4494-3.3308 | - |
| B:flonicamid | 4.3399+1.7398X | 2.3954 | 2.0344-2.9369 | - |
| A:B=20:1 | 4.2030+2.6419X | 2.0030 | 1.7889-2.2823 | 139.0790 |
| A:B=10:1 | 4.3021+2.1430X | 2.1167 | 1.8537-2.4733 | 130.6388 |
| A:B=5:1 | 4.1930+2.4443X | 2.1387 | 1.8920-2.4698 | 127.6521 |
| A:B=3:1 | 4.2733+2.5442X | 1.9303 | 1.7229-2.1986 | 139.4837 |
| A:B=1:1 | 4.7392+2.6081X | 1.2589 | 1.1398-1.3908 | 205.3888 |
| A:B=1:3 | 4.4033+2.7979X | 1.6341 | 1.4775-1.8243 | 152.1885 |
| A:B=1:5 | 4.2771+3.0585X | 1.7232 | 1.5606-1.9237 | 142.5023 |
| A:B=1:10 | 4.3256+2.9525X | 1.6921 | 1.5410-1.8752 | 143.4890 |
| A:B=1:20 | 4.2797+2.9683X | 1.7485 | 1.5861-1.9485 | 137.9697 |

Example 75 Indoor joint toxicity assay of the mixture of the compound I-72 and triflumezopyrim against *Nilaparvata lugens* (Stal)

Test target: *Nilaparvata lugens* (Stal) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the *Nilaparvata lugens* (Stal) nymphs was determined by adopting the potted-seedling spraying method. First, rice seedlings were planted in culture pots. Uniform spraying was performed with the pesticide solution in the order from low dosage to high dosage according to the experimental design, with 2 mL for each seedling. Then, *Nilaparvata lugens* nymphs of uniform size were transferred onto the rice seedlings, with 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 75.

Table 75 Results of the indoor joint toxicity assay of the mixture of the compound I-72 and triflumezopyrim against *Nilaparvata lugens* (Stal)

| | Toxicity regression equation (Y=) | $LC_{50}$ (mg/L) | 95% confidence limit | Co-toxicity coefficient CTC |
|---|---|---|---|---|
| A:compound I-72 | 1.2587+2.5494X | 285.0881 | 184.7993-629.2501 | - |
| B:triflumezopyrim | 5.1546+2.8824X | 0.8838 | 0.7792-1.0194 | - |
| A:B=20:1 | 2.5730+2.2822X | 11.5739 | 9.8076-14.2334 | 150.9953 |
| A:B=10:1 | 2.4964+3.0002X | 6.8310 | 6.1111-7.6652 | 138.0387 |
| A:B=5:1 | 3.5137+2.5144X | 3.9003 | 3.4013-4.4226 | 133.8840 |
| A:B=3:1 | 3.8390+3.0218X | 2.4222 | 2.1684-2.7019 | 144.6059 |
| A:B=1:1 | 4.9395+2.5868X | 1.0554 | 0.9244-1.1953 | 166.9675 |
| A:B=1:3 | 5.1650+2.6242X | 0.8652 | 0.7417-0.9897 | 136.0617 |
| A:B=1:5 | 5.2371+2.6357X | 0.8129 | 0.6964-0.9284 | 130.3834 |
| A:B=1:10 | 5.6849+2.8447X | 0.5745 | 0.5086-0.6464 | 169.1806 |
| A:B=1:20 | 5.6593+2.7015X | 0.5701 | 0.5032-0.6431 | 162.7517 |

Example 76 Indoor joint toxicity assay of the mixture of the compound I-72 and afidopyropen against *Unaspis yanonensis* Kuwana

Test target: *Unaspis yanonensis* Kuwana nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against *Unaspis yanonensis* Kuwana nymphs on citrus was determined by adopting the dipping method. First, the collected citrus leaves with *Unaspis yanonensis* Kuwana nymphs were treated with the pesticide solution in the order from low dosage to high dosage according to the experimental design. After air-drying, the petioles were kept moist with degreased cotton, and then the leaves were placed in a Petri dish, with 3 replicates for each treatment. In addition, a blank control was set up.

The treated test materials were placed in an observation room, and the temperature, humidity and illumination of the observation room could be adjusted as needed. The number of dead and live insects was investigated 120 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 76.

Table 76 Results of the indoor joint toxicity assay of the mixture of the compound I-72 and afidopyropen against *Unaspis yanonensis* Kuwana

| | Toxicity regression equation (Y=) | $LC_{50}$ (mg/L) | 95% confidence limit | Co-toxicity coefficient CTC |
|---|---|---|---|---|
| A:compound I-72 | 1.2378+3.3230X | 75.3647 | 66.5947-87.2211 | - |
| B:afidopyropen | 3.5760+3.1455X | 2.8361 | 2.5089-3.2287 | - |
| A:B=10:1 | 1.1362+3.1237X | 17.2553 | 15.1557-20.0360 | 131.3613 |
| A:B=5:1 | 2.1321+2.8602X | 10.0617 | 8.7001-11.4780 | 142.3385 |
| A:B=3:1 | 2.9961+2.2714X | 7.6249 | 6.5243-9.0375 | 133.6856 |
| A:B=1:1 | 3.6457+2.4394X | 3.5906 | 3.0975-4.1988 | 152.2418 |
| A:B=1:3 | 3.8700+2.7361X | 2.5882 | 2.2372-2.9606 | 144.2943 |
| A:B=1:5 | 4.1029+2.3574X | 2.4017 | 2.0193-2.8032 | 140.6441 |
| A:B=1:10 | 4.0801+2.3749X | 2.4399 | 2.0644-2.8371 | 127.3833 |

Example 77 Indoor joint toxicity assay of the mixture of the compound I-72 and pyrifluquinazon against *Bemisia tabaci* (Gennadius) nymphs

Test target: *Bemisia tabaci* (Gennadius) nymphs, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, cotton leaves with neat and consistent *Bemisia tabaci* (Gennadius) nymphs were selected and made into leaf disks, with about 20 insects on each leaf disk. Then, they were evenly sprayed with the pesticide solution in the order from low dosage to high dosage according to the experimental design, with 1.5 mL for each leaf and 3 replicates for each treatment. In addition, a blank control was set up.

The treated test materials were placed in an observation room, and the temperature, humidity and illumination of the observation room could be adjusted as needed. The number of dead and live insects was investigated 96 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 77.

Table 77 Results of the indoor joint toxicity assay of the mixture of the compound I-72 and pyrifluquinazon against *Bemisia tabaci* (Gennadius) nymphs

| | Toxicity regression equation (Y=) | $LC_{50}$ (mg/L) | 95% confidence limit | Co-toxicity coefficient CTC |
|---|---|---|---|---|
| A:compound I-72 | 2.4629+2.4586X | 10.7624 | 9.3580-12.2798 | - |
| B:pyrifluquinazon | 2.3501+2.5824X | 10.6205 | 9.2047-12.1407 | - |
| A:B=10:1 | 2.6073+2.6167X | 8.2107 | 6.8773-9.5483 | 130.9181 |
| A:B=5:1 | 2.7373+2.4699X | 8.2433 | 6.9192-9.5757 | 130.2686 |
| A:B=3:1 | 3.0897+2.1535X | 7.7102 | 6.2251-9.1953 | 139.1222 |
| A:B=1:1 | 3.1561+2.1385X | 7.2823 | 5.8114-8.7319 | 146.8067 |
| A:B=1:3 | 3.1894+2.0893X | 7.3552 | 5.8983-8.8063 | 144.8713 |
| A:B=1:5 | 2.8206+2.4801X | 7.5638 | 6.1818-8.9276 | 140.7208 |
| A:B=1:10 | 2.6941+2.6174X | 7.6032 | 6.2807-8.8999 | 139.8519 |

Example 78 Indoor joint toxicity assay of the mixture of the compound I-72 and flonicamid against *Thrips flavus* Schrank

Test target: *Thrips flavus* Schrank nymphs.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, eggplant seedlings with *Thrips flavus* Schrank were selected, and the base number was counted. Then, uniform spraying was performed with the pesticide solution in the order from low to high doses according to the experimental design, with 2 mL for each seedling and 3 replicates for each treatment. In addition, a blank control was set up.

The treated test materials were placed in an observation room, and the temperature, humidity and illumination of the observation room could be adjusted as needed. The number of dead and live insects was investigated 48 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 78.

Table 78 Results of the indoor joint toxicity assay of the mixture of the compound I-72 and flonicamid against *Thrips flavus* Schrank

| | Toxicity regression equation (Y=) | $LC_{50}$ (mg/L) | 95% confidence limit | Co-toxicity coefficient CTC |
|---|---|---|---|---|
| A:compound I-72 | 4.2048+2.8473X | 1.9023 | 1.7152-2.1416 | - |
| B:flonicamid | 1.6187+1.9821X | 50.8013 | 43.4319-61.6554 | - |
| A:B=10:1 | 4.5706+2.8180X | 1.4203 | 1.2897-1.5702 | 146.7819 |
| A:B=5:1 | 4.5113+2.6283X | 1.5344 | 1.3848-1.7121 | 147.6682 |
| A:B=1:1 | 4.1068+2.5124X | 2.2674 | 2.0346-2.5186 | 161.7401 |
| A:B=1:5 | 2.9110+2.4721X | 6.9986 | 6.2549-7.9316 | 137.3688 |
| A:B=1:10 | 2.6882+2.4238X | 8.9906 | 7.8646-10.5592 | 169.3369 |

Example 79 Indoor joint toxicity assay of the mixture of the compound I-72 and pymetrozine against *Ostrinia furnacalis* Guenee

Test target: 3rd-instar larvae of *Ostrinia furnacalis* Guenee.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: first, tender corn stems were selected and dipped in the prepared pesticide solution for 10

s in the order from low dosage to high dosage according to the experimental design. After natural air-drying in the shade, they were placed in a 9-cm-diameter Petri dish with filter paper, and uniform and healthy test insects were introduced, with 10 insects for each treatment and 3 replicates for each treatment. In addition, a blank control was set up.

The treated test materials were placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 79.

Table 79 Results of the indoor joint toxicity assay of the mixture of the compound I-72 and pymetrozine against *Ostrinia furnacalis* Guenee

| | Toxicity regression equation (Y=) | $LC_{50}$ (mg/L) | 95% confidence limit | Co-toxicity coefficient CTC |
|---|---|---|---|---|
| A:compound I-72 | 5.2269+2.3582X | 0.8012 | 0.6261-1.1211 | - |
| B:pymetrozine | 1.5419+1.3961X | 299.8472 | 152.34-472.18 | - |
| A:B=10:1 | 5.4593+2.6062X | 0.6664 | 0.5322-0.8741 | 132.2124 |
| A:B=5:1 | 5.4590+2.8598X | 0.6910 | 0.5607-0.8943 | 139.0654 |
| A:B=1:1 | 5.0036+2.1151X | 0.9961 | 0.7389-1.2880 | 160.4521 |
| A:B=1:5 | 3.7853+2.5281X | 3.0233 | 2.4132-3.9026 | 156.9172 |
| A:B=1:10 | 3.5500+1.8490X | 6.0841 | 4.2773-11.0577 | 141.0921 |

Example 80

Joint toxicity assay of the composition containing the compound I-72 against *Agrotis ypsilon* (Rottemberg)

Test target: 3rd-instar larvae of *Agrotis ypsilon* (Rottemberg), a sensitive strain reared indoors.
Test conditions: temperature: 24-26°C, humidity: RH 60%, and illumination: L:D = 14:10

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity against *Agrotis ypsilon* (Rottemberg) was determined by the insect-dipping method. The early 3rd-instar larvae of *Agrotis ypsilon* (Rottemberg) were selected. The target insects were dipped into the pesticide solution for 10 s and then taken out. Excess pesticide solution was absorbed with filter paper. Each treatment had 4 replicates, with 12 insects dipped in each replicate. A treatment without the pesticide was set as the blank control.

The test insects were transferred to a multi-well culture plate with fresh cabbage leaves and placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation and $LC_{50}$ value of each single test pesticide and each mixture of different ratios. Then, the co-toxicity coefficient of each ratio was calculated using the Sun Y-P method to evaluate the mixing effect, as in Example 1. The test results are shown in Table 80.

Table 80 Results of the joint toxicity assay of the composition containing the compound I-72 against *Agrotis ypsilon* (Rottemberg)

| Treatment | Toxicity regression equation (Y=a+bX) | $LC_{50}$ (mg/L) | 95% confidence limit | Co-toxicity coefficient CTC |
|---|---|---|---|---|
| A:compound I-72 | Y=7.2276+3.8571X | 0.2645 | 0.2307-0.3049 | - |
| B:SYP-1620 | Y=-13.3710+7.1825X | 361.2037 | 305.9875-546.9692 | - |
| A:B=40:1 | Y=7.9750+4.4456X | 0.2142 | 0.1858-0.2430 | 127 |
| A:B=20:1 | Y=7.5628+3.9877X | 0.2277 | 0.1974-0.2602 | 122 |
| A:B=10:1 | Y=7.8907+4.0935X | 0.1967 | 0.1681-0.2249 | 148 |
| A:B=5:1 | Y=7.5729+3.7392X | 0.2051 | 0.1753-0.2356 | 155 |

(continued)

| Treatment | Toxicity regression equation (Y=a+bX) | $LC_{50}$ (mg/L) | 95% confidence limit | Co-toxicity coefficient CTC |
|---|---|---|---|---|
| A:B=1:1 | Y=6.9462+4.9686X | 0.4058 | 0.3510-0.4580 | 130 |
| A:B=1:10 | Y=4.1076+3.5270X | 1.7906 | 1.4962-2.0771 | 161 |
| A:B=1:20 | Y=2.7605+3.9884X | 3.6435 | 3.0733-4.1873 | 150 |
| A:compound I-72 | Y=7.2276+3.8571X | 0.2645 | 0.2307-0.3049 | - |
| B:fludioxonil | Y=-12.0679+6.5848X | 390.8726 | 350.5889-464.8088 | - |
| A:B=40:1 | Y=7.8592+4.2073X | 0.2091 | 0.1804-0.2382 | 130 |
| A:B=20:1 | Y=7.6140+4.0187X | 0.2236 | 0.1937-0.2554 | 124 |
| A:B=10:1 | Y=7.8014+3.9319X | 0.1939 | 0.1650-0.2223 | 150 |
| A:B=5:1 | Y=7.7105+3.8347X | 0.1964 | 0.1672-0.2255 | 162 |
| A:B=1:1 | Y=6.9749+4.8184X | 0.3892 | 0.3340-0.4408 | 136 |
| A:B=1:10 | Y=4.1510+3.4857X | 1.7521 | 1.4575-2.0369 | 165 |
| A:B=1:20 | Y=2.7220+4.0398X | 3.6635 | 3.0947-4.2057 | 150 |

It can be seen from the table (Table 80) that the mixtures of the compound I-72 with SYP-1620 and fludioxonil show a significant synergistic effect on the 3rd-instar larvae of *Agrotis ypsilon* (Rottemberg) in a ratio range of 40: 1-1:20.

Example 81

Joint toxicity assay of the composition containing the compound I-72 against *Agrotis ypsilon* (Rottemberg)

Test target: 3rd-instar larvae of *Agrotis ypsilon* (Rottemberg), a sensitive strain reared indoors.
Test conditions: temperature: 24-26°C, humidity: RH 60%, and illumination: L:D = 14:10

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity against *Agrotis ypsilon* (Rottemberg) was determined by the insect-dipping method. The early 3rd-instar larvae of *Agrotis ypsilon* (Rottemberg) were selected. The target insects were dipped into the pesticide solution for 10 s and then taken out. Excess pesticide solution was absorbed with filter paper. Each treatment had 4 replicates, with 12 insects dipped in each replicate. A treatment without the pesticide was set as the blank control.

The test insects were transferred to a multi-well culture plate with fresh cabbage leaves and placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation and $LC_{50}$ value of each single test pesticide and each mixture of different ratios. Then, the co-toxicity coefficient of each ratio was calculated using the Sun Y-P method to evaluate the mixing effect, as in Example 1. The test results are shown in Table 81.

Table 81 Results of the joint toxicity assay of the composition containing the compound I-72 against *Agrotis ypsilon* (Rottemberg)

| Treatment | Toxicity regression equation (Y=a+bX) | $LC_{50}$ (mg/L) | 95% confidence limit | Co-toxicity coefficient CTC |
|---|---|---|---|---|
| A:compound I-72 | Y=7.2276+3.8571X | 0.2645 | 0.2307-0.3049 | - |
| B:metalaxyl-M | Y=-10.7240+6.0397X | 401.2975 | 356.5468-486.6244 | - |
| A:B=40:1 | Y=7.6873+4.1021X | 0.2213 | 0.1917-0.2524 | 123 |
| A:B=20:1 | Y=7.4820+3.7528X | 0.2181 | 0.1877-0.2503 | 127 |
| A:B=10:1 | Y=7.3437+3.2935X | 0.1943 | 0.1635-0.2257 | 150 |
| A:B=5:1 | Y=7.7992+3.7520X | 0.1794 | 0.1505-0.2072 | 177 |
| A:B=1:1 | Y=6.5821+3.8996X | 0.3929 | 0.3348-0.4506 | 135 |
| A:B=1:10 | Y=4.1187+3.7895X | 1.7083 | 1.4213-1.9782 | 169 |

(continued)

| Treatment | Toxicity regression equation (Y=a+bX) | $LC_{50}$ (mg/L) | 95% confidence limit | Co-toxicity coefficient CTC |
|---|---|---|---|---|
| A:B=1:20 | Y=2.5576+3.7733X | 4.4389 | 3.8271-5.0927 | 124 |

It can be seen from the table (Table 81) that the mixture of the compound I-72 and metalaxyl-M shows a significant synergistic effect on the 3rd-instar larvae of *Agrotis ypsilon* (Rottemberg) in a ratio range of 40:1-1:20.

Example 82

Joint toxicity assay of the composition containing the compound I-72 against *Holotrichia diomphalia* Bates

Test target: early 2nd-instar grubs of *Holotrichia diomphalia* Bates.
Test conditions: temperature: 24-26°C, humidity: RH 60%, and illumination: L:D = 14:10

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity against *Holotrichia diomphalia* Bates was determined by the insect-dipping method. The early 2nd-instar grubs of *Holotrichia diomphalia* Bates were selected. The target insects were dipped into the pesticide solution for 10 s and then taken out. Excess pesticide solution was absorbed with filter paper. Each treatment had 4 replicates, with 12 insects dipped in each replicate. A treatment without the pesticide was set as the blank control.

The test insects were transferred to a multi-well culture plate with fresh potato pieces and placed in an observation room, and the temperature, humidity and illumination of the observation room could be adjusted as needed. The number of dead and live insects was investigated 72 hours later. The corrected mortality rate was calculated using the Abbott's formula, and statistical analysis was performed with the DPS data processing software to obtain the toxicity regression equation and $LC_{50}$ value of each single test pesticide and each mixture of different ratios. Then, the co-toxicity coefficient of each ratio was calculated using the Sun Y-P method to evaluate the mixing effect, as in Example 1. The test results are shown in Table 82.

Table 82 Results of the joint toxicity assay of the composition containing the compound I-72 against *Holotrichia diomphalia* Bates

| Treatment | Toxicity regression equation (Y=a+bX) | $LC_{50}$ (mg/L) | 95% confidence limit | Co-toxicity coefficient CTC |
|---|---|---|---|---|
| A:compound I-72 | Y=-1.9708+3.8683X | 63.3886 | 55.2514-74.3762 | - |
| B:difenoconazole | Y=-12.4829+6.4772X | 500.2196 | 457.6328-572.9141 | - |
| A:B=40:1 | Y=-0.9032+3.4275X | 52.7574 | 45.5983-61.3279 | 123 |
| A:B=20:1 | Y=-2.0759+4.0798X | 54.2450 | 47.5241-62.4035 | 122 |
| A:B=10:1 | Y=-1.0229+3.4569X | 55.2466 | 47.8243-64.3840 | 125 |
| A:B=5:1 | Y=-1.9226+3.9303X | 57.7199 | 50.4576-66.9262 | 129 |
| A:B=1:1 | Y=0.3253+2.4086X | 87.2615 | 71.8916-104.5326 | 129 |
| A:B=1:10 | Y=-1.9378+2.8992X | 247.1978 | 186.1450-291.0729 | 124 |
| A:B=1:20 | Y=-4.2617+3.7246X | 306.6353 | 265.3944-342.1554 | 123 |
| A:compound I-72 | Y=-1.9708+3.8683X | 63.3886 | 55.2514-74.3762 | - |
| B:tebuconazole | Y=-10.4571+5.7716X | 476.5604 | 437.3747-538.3860 | - |
| A:B=40:1 | Y=-1.6272+3.8395X | 53.2161 | 46.4056-61.3778 | 122 |
| A:B=20:1 | Y=-0.4242+3.2812X | 44.9863 | 38.4221-52.1896 | 147 |
| A:B=10:1 | Y=-0.1028+3.0454X | 47.3774 | 40.3394-55.3847 | 145 |
| A:B=5:1 | Y=-1.3110+3.6137X | 55.7718 | 48.4518-64.8293 | 133 |
| A:B=1:1 | Y=-0.5056+2.8118X | 90.7943 | 76.4693-106.8875 | 123 |
| A:B=1:10 | Y=-2.9888+3.3406X | 246.2659 | 192.8891-285.8921 | 122 |
| A:B=1:20 | Y=-5.5385+4.2511X | 301.3287 | 264.1500-333.2241 | 121 |
| A:compound I-72 | Y=-1.9708+3.8683X | 63.3886 | 55.2514-74.3762 | - |

(continued)

| Treatment | Toxicity regression equation (Y=a+bX) | $LC_{50}$ (mg/L) | 95% confidence limit | Co-toxicity coefficient CTC |
|---|---|---|---|---|
| B:azoxystrobin | Y=-8.5199+5.0535X | 473.5404 | 431.9212-538.9193 | - |
| A:B=40:1 | Y=-1.1665+3.5720X | 53.2527 | 46.1881-61.7424 | 122 |
| A:B=20:1 | Y=-0.1112+3.1247X | 43.2223 | 36.6352-50.3495 | 153 |
| A:B=10:1 | Y=0.2779+2.8810X | 43.5565 | 36.6552-51.1316 | 158 |
| A:B=5:1 | Y=0.1312+2.8842X | 48.7603 | 41.3617-57.3566 | 152 |
| A:B=1:1 | Y=-1.2889+3.2380X | 87.5424 | 74.5162-101.6585 | 128 |
| A:B=1:10 | Y=-2.3745+3.0871X | 244.7902 | 187.0800-286.7940 | 122 |
| A:B=1:20 | Y=-5.7809+4.3534X | 299.5293 | 262.9111-330.8528 | 121 |

It can be seen from the table (Table 82) that the mixtures of the compound I-72 with difenoconazole, tebuconazole and azoxystrobin show synergistic effects on the early 2nd-instar grubs of *Holotrichia diomphalia* Bates in a ratio range of 40:1-1:20.

Example 83

Control efficacy of the composition containing the compound I-72 against Bemisia tabaci (Gennadius)

Test target: adult *Bemisia tabaci* (Gennadius), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the spraying method was adopted. Healthy cotton seedlings (with 2 cotyledons) were selected. Then, the prepared pesticide solution was sprayed onto the whole plant with an airbrush manual sprayer in the order from low dosage to high dosage according to the experimental design. After natural air-drying in the shade, the seedlings were covered with a glass hood. After the test insects became stable, about 40 test insects were introduced, and the unhealthy test insects on the surface were removed. The experiment had 4 replicates set, and in addition, a blank control was set up. The results were investigated 72 hours later, and the mortality rate was calculated.

The corrected mortality rate was calculated using the Abbott's formula, and statistical analysis was performed with the DPS data processing software to obtain the toxicity regression equation and $LC_{50}$ value of each single test pesticide and each mixture of different ratios. Then, the co-toxicity coefficient of each ratio was calculated using the Sun Y-P method to evaluate the mixing effect, as in Example 1. The test results are shown in Table 83.

Table 83 Results of the joint toxicity assay of the composition containing the compound I-72 against *Bemisia tabaci* (Gennadius)

| Treatment | Toxicity regression equation (Y=a+bX) | $LC_{50}$ (mg/L) | 95% confidence limit | Co-toxicity coefficient CTC |
|---|---|---|---|---|
| A:compound I-72 | Y=3.1603+3.0458X | 4.0181 | 3.6650-4.3805 | - |
| B:pyraclostrobin | Y=-4.7645+3.7171X | 423.5490 | 386.3658-477.5535 | - |
| A:B=40:1 | Y=3.6818+2.5114X | 3.3487 | 2.9843-3.7140 | 123 |
| A:B=20:1 | Y=3.6840+2.4456X | 3.4523 | 3.0782-3.8301 | 122 |
| A:B=10:1 | Y=3.3925+3.1366X | 3.2546 | 2.5363-3.9400 | 136 |
| A:B=5:1 | Y=3.5315+2.5995X | 3.6721 | 3.3022-4.0485 | 131 |
| A:B=1:1 | Y=2.6504+2.9615X | 6.2141 | 5.5548-6.8577 | 128 |
| A:B=1:10 | Y=1.6310+2.2891X | 29.6333 | 25.9268-33.3001 | 136 |
| A:B=1:20 | Y=1.0105+2.2841X | 55.7977 | 48.4839-62.9772 | 127 |

It can be seen from the table (Table 83) that the mixture of the compound I-72 and pyraclostrobin shows a synergistic effect on the adult *Bemisia tabaci* (Gennadius) in a ratio range of 40:1-1:20.

Example 84 Indoor joint toxicity assay of the mixture of the compound I-72 and pyridaben against *Tetranychus cinnabarinus* (Boisduval)

Test target: adult *Tetranychus cinnabarinus* (Boisduval), a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the adult *Tetranychus cinnabarinus* (Boisduval) was determined by adopting the potted-seedling spraying method. First, the adult Tetranychus cinnabarinus of uniform size were transferred onto the leaves of kidney bean seedlings at the stage when the first pair of true leaves was fully expanded. After the adult mites had stabilized, the base number was counted. Then, the uniform spraying was performed with the pesticide solution in the order from low to high dose according to the experimental design, with 1.5 mL for each seedling and 3 replicates for each treatment. In addition, a blank control was set up.

The treated test materials were placed in an observation room, and the temperature, humidity and illumination of the observation room could be adjusted as needed. The number of dead and live mites was investigated after 72 hours. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect, as in Example 1. The test results are shown in Table 84.

Table 84 Results of the indoor joint toxicity assay of the mixture of the compound I72 and pyridaben against *Tetranychus cinnabarinus* (Boisduval)

| | Toxicity regression equation (Y=) | $LC_{50}$ (mg/L) | 95% confidence limit | Co-toxicity coefficient CTC |
|---|---|---|---|---|
| A:compound I72 | 2.1156+1.8907X | 33.5420 | 28.0069-39.9282 | - |
| B:pyridaben | 3.4455+1.5069X | 10.7552 | 7.4530-21.7433 | - |
| A:B=10:1 | 1.5402+2.6775X | 19.5959 | 17.1568-22.5943 | 143.5244 |
| A:B=5:1 | 1.6150+2.9118X | 14.5382 | 12.4927-16.5973 | 170.5076 |
| A:B=1:1 | 2.7607+2.2800X | 9.5969 | 8.2988-11.1766 | 169.7186 |
| A:B=1:5 | 2.8194+2.4357X | 7.8574 | 6.8349-9.1099 | 154.3567 |
| A:B=1:10 | 3.3742+1.8288X | 7.7443 | 6.1173-11.0459 | 148.0202 |

Example 85 Indoor joint toxicity assay of the mixture of the compound I-72 and cyetpyrafen against *Tetranychus urticae* Koch

Test target: adult *Tetranychus urticae* Koch, a sensitive strain reared indoors.

Preparation of the pesticide solution: according to different test requirements, the test samples were accurately weighed respectively with an electronic analytical balance. The technical pesticides were dissolved in acetone, and then diluted with 0.1% Tween 80 water into a series of pesticide solutions with a certain concentration gradient according to the experimental design dosage.

Experimental method: the activity of the mixture against the adult *Tetranychus urticae* Koch was determined by adopting the potted-seedling spraying method. First, the adult *Tetranychus urticae* Koch of uniform size were transferred onto the leaves of kidney bean seedlings at the stage when the first pair of true leaves was fully expanded. After the adult mites had stabilized, the base number was counted. Then, the uniform spraying was performed with the pesticide solution in the order from low to high dose according to the experimental design, with 1.5 mL for each seedling and 3 replicates for each treatment. In addition, a blank control was set up.

The treated test materials were placed in an observation room, and the temperature, humidity and illumination of the observation room could be adjusted as needed. The number of dead and live mites was investigated after 72 hours. The corrected mortality rate was calculated using the Abbott's formula, and statistical analysis was performed with the DPS data processing software to obtain the toxicity regression equation, $LC_{50}$ value and 95% confidence limit of each single test pesticide and each mixture of different ratios. Then, the co-toxicity coefficient of each ratio was calculated using the Sun Y-P method to evaluate the mixing effect (the same as in Example 1). The test results are shown in Table 85.

Table 85 Results of the indoor joint toxicity assay of the mixture of the compound I72 and cyetpyrafen against *Tetranychus urticae* Koch

| | Toxicity regression equation (Y=) | $LC_{50}$ (mg/L) | 95% confidence limit | Co-toxicity coefficient CTC |
|---|---|---|---|---|
| A:compound I72 | 1.6012+2.1152X | 40.4416 | 34.9387-47.3559 | - |
| B:cyetpyrafen | 5.3227+1.5123X | 0.6118 | 0.4933-0.8288 | - |
| A:B=20:1 | 3.8016+1.4662X | 6.5664 | 5.1933-9.2598 | 150.2117 |
| A:B=10:1 | 3.9279+1.9455X | 3.5568 | 3.0073-4.2093 | 164.3470 |
| A:B=1:1 | 5.3770+2.0094X | 0.6492 | 0.5392-0.8370 | 185.6693 |
| A:B=1:10 | 5.7999+1.7963X | 0.3587 | 0.3009-0.4278 | 187.3330 |
| A:B=1:20 | 5.8488+1.8035X | 0.3384 | 0.2842-0.4006 | 189.6881 |

**Examples of field trials**

Example 86 Field efficacy trial of the compound I-72 and *Bacillus thuringiensis* in controlling *Cnaphalocrocis medinalis*

This trial was arranged in the suburban area of Jurong City, Jiangsu Province. The conventional spraying method was adopted in the trial. The investigation method was to take samples at 5 points, and a total of 25 clusters of rice were investigated. The investigation was performed 20 days after the pesticide application. By comparing with the leaf rolling rate in the control plot, the relative control efficacy was calculated. The amount of water used per mu was 45 L.

The test pesticides were as follows: A: 8000 IU/μL *Bacillus thuringiensis* suspension (produced by Qingdao Audis Biotechnology Co., Ltd. of Shandong), and B: compound I-72 (dissolved in acetone, 0.1% Tween 80 was added, and a 10% stock solution was prepared for use).

$$\text{Leaf rolling rate} = (\text{number of investigated rolled leaves} / \text{total number of investigated leaves}) \times 100$$

$$\text{Control efficacy} = (\text{CK-PT})/\text{CK} \times 100$$

in the formula, CK is the leaf rolling rate in the blank control plot after the pesticide application
PT is the leaf rolling rate in the pesticide-treated plot after the pesticide application

It can be seen from the table (Table 86) that the combination of the compound I-72 and *Bacillus thuringiensis* is significantly more effective in controlling *Cnaphalocrocis medinalis* on rice than the use of a single pesticide.

Table 86 Results of the field efficacy trial of the compound I-72 and *Bacillus thuringiensis* in controlling *Cnaphalocrocis medinalis*

| Pesticide treatment | Dose (per mu) | Leaf rolling rate (%) | Control efficacy (%) |
|---|---|---|---|
| 8000 IU/μL *Bacillus thuringiensis* suspension | 500ml | 12.3 | 70.9 |
| Compound I-72 | 9ml | 8.6 | 79.6 |
| Compound I-72 | 11.25ml | 6.3 | 85.0 |
| Compound I-72 | 13.5ml | 5.6 | 86.8 |
| 8000 IU/μL *Bacillus thuringiensis* suspension + compound I-72 | 200ml+4.5ml | 1.4 | 96.6 |
| 8000 IU/μL *Bacillus* | 200ml +5.625ml | 0.5 | 98.9 |
| *thuringiensis* suspension + compound I-72 | | | |
| 8000 IU/μL *Bacillus thuringiensis* suspension + compound I-72 | 200ml+6.75ml | 0.2 | 99.6 |
| Blank control | | 42.3 | |

Example 87 Field efficacy trial of the compound I-72 and *Spodoptera exigua* Hübner nucleopolyhedrovirus in controlling *Spodoptera exigua* Hübner

This trial was arranged in the field trial shed area of the Wuhan Vegetable Research Institute. The spraying method was adopted for pesticide application. The investigation method was to take samples at 5 points, with 2 fixed plants at each point. A total of 10 plants were investigated in each plot, and the trial was repeated four times. The population base of pests was investigated before the pesticide application, and investigations were performed 3 days and 7 days after the pesticide application. The amount of water used per mu was 30L. The calculation method for the efficacy of the test pesticides is as follows:

$$\text{Pest population reduction rate (\%)} = \frac{\text{Number of pests before pesticide application} - \text{number of pests after pesticide application}}{\text{Number of pests before pesticide application}} \times 100$$

$$\text{Control efficacy (\%)} = \frac{\text{Pest population reduction rate in the treated plot} - \text{pest population reduction rate in the blank control plot}}{100 - \text{pest population reduction rate in the blank control plot}} \times 100$$

Test pesticides: A: *Spodoptera exigua* Hübner nucleopolyhedrovirus suspension with 3 billion PIBs (produced by Henan Jiyuan Baiyun Industrial Co., Ltd.); and B: compound I-72 (dissolved in acetone, 0.1% Tween 80 was added, and a 10% stock solution was prepared for use).

It can be seen from the table (Table 87) that the combination of the compound I-72 and *Spodoptera exigua* Hübner nucleopolyhedrovirus has very good control efficacy on *Spodoptera exigua* Hiibner, and the effect of combined use is significantly better than that of using a single pesticide.

Table 87 Results of the field efficacy trial of the compound I-72 and *Spodoptera exigua* Hübner nucleopolyhedrovirus in controlling *Spodoptera exigua* Hübner

| Treatment | Dose (per mu) | Control efficacy (%) | |
|---|---|---|---|
| | | 3 days after pesticide application | 7 days after pesticide application |
| *Spodoptera exigua* Hübner nucleopolyhedrovirus suspension with 3 billion PIBs | 30ml | 56.1 | 73.8 |
| Compound I-72 | 6ml | 59.8 | 71.5 |
| Compound I-72 | 9ml | 66.5 | 75.2 |
| Compound I-72 | 12ml | 72.8 | 82.4 |
| *Spodoptera exigua* Hübner nucleopolyhedrovirus suspension with 3 billion PIBs + compound I-72 | 10ml+3ml | 84.5 | 94.6 |
| *Spodoptera exigua* Hübner nucleopolyhedrovirus suspension with 3 billion PIBs + compound I-72 | 10ml +4.5ml | 87.0 | 96.2 |
| *Spodoptera exigua* Hübner nucleopolyhedrovirus suspension with 3 billion PIBs + compound I-72 | 10ml+6 mg/L | 90.8 | 98.1 |

Example 88 Field efficacy trial of the compound I-72 and *Beauveria bassiana* in controlling *Empoasca pirisuga*

This trial was performed in a tea garden in Yuhang District, Hangzhou. The spraying method was used for pesticide application. The investigation method was to take samples at 5 points, with 2 fixed plants at each point. A total of 10 plants were investigated in each plot, and the trial was replicated four times. The number of *Empoasca vitis* nymphs on the back of 100 tender leaves in each plot was randomly investigated. The amount of the pesticide solution sprayed was 75 L per mu. The base number was investigated before the pesticide application, and the number of live *Empoasca pirisuga* in each treatment sample point was investigated 3, 7 and 14 days after the pesticide application. The calculation method for the efficacy of the test pesticides was the same as that in Example 38.

Test pesticides: A: wettable powder of *Beauveria bassiana* with 40 billion spores/gram (Jiangxi Tianren Ecology Co., Ltd.); and B: compound I-72 (dissolved in acetone, 0.1% Tween 80 was added, and a 10% stock solution was prepared for use).

It can be seen from the table (Table 88) that the combination of the compound I-72 and *Beauveria bassiana* has very good control efficacy on *Empoasca pirisuga,* and the control efficacy of the combined use is significantly better than that of using a single pesticide.

Table 88 Results of the field efficacy trial of the compound I-72 and *Beauveria bassiana* in controlling *Empoasca pirisuga*

| Treatment | Dose | Control efficacy (%) | | |
|---|---|---|---|---|
| | | 3 days after pesticide application | 7 days after pesticide application | 14 days after pesticide application |
| Wettable powder of *Beauveria bassiana* with 40 billion spores/gram | 30 grams | 52.0 | 68.4 | 76.6 |
| Compound I-72 | 15 ml | 57.0 | 75.8 | 74.2 |
| Compound I-72 | 30 ml | 57.5 | 77.7 | 79.3 |
| Compound I-72 | 45 ml | 62.5 | 78.1 | 78.9 |
| Wettable powder of *Beauveria bassiana* with 40 billion spores/gram + compound I-72 | 15 grams + 7.5 ml | 86.5 | 96.2 | 98.5 |
| Wettable powder of *Beauveria bassiana* with 40 billion spores/gram + compound I-72 | 15 grams + 15 ml | 91.0 | 98.6 | 99.0 |
| Wettable powder of *Beauveria bassiana* with 40 billion spores/gram + | 15 grams + 22.5 ml | 91.2 | 99.3 | 99.5 |
| compound I-72 | | | | |

Example 89

Control efficacy of the composition containing the compound I-72 against *Rhizoctonia solani*
Test target: *Rhizoctonia solani,* a sensitive strain cultured indoors.

The trial adopted the seedling potting method. Test crop: rice. Experimental method: the rice seedlings were cultured to the 2-leaf stage in the greenhouse of the experimental materials. Foliar spraying treatment was performed on the crop sprayer according to the designed dosage. The test target strain was inoculated 24 hours after the pesticide treatment. All the inoculated experimental materials were cultured in a phytotron. The results were investigated when the blank control showed full development of the disease. The disease grading and the calculation method of the control efficacy both referred to the agricultural industry standards of the People’s Republic of China. The results are shown in Table 89.

Table 89 Control efficacy of the composition containing the compound I-72 against *Rhizoctonia solani*

| Treatment | Control efficacy (%) | | |
|---|---|---|---|
| | 20 mg/L | 10 mg/L | 5mg/L |
| A:compound I-72 | 0 | 0 | 0 |
| B:pyraoxystrobin | 82.4 | 71.5 | 42.8 |
| A:B=1:40 | 96.0 | 85.5 | 63.7 |
| A:B=1:20 | 95.6 | 82.6 | 55.8 |
| A:B=1:10 | 90.8 | 81.8 | 64.5 |
| A:B=1:5 | 85.9 | 78.9 | 55.8 |
| A:B=1:1 | 82.5 | 73.9 | 48.9 |

(continued)

| Treatment | Control efficacy (%) | | |
|---|---|---|---|
| | 20 mg/L | 10 mg/L | 5mg/L |
| A:compound I-72 | 0 | 0 | 0 |
| B:coumoxystrobin | 81.5 | 61.9 | 44.3 |
| A:B=1:40 | 95.4 | 90.2 | 65.2 |
| A:B=1:20 | 91.5 | 85.9 | 65.6 |
| A:B=1:10 | 90.1 | 78.6 | 62.9 |
| A:B=1:5 | 90.6 | 69.3 | 53.5 |
| A:B=1:1 | 85.3 | 69.7 | 49.8 |

It can be seen from the table (Table 89) that the mixtures of the compound I-72, pyraoxystrobin and coumoxystrobin show a synergistic effect on *Rhizoctonia solani* in a ratio range of 1:40-1:1.

The descriptions of the above examples are only used to help understand the method and core idea of the present invention. It should be noted that for those of ordinary skill in the art of this technical field, without departing from the principle of the present invention, several improvements and modifications can be made to the present invention, and these improvements and modifications also fall within the scope of protection of the claims of the present invention. From the above technical solutions, it can be known that the insecticidal and acaricidal composition of the present invention has the advantages of improving the pesticide efficacy, expanding the pesticidal spectrum, reducing the dosage of pesticides, decreasing the residue level of pesticides on crops, reducing environmental pollution, being safe for human beings and livestock, having good environmental compatibility, and making it difficult for pests to develop drug resistance. The composition of the present invention can be applied to the control of various pests and mites on a variety of crops, and can be widely applied in the agricultural field.

## Claims

1. A binary insecticide composition consisting of two active ingredients A and B, wherein the active ingredient A is selected from a compound I-72, and the active ingredient B is selected from one or more of a nereistoxin insecticide, a macrolide insecticide, an organophosphorus insecticide, a carbamate insecticide, a tetronic acid insecticide, a nematicide, a biogenic insecticide, a pyrethroid insecticide, a plant growth regulator, an insect attractant, a repellent, an insect growth regulator insecticide, an amide insecticide, a nicotinoid insecticide, an insect feeding-blocking insecticide, a fungicide, an acaricide, or other insecticides and inorganic substances; a ratio of parts by weight of the two active ingredients in the composition is 100: 1-1: 100; and
the active ingredient A has a structure of:

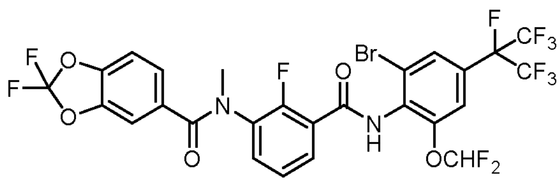

compound I-72.

2. The binary insecticide composition according to claim 1, wherein the nereistoxin insecticide is selected from: cartap, bisultap, monosultap, thiocyclam, bensultap, trithialan or polythialan;

   the macrolide insecticide is selected from: abamectin, spinetoram, spinosad, emamectin benzoate, liuyangmycin, ivermectin, emamectin, milbemectin, milbemycin, doramectin, eprinomectin, moxidectin, selamectin, alkenyl emamectin benzoate, nikkomycin or milbemycin oxime;
   the organophosphorus insecticide is selected from: acephate, chlorpyrifos, chlorpyrifos-methyl, omethoate, diazinon, methamidophos, monocrotophos, parathion-methyl, parathion, terbufos, phoxim, methidathion, triazophos, azinphos-methyl, azinphos-ethyl, chlorethoxyfos, chlorfenvinphos, chlormephos, coumaphos, cyanophos, phosmet, dichlorvos, dicrotophos, dimethylvinphos, disulfoton, **O-**ethyl O-p-nitrophenyl phenylphosphonothioate, ethion, fenthion, heptenophos, mecarbam, mevinphos, naled, oxydemeton-methyl, phenthoate, isofenphos, pirimiphos-methyl, pirimiphos-ethyl, propaphos, propetamphos, prothiofos, pyraclofos, pyridaphenthion, quinalphos, sulfotep, temephos, tetrachlorvinphos, thiometon, trichlorfon, acethion, malathion, phosalone, vamidothion, naftalofos, isoxathion, pyrazophos, fenitrothion, sulprofos, xiaochongthion, azamethiphos, diazinon, fonofos, bromophos-ethyl, bromfenvinphos, trithion, cyanofenphos, demeton-methyl, dioxabenzofos, flupyrazofos, formothion, fosmethilan, iodofenphos, iprobenfos, methacrifos, pyridathion, prothoate, tebupirimfos;

the carbamate insecticide is selected from: carbosulfan, o-chlorophenyl N-methylcarbamate, dimetan, pyrolan, pyramat, isolan, methomyl, butocarboxim, carbaryl, fenothiocarb, methiocarb, mexacarbate, metolcarb, propoxur, thiofanox, triazamate, fenobucarb, pirimicarb, benfuracarb, bendiocarb, furathiocarb, butoxycarboxim, ethiofencarb, isoprocarb, trimethacarb, 3,5-xylyl methylcarbamate, xylylcarb, fenoxycarb or nitrilacarb;

the tetronic acid insecticide is selected from: spirodiclofen, spirotetramat, spiromesifen, spiropidion, spirobudifen or spidoxamat;

the nematicide is selected from: a halogenated hydrocarbon nematicide, an organic sulfur nematicide, other fumigant nematicides, an organophosphorus nematicide, a carbamate nematicide, an arylformamide nematicide, a trifluorobutene nematicide, an oxadiazole sulfide nematicide, a fused-ring nematicide, other non-fumigant nematicides or a microbial nematicide;

the biogenic insecticide is selected from: a preparation containing a microorganism, matrine, eucalyptol, mineral oil, star anise oil, allicin, bilobol, d-limonene, diatomaceous earth, rotenone, azadirachtin, an extract of *Celastrus angulatus, Cordyceps javanica,* an extract of *Veratrum nigrum rhizome, Paecilomyces, Aschersonia, Verticillium,* osthole, chamaejasmine, tea saponin, oxymatrine, a preparation containing a nuclear polyhedrosis virus, a preparation containing a cytoplasmic polyhedrosis virus, a preparation containing a granulosis virus, a grain-boosting agent or coronatine;

the pyrethroid insecticide is selected from: bifenthrin; furethrin; gamma-cyhalothrin; barthrin; metofluthrin; fenpropathrin; methothrin; terallethrin; cyclethrin; beta-cypermethrin; lambda-cyhalothrin; cypermethrin; beta-cyfluthrin; cyfluthrin; tetramethrin; permethrin; etofenprox; deltamethrin; pyresmethrin; phenothrin; cyphenothrin; fenpirithrin; resmethrin; dimethrin; butethrin; transpermethrin; theta-cypermethrin; rich-d-t-tetramethrin; flucythrinate; tan-fluvalinate; proparthin; acrinathrin; silafluofen; flumethrin; pyrethrin; empenthrin; heptafluthrin; meperfluthrin; zeta-cypermethrin; chlorempenthrin; japothrin; tefluthrin; fenvalerate; esfenvalerate; prallethrin; furamethrin; imiprothrin; kadethrin; cyhalothrin; flufenprox; bioresmethrin; biopermethrin; bioallethrin; S-bioallethrin; cismethrin; alpha-cypermethrin; transfluthrin; dimefluthrin; tetramethylfluthrin; tralomethrin; fenfluthrin; valerate; pentmethrin; allethrin; bromethrin; brofluthrinate; tralocythrin; brofenvalerate; cycloprothrin; d-tetramethrin; d-trans-tetramethrin; chloroprallethrin; heptafluthrin; bioallethrin; chlorempenthrin; d-allethrin; rich-d-trans-allethrin; d-phenothrin; d-cyphenothrin; profluthrin; momfluorothrin; kappatefluthrin; kappa-bifenthrin; epsilon-momfluorothrin; epsilon-metofluthrin; cis-fenvalerate; cyhalothrin; rich-d-trans-allethrin; Es-bioallethrin or d-cyphenothrin;

the plant growth regulator is selected from: paclobutrazol; brassinolide; 24-epibrassinolide mixture; 22-epibrassinolide; 23-epibrassinolide; 24-epibrassinolide; 28-epihomobrassinolide; 14-hydroxybrassinosteroid; brassin; a brassinosteroid; brassinolide; 920; gibberellic acid; gibberellin; auxin; cytokinin; ethephon; abscisic acid; S-abscisic acid (S-ABA); humic acid; alginic acid; an amino acid; chitosan; chitin; hydroxymethyl chitosan; mepiquat chloride; prohexadione-calcium; thidiazuron;

the insect attractant and the repellent are selected from: disparlure; gossyplure; a sex attractant of *Chilo suppressalis*; a sex attractant of *Cossidae*; a sex pheromone of *Athetis lepigone*; a sex attractant of *Spodoptera litura*; an attractant of *Ceratitis capitata*; a sex pheromone of *Lygus lucorum*; a mating disruption pheromone of *Grapholita molesta*; muscalure; grandlure; trimedlure; cuelure; $\alpha$-multistriatin; orfralure; oryctalure; ostramone; dibutyl adipate; tabatrex; MGK 11; ethyl hexanediol; dibutyl phthalate; dimethyl carbate; dimethyl phthalate; MGK 326; camphor; benzimine; an *Aedes* repellent (TMPD); 2-octylthio ethanol; diethyltoluamide; butopyronoxyl; metepa; apholate; tepa; an antifeedant amine (PTA); methyl eugenol; octachlorodipropyl ether; bisazir; engine oil; synergistic amine (ENT8184); sulfoxide; piperonyl cyclonene; dietholate; piperonyl butoxide; sesamin; sesamex; bucarpolate; propylisome; methylneodecanamide; sulcofuron-sodium;

the insect growth regulator insecticide is a chitin synthesis inhibitor insecticide, an ecdysteroid insecticide or a juvenile hormone insecticide;

the amide insecticide is selected from: chlorantraniliprole, flubendiamide, cyantraniliprole, tetraniliprole, tetrachlorantraniliprole, cyhalodiamide, thiotraniliprole, flursulamid, fenoxacrim, tolfenpyrad, cyclaniliprole, ryania, broflanilide, cyproflanilide, fluazaindolizine, fluchlordiniliprole, tetrachlorantraniliprole, flubendiamide, cyanide benzamide, dimpropyridaz;

the nicotinoid insecticide is selected from: acetamiprid, thiamethoxam, clothianidin, thiacloprid, imidacloprid, nitenpyram, dinotefuran, cycloxaprid, guadipyr, flupyradifurone, sulfoxaflor, imidaclothiz, paichongding, nicotine,

anabasine, nornicotine, flupyrimin;

the insect feeding-blocking insecticide is selected from: pymetrozine, flonicamid, afidopyropen, pyrifluquinazon, triflumezopyrim, fluhexafon, benzpyrimoxan, tyclopyrazoflor;

the fungicide is selected from: one or two of a methoxyacrylate fungicide, a triazole fungicide, a pyrrole fungicide, an amide fungicide, a benzimidazole fungicide, a substituted benzene fungicide, a dithiocarbamate fungicide, an organic sulfur fungicide, an oxazole fungicide;

the acaricide is selected from: pyridaben, cyetpyrafen, fluacrypyrim, fenpyroximate, tebufenpyrad, cyenopyrafen, etoxazole, hexythiazox, clofentezine, propargite, bifenazate, cyflumetofen, azocyclotin, cyhexatin, fenbutatin oxide, phenproxide, benzoximate, triarathene, dofenapyn, halfenprox, chloropropylate, dienochlor, flubenzimine, tazimcarb, phostin, dicofol, tetradifon, chlorfenethol, tetrasul, tetranactin, medimeform, aramite, chlorfenson, chlorfensulphide, genite, micro/nano-fiber aerogel (MNFA), cycloprate, amidoflumet, fenazaflor, clenpirin, thioquinox, fenazaquin, binapacryl, fluenetil, dinocton, chlorbenside, cymiazole, morphothion, pyriminostrobin, pyrimidifen, acequinocyl, chinomethionat, chloromebuform, malonoben, bromocyclen, azobenzene, tetraethyl pyrophosphate (TEPP), dinosulfon, bromopropylate, dinopenton, dinoterbon, prothidathion, dinex, dinobuton, chlorobenzilate, benoxafos, endosulfan, sulfur, dinitro-o-cresol (DNOC), semiamitraz, amitraz, chlordimeform, formetanate, Flipper (a biological acaricide containing C7-C20 fatty acids), pyflubumide, acynonapyr or trifluenfuronate; and

the other insecticides and inorganic substances are selected from: indoxacarb, enantiomerically pure indoxacarb, metaflumizone, fluxametamide, isocycloseram; sulfluramid; nifluridide; plifenate; vaniliprole; pyriprole; pyrafluprole; nicofluprole; chlorfenapyr; chlorfenapyr; pyridalyl; pyridalyl; dicloromezotiaz; fipronil; flufiprole; dicyclanil; ethiprole; acetoprole; thiapronil; bromoxynil; dicresyl; dilor; flupyroxystrobin; rafoxanide; nithiazine; flufenerim; sulfoxime; thiofluoximate; bromfenvinfos; mirex; miechongzole; chloromethiuron; Fenpyroximate; oxazosulfyl; kelevan; closantel; mercurous chloride; potassium thiocyanate; borax; boric acid; calcium arsenate; lead arsenate; potassium arsenite; barium hexafluorosilicate; chlordecone; isobenzan; methyl $\alpha$-eleostearate (bollex); isodrin; endrin, indazapyroxamet, fenmezoditiaz, anisiflupurin, tigolaner, sarolaner, fluralaner, afoxolaner, flupentiofenox;

**3.** The binary insecticide composition according to claim 2, wherein the halogenated hydrocarbon nematicide is selected from: 1,3-dichloropropene, dibromochloropropane (DBCP), ethylene dibromide (EDB), tetrachlorothiophene, 1,2-dichloropropane, chloropicrin, dichloroisopropyl ether (DCIP), bromomethane, methyliodide; the organic sulfur nematicide is selected from: carbon disulfide, sulfuryl fluoride, carbonyl sulfide (COS), methyl isothiocyanate, dimethyl disulfide, diallyl disulfide, methylene dithiocyanate, sodium tetrathiocarbonate, dazomet, metham-sodium; the other fumigant nematicides are selected from: xylenols, calcium cyanamide, cyanogen, sodium azide, furfural, acrolein, formaldehyde, propylene oxide; the organophosphate nematicide is selected from: phosphamidon, heterophos, profenofos, phosphocarb, fensulfothion, thionazin, isazofos, dichlofenthion, famphur, dimethoate, terbufos, phorate, cadusafos, ethoprophos, diamidafos, fenamiphos, isofenphos methyl, isofenphos, isamidofos, fosthietan, fosthiazate, imicyafos, mecarphon; the carbamate nematicide is selected from: alanycarb, aldicarb, aldoxycarb, oxamyl, tirpate, thiodicarb, carbofuran, cloethocarb, benomyl, tirpate; the arylformamide nematicide is selected from: fluopyram, fluopimomide, pydiflumetofen, cyclobutrifluram; the trifluorobutene nematicide is selected from: trifluenfuronate (LH517), fluensulfone, trifluenfuronate; the oxadiazole sulfide nematicide is selected from: tioxazafen, oxathiapiprolin; the fused-ring nematicide is selected from: fluazaindolizine, acibenzolar-S-methyl, benclothiaz; the other non-fumigant nematicides are selected from: iprodione, carvacrol, iprodione, an oligosaccharin, calcium cyanamide, allyl isothiocyanate, fluensulfone; and the microbial nematicide is selected from: *Aspergullusniger, Paecilomyces lilacinus* (Thom.) Samson, *Verticillium chlamydosporium, Rhodovulum sulfidophilum* HNI-*1, Pasteuriapennetrans, Bacillus cereus, Bacillusfirmus, Bacillus nematocida, Pseudomonasfluorescens, Trichodermaharzianum, Trichodermaviride,* HAN055;

the microorganism in the preparation containing the microorganism is *Bacillus thuringiensis, Bacillus thuringiensis* subsp. *israelensis, Bacillus methylotrophicus* 9912, *Bacillus methylotrophicus* LW-6, *Bacillus marinus, Bacillus sphaericus, Bacillus subtilis, Bacillus popilliae, Paenibacillus polymyxa, Brevibacillus laterosporus* A60, *Empedobacter brevis, Bacillus licheniformis, Bacillus amyloliquefaciens* B1619, *Bacillus amyloliquefaciens* B7900, *Bacillus amyloliquefaciens* PQ21, *Bacillus amyloliquefaciens* LX-11, *Bacillus amyloliquefaciens* AT-332, *Rhodopseudomonas palustris* PSR-S, *Bacillus thuringiensis* G033A, *Metarhizium, Beauveria, Metarhizium anisopliae, Conidiobolus, Beauveria bassiana* or *Bacillus thuringiensis* var. *galleriae*; the nuclear polyhedrosis virus in the preparation containing the nuclear polyhedrosis virus is *Autographa californica* nucleopolyhedrovirus, *Mamestra brassicae* nucleopolyhedrovirus, *Spodoptera exigua* Hübner nucleopolyhedrovirus, *Spodoptera litura* nucleopolyhedrovirus, *Helicoverpa armigera* nucleopolyhedrovirus, *Ectropis obliqua* nucleopolyhedrovirus or *Setora postornata* nucleopolyhedrovirus; the cytoplasmic polyhedrosis virus in the preparation

containing the cytoplasmic polyhedrosis virus is *Dendrolimus* cytoplasmic polyhedrosis virus; and the granulosis virus in the preparation containing the granulosis virus is *Pieris brassicae* granulovirus, *Pieris rapae* granulovirus, *Cydia pomonella* granulovirus, *Pieris rapae* granulovirus, *Plutella xylostella* granulovirus, *Adoxophyes honmai* granulovirus, *Mythimna separate* granulovirus or *Cnaphalocrocis medinalis* granulovirus; and
the chitin synthesis inhibitor insecticide is selected from: buprofezin, diflubenzuron, hexaflumuron, lufenuron, flufenoxuron, triflumuron, chlorfluazuron, teflubenzuron, dichlorbenzuron, fluazuron, noviflumuron, dichlorofenuron; flucofuron; flucycloxuron, bistrifluron, chlorbenzuron, penfluron, novaluron, PH6042, L-1215, L-7063, diafenthiuron, chloromethiuron, diflovidazin, cyromazine; the ecdysteroid insecticide is: methoxyfenozide, fufenozide, furantebufenozide, halofenozide, chromafenozide, tebufenozide, RH-5849, flometoquin, protrifenbute; and the juvenile hormone insecticide is selected from: pyriproxyfen, hydroprene, kinoprene, methoprene, triprene, R-20458, epofenonane, JH-286, diofenolan, anthraquinone, precocene I, precocene II, precocene III, juvenile hormone I, juvenile hormone II, juvenile hormone III.

**4.** The binary insecticide composition according to any one of claims 1-3, wherein the active ingredient A in the composition is selected from the compound I-72, and the active ingredient B is selected from monosultap, bisultap or cartap; and the ratio of the parts by weight of the two active ingredients is 50:1-1:100.

**5.** The binary insecticide composition according to any one of claims 1-3, wherein the active ingredient A is selected from the compound I-72, and the active ingredient B is selected from abamectin, spinetoram, spinosad or emamectin benzoate, chlorpyrifos, triazophos, acephate, phoxim, diazinon, malathion, spirodiclofen, spirotetramat, spiromesifen, spiropidion, spirobudifen, spidoxamat, a pyrethroid insecticide, an amide insecticide, a nicotinoid insecticide, an insect feeding-blocking insecticide, an insect growth regulator insecticide, a plant growth regulator, an insect attractant, a repellent or other insecticides and inorganic substances, an acaricide, a fungicide; the fungicide comprises azoxystrobin, pyraoxystrobin, pyrametostrobin, enestroburin, SYP-1620, pyraclostrobin, coumoxystrobin, triadimefon, difenoconazole, tebuconazole, hexaconazole, ipconazole, epoxiconazole, fludioxonil, metalaxyl, metalaxyl-M, silthiofam, carboxin, fluopicolide, prochloraz, carbendazim, pyrisoxazole, hymexazol, thiram, mancozeb, a copper preparation, a lime sulfur mixture; and the ratio of the parts by weight of the two active ingredients is 50:1-1:50.

**6.** The binary insecticide composition according to any one of claims 1-3, wherein the ingredient A in the composition is selected from the compound I-72; the ingredient B is selected from carbosulfan, carbaryl, isoprocarb, fenobucarb, *Bacillus thuringiensis,* matrine, d-limonene, rotenone, mineral oil, azadirachtin, *Metarhizium, Beauveria bassiana,* an extract of *Veratrum nigrum rhizome,* osthole, a preparation containing *Autographa californica* nucleopolyhedrovirus, a preparation containing *Mamestra brassicae* nucleopolyhedrovirus; and the ratio of the parts by weight of the two active ingredients A and B is 1:60-60:1.

**7.** The binary insecticide composition according to any one of claims 1-3, wherein the ingredient A in the composition is selected from the compound I-72; and the active ingredient B is one or two of SYP-1620, azoxystrobin, pyraoxystrobin, fludioxonil, tebuconazole, difenoconazole, metalaxyl, metalaxyl-M, pyraclostrobin, coumoxystrobin, and the ratio of the parts by weight of the two active ingredients A and B is 40:1-1:20.

**8.** The binary insecticide composition according to any one of claims 1-3, wherein the active ingredient A is selected from the compound I-72, and the active ingredient B is selected from indoxacarb, enantiomerically pure indoxacarb, metaflumizone, abamectin, spinetoram, spinosad, emamectin benzoate, chlorpyrifos, triazophos, acephate, phoxim, diazinon, malathion, carbosulfan, spirodiclofen, spirotetramat, spiromesifen, spiropidion, spirobudifen, spidoxamat, fosthiazate, fluopyram, chloropicrin, dazomet, an oligosaccharin, *Paecilomyces lilacinus* (Thom.) Samson, azadirachtin, bifenthrin; gamma-cyhalothrin; metofluthrin; fenpropathrin; methothrin; beta-cypermethrin; lambda-cyhalothrin; cypermethrin; beta-cyfluthrin; cyfluthrin; tetramethrin; permethrin; etofenprox; deltamethrin; phenothrin; cyphenothrin; resmethrin; theta-cypermethrin; rich-d-t-tetramethrin; acrinathrin; silafluofen; flumethrin; pyrethrin; empenthrin; meperfluthrin; zeta-cypermethrin; chlorempenthrin; fenvalerate; esfenvalerate; prallethrin; imiprothrin; bioallethrin; S-bioallethrin; cismethrin; alpha-cypermethrin; transfluthrin; dimefluthrin; tetramethylfluthrin; allethrin; d-tetramethrin; d-trans-tetramethrin; chloroprallethrin; cis-fenvalerate, cyhalothrin, paclobutrazol; brassinolide; 14-hydroxybrassinosteroid; gibberellic acid; ethephon; S-abscisic acid; chitosan; disparlure; gossyplure; muscalure; camphor; engine oil; fluxametamide; isocycloseram; chlorfenapyr; pyridalyl; fipronil, buprofezin, diflubenzuron, hexaflumuron, lufenuron, flufenoxuron, triflumuron, chlorfluazuron, chlorbenzuron, diafenthiuron, diflovidazin, cyromazine, methoxyfenozide, fufenozide, chromafenozide, tebufenozide, RH-5849, pyriproxyfen, methoprene, chlorantraniliprole, flubendiamide, cyantraniliprole, tetraniliprole, tetrachlorantraniliprole, cyhalodiamide, thiotraniliprole, flursulamid, fenoxacrim, tolfenpyrad, cyclaniliprole, ryania, broflanilide, cyproflanilide, fluazaindolizine, fluchlordiniliprole, tetrachlorantraniliprole, flubendiamide, cyanide benzamide, dimpropyridaz, acetamiprid, thiamethoxam, clothianidin, thiacloprid, imidacloprid, nitenpyram, dinotefuran, cycloxaprid, guadipyr, flupyradifurone, sulfoxaflor, imidaclothiz, paichongding, nicotine, anabasine, nornicotine, flupyrimin, pymetrozine, flonicamid, afidopyropen, pyrifluquinazon, triflumezopyrim, fluhexafon, benzpyrimoxan, tyclopyrazoflor, pyridaben, cyetpyrafen, fluacrypyrim, fenpyroximate, tebufenpyrad, cyenopyrafen, etoxazole, hexythiazox, clofentezine, propargite, bifenazate, cyflumetofen, azocyclotin, pyriminostrobin, pyrimidifen, acequinocyl, bromopropylate, pyflubumide, acynonapyr, trifluenfuronate; and the ratio of the parts by weight of the two active ingredients is 20:1-1:20.

**9.** The binary insecticide composition according to any one of claims 1-3, wherein the active ingredient A is selected from the compound I-72, and the active ingredient B is selected from indoxacarb, enantiomerically pure indoxacarb, metaflumizone, abamectin, spinetoram, spinosad, emamectin benzoate, chlorpyrifos, triazophos, acephate, phoxim, diazinon, malathion, spirodiclofen, spirotetramat, spiromesifen, spiropidion, spirobudifen, fosthiazate, fluopyram, chloropicrin, dazomet, an oligosaccharin, *Paecilomyces lilacinus* (Thom.) Samson, matrine, d-limonene, rotenone, bifenthrin; lambda-cyhalothrin; fenpropathrin; beta-cypermethrin; beta-cyfluthrin; etofenprox; fenvalerate; deltamethrin or pyrethrin, buprofezin; hexaflumuron; lufenuron; methoxyfenozide; cyromazine, chlorantraniliprole, flubendiamide, cyantraniliprole, tetraniliprole, tetrachlorantraniliprole, tolfenpyrad, acetamiprid, clothianidin, imidacloprid, thiamethoxam, nitenpyram, dinotefuran, thiacloprid, sulfoxaflor, nicotine, pymetrozine, flonicamid, B3 afidopyropen, B5 pyrifluquinazon, triflumezopyrim B6, pyridaben, cyetpyrafen; and the ratio of the parts by weight of the two active ingredients is 10:1-1:10.

**10.** Use of the binary insecticide composition according to claim 1, wherein the binary insecticide composition is capable of being used for controlling pests and mites on agricultural, forestry, fruit, vegetable and tea crops and the like crops.

**11.** The use of the binary insecticide composition according to claim 10, wherein the composition is applied at an effective dose to pests to be controlled or a growth medium thereof.

**INTERNATIONAL SEARCH REPORT**

International application No. **PCT/CN2023/128516**

**A. CLASSIFICATION OF SUBJECT MATTER**

A01N43/30(2006.01)i; A01P7/02(2006.01)i; A01P7/04(2006.01)i

According to International Patent Classification (IPC) or to both national classification and IPC

**B. FIELDS SEARCHED**

Minimum documentation searched (classification system followed by classification symbols)

IPC:A01N,A01P

Documentation searched other than minimum documentation to the extent that such documents are included in the fields searched

Electronic data base consulted during the international search (name of data base and, where practicable, search terms used)

CNTXT, CNKI, STN: 胡椒酸, piperic acid

**C. DOCUMENTS CONSIDERED TO BE RELEVANT**

| Category* | Citation of document, with indication, where appropriate, of the relevant passages | Relevant to claim No. |
|---|---|---|
| X | CN 112457288 A (SHENYANG SINOCHEM AGROCHEMICALS R&D CO., LTD.) 09 March 2021 (2021-03-09) claim 1, and description, paragraphs 0097, 0102, 0108-0124, and 0191-0204 | 1-3, 5-6, 8-11 |
| A | CN 101367748 A (MITSUI CHEMICALS INC.) 18 February 2009 (2009-02-18) description, page 54, compound 160, and pages 191-193 and 195-197 | 1-11 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 January 2024** | **04 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/128516**

| Patent document cited in search report | | | Publication date (day/month/year) | Patent family member(s) | | | Publication date (day/month/year) |
|---|---|---|---|---|---|---|---|
| CN | 112457288 | A | 09 March 2021 | CN | 112457288 | B | 14 December 2021 |
| CN | 101367748 | A | 18 February 2009 | MY | 145140 | A | 30 December 2011 |
| | | | | IL | 211894 | A0 | 31 May 2011 |
| | | | | CA | 2554437 | A1 | 11 August 2005 |
| | | | | CA | 2554437 | C | 21 June 2011 |
| | | | | US | 2023373947 | A1 | 23 November 2023 |
| | | | | KR | 20080052692 | A | 11 June 2008 |
| | | | | KR | 100904360 | B1 | 23 June 2009 |
| | | | | US | 2014206727 | A1 | 24 July 2014 |
| | | | | US | 9185912 | B2 | 17 November 2015 |
| | | | | JP | 2010209073 | A | 24 September 2010 |
| | | | | JP | 5444077 | B2 | 19 March 2014 |
| | | | | EP | 1714958 | A1 | 25 October 2006 |
| | | | | EP | 1714958 | A4 | 24 October 2007 |
| | | | | EP | 1714958 | B1 | 21 December 2016 |
| | | | | EP | 1714958 | B9 | 31 May 2017 |
| | | | | AU | 2004315003 | A1 | 11 August 2005 |
| | | | | AU | 2004315003 | B2 | 17 November 2011 |
| | | | | ES | 2619203 | T3 | 23 June 2017 |
| | | | | ES | 2619203 | T9 | 11 October 2017 |
| | | | | MXPA | 06008526 | A | 01 November 2006 |
| | | | | MX | 301666 | B | 25 July 2012 |
| | | | | US | 2016002198 | A1 | 07 January 2016 |
| | | | | US | 9920026 | B2 | 20 March 2018 |
| | | | | US | 2019382366 | A1 | 19 December 2019 |
| | | | | US | 10995081 | B2 | 04 May 2021 |
| | | | | US | 2018134681 | A1 | 17 May 2018 |
| | | | | US | 10435385 | B2 | 08 October 2019 |
| | | | | AR | 047456 | A1 | 18 January 2006 |
| | | | | IN | 42DE2006 | A | 13 July 2007 |
| | | | | IN | 240644 | B | 28 May 2010 |
| | | | | BR | 122015015718 | B1 | 10 May 2016 |
| | | | | US | 2014031370 | A1 | 30 January 2014 |
| | | | | US | 8710234 | B2 | 29 April 2014 |
| | | | | US | 2021230135 | A1 | 29 July 2021 |
| | | | | US | 11760742 | B2 | 19 September 2023 |
| | | | | IN | DE4BN2010 | A | 30 July 2010 |
| | | | | US | 2012225891 | A1 | 06 September 2012 |
| | | | | US | 8563736 | B2 | 22 October 2013 |
| | | | | TW | 200530156 | A | 16 September 2005 |
| | | | | TWI | 365866 | B | 11 June 2012 |
| | | | | IL | 176872 | A0 | 31 October 2006 |
| | | | | IL | 176872 | A | 30 November 2015 |
| | | | | EG | 26976 | A | 10 February 2015 |
| | | | | BRPI | 0418471 | A | 05 June 2007 |
| | | | | BRPI | 0418471 | B1 | 01 March 2016 |
| | | | | NZ | 548793 | A | 24 December 2009 |
| | | | | JPWO | 2005073165 | A1 | 10 January 2008 |
| | | | | JP | 4673748 | B2 | 20 April 2011 |
| | | | | BR | 122015027139 | B1 | 10 May 2016 |

Form PCT/ISA/210 (patent family annex) (July 2022)

**INTERNATIONAL SEARCH REPORT**
**Information on patent family members**

International application No.
**PCT/CN2023/128516**

| Patent document cited in search report | Publication date (day/month/year) | Patent family member(s) | | | Publication date (day/month/year) |
|---|---|---|---|---|---|
| | | WO | 2005073165 | A1 | 11 August 2005 |
| | | DK | 1714958 | T3 | 20 March 2017 |
| | | KR | 20060110001 | A | 23 October 2006 |
| | | KR | 100857312 | B1 | 05 September 2008 |
| | | SG | 124199 | A1 | 29 September 2006 |
| | | US | 2007275980 | A1 | 29 November 2007 |
| | | US | 8168825 | B2 | 01 May 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112457288
- CN 112457288 A